(19) Europäisches Patentamt
European Patent Office
Office européen des brevets

(11) **EP 4 542 479 A2**

(12) **EUROPEAN PATENT APPLICATION**

(43) Date of publication:
23.04.2025 Bulletin 2025/17

(21) Application number: 24207509.1

(22) Date of filing: 18.10.2024

(51) International Patent Classification (IPC):
$G06Q\ 50/06^{(2024.01)}$ $H02J\ 3/32^{(2006.01)}$

(52) Cooperative Patent Classification (CPC):
H02J 7/007188; G06Q 50/06; H02J 3/32;
H02J 2203/10; H02J 2310/64

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.10.2023 US 202363591812 P
17.06.2024 US 202463660641 P

(71) Applicant: Solaredge Technologies Ltd.
Herzeliya 4673335 (IL)

(72) Inventors:
• SHATON, Avishai
4673335 Herzeliya (IL)
• WEISSLER, Yonatan
4673335 Herzeliya (IL)
• KOJUHARSKI, Tihomir
4673335 Herzeliya (IL)
• TAHA, Mohammad
4673335 Herzeliya (IL)
• SABAG, Shai
4673335 Herzeliya (IL)

(74) Representative: V.O.
P.O. Box 87930
2508 DH Den Haag (NL)

(54) **ENERGY MANAGEMENT OF STORAGE DEVICES AND LOAD DEVICES**

(57) Aspects of the disclosure may relate to a system and method for increasing the cost savings and/or reducing amount of money spent by a client based on the charging and discharging of energy storage device(s) using a two-tier process. The first tier may include finding a storage operational mode or policy by optimizing an objective function, according to which the battery of the energy storage device(s) may be managed in a given timestep (e.g., the next 5 minutes). The second tier may include controlling the charging or discharging of the battery according to the previously determined policy.

Fig. 1A

EP 4 542 479 A2

**Description**

CROSS-REFERENCE TO RELATED APPLICATION

This disclosure claims priority to U.S. Patent Application No. 63/591,812, filed October 20, 2023, and is incorporated herein by reference in its entirety. Additionally, this disclosure claims priority to U.S. Patent Application No. 63/660,641, filed June 17, 2024, and is incorporated herein by reference in its entirety.

FIELD OF THE DISCLOSURE

The disclosure relates generally to managing load devices in general and storage devices in particular in a power system that may include photovoltaic panels.

BACKGROUND OF THE DISCLOSURE

A power system may include a power source or sources (e.g., a photovoltaic power source, a generator, and wind turbines, to name a few), a storage device or devices (e.g., a battery, flywheel, fuel cells, supercapacitors, a capacitor array), and loads (e.g., machines, air conditioner, heater, to name a few), as well as various devices such as power converters. The power system may be connected to a power grid. In some cases, the power generated by the power source might not be sufficient for the power demand by the load. In such cases, the power system may discharge the energy storage device, draw (e.g., import) power from the grid, or both. When drawing power from the grid, a power company may charge the owner/user of the power system. In some cases, the power generated by the power source may exceed the power demand by the load. In such cases, the power system may provide (e.g., export) power to the grid, for which the power company may compensate the owner/user of the power system.

BRIEF SUMMARY OF THE DISCLOSURE

The following presents a simplified summary of the disclosure in order to provide a basic understanding of some aspects of the disclosure. This summary is not an extensive overview of the disclosure. It is not intended to identify key or critical elements of the disclosure or to delineate the scope of the disclosure. The following summary merely presents some concepts of the disclosure in a simplified form as a prelude to the more detailed description provided below.

An aspect of the disclosure may relate to a system and method for increasing the cost savings and/or reducing the amount of money spent by a client based on the charging and discharging of energy storage device(s) using, for example, a two-tier process. The first tier may include finding a policy by solving an objective function (e.g., a cost function), according to which the battery of the energy storage device(s) may be managed in a given timestep (e.g., in the next 5 minutes). The second tier may include controlling the charging or discharging of the battery according to the previously determined policy. Using a two-tier process may have the advantage of determining an amount of energy to alter (e.g., to charge or discharge) the battery in order to increase the overall cost savings of a client, or reduce the amount of money spent by the client, to increase revenue for the client, and/or other similar considerations.

In some cases, the first tier may be computationally expensive and may be carried out on a remote server (e.g., a cloud-based server) that may have greater computing capacity. The second tier may be carried out by a local controller. For example, the policy may be that which decreases cost, for example, U.S. Dollars (USD) and/or increases revenue for a client. However, the policy may be chosen based on other factors without departing from the scope of the disclosure. In some cases, the server may determine the policy for a timestep and transmit the policy to a local controller. The local controller may decide, based on the received policy, if to charge or discharge the battery and the amount of energy by which to charge or discharge the battery.

BRIEF DESCRIPTION OF THE DRAWINGS

A more complete understanding of the present disclosure and the advantages thereof may be acquired by referring to the following description in consideration of the accompanying drawings, in which like reference numbers indicate like features, and wherein:

Figure 1A shows a power system according to the disclosure herein.

Figure 1B shows an example of a system according to the disclosure herein.

Figure 1C shows an example of a user interface according to the disclosure herein.

Figure 2 shows a system, which may include a plurality of power systems according to the disclosure herein.

Figure 3 shows a table including examples of storage operational modes defined by corresponding charge modes and discharge modes, according to the disclosure herein.

Figure 4A shows a graph of power production prediction and load consumption prediction, according to the disclosure herein.

Figure 4B shows a graph of import price, according to the disclosure herein.

Figures 4C shows a graph of export price, according to the disclosure herein.

Figure 5A shows a graph of an example probabilistic distribution of power produced by a power source, according to the disclosure herein.

Figure 5B shows a graph of an example probabilistic distribution of power consumption by a load, according to the disclosure herein.

Figure 6A shows a method for determining a storage operational mode, according to the disclosure herein.

Figure 6B shows a method for determining a framework for an optimization process, according to the disclosure herein.

Figure 7A shows a method of altering energy of an energy storage device using a storage operational mode, according to the disclosure herein.

Figure 7B shows a method of altering energy of an energy storage device using the maximize export storage operational mode or the minimize import storage operational mode, according to the disclosure herein.

Figure 7C shows a method of altering energy of an energy storage device using the maximum self-consumption storage operational mode, according to the disclosure herein.

Figure 8A shows a graph of a first electric vehicle charging scenarios, according to the disclosure herein.

Figure 8B show a graph of a second electric vehicle charging scenario, according to the disclosure herein.

Figure 8C shows a graph of a third electric vehicle charging scenario, according to the disclosure herein.

Figure 9 shows a graph of grid power draw levels, relating to power drawn (e.g., received) by a load or loads from a power grid, according to the disclosure herein.

Figure 10A shows an example of a controller in a power system, according to the disclosure herein.

Figure 10B shows an example of an energy storage controller module using a PID control model, according to the disclosure herein.

Figure 10C shows an example of an energy storage controller module using a Kalman filter control model, according to the disclosure herein.

Figure 10D shows an example of an energy storage controller module using an ARIMA control model, according to the disclosure herein.

Figure 10E shows an example of an energy storage control module and a prediction of grid power draw levels, according to the disclosure herein.

Figure 10F shows an energy storage control module and a derivative of grid power draw measurements, according to the disclosure herein.

Figure 11A shows a graph of grid power draw levels relating to power drawn by a load or loads from a power grid, according to the disclosure herein.

Figure 11B shows a snapshot in time during the operation of a power system, according to the disclosure herein.

Figure 11C shows a method for charging or discharging an energy storage device, according to the disclosure herein.

Figure 11D shows a method for evaluating a discharge threshold and determining a modification to the discharge threshold, according to the disclosure herein.

Figure 11E shows a method for modifying to the discharge threshold, according to the disclosure herein.

Figure 11F shows a graph of predicted grid power draw, according to the disclosure herein.

Figure 11G shows a graph of a prediction-threshold difference and a maximum difference, according to the disclosure herein.

Figure 11H shows examples of predicted energy differential and intermediate predicted storage levels, according to the disclosure herein.

Figure 12A shows a prediction-threshold difference, according to the disclosure herein.

Figure 12B shows a graph of power vs time relating to power that may be produced by a generator, according to the disclosure herein.

Figure 12C shows a graph of power vs time relating to power that may be consumed by a load such as a heater, according to the disclosure herein.

Figure 12D shows a combined prediction-threshold difference incorporating power produced by a power generator and power consumed by a load, according to the disclosure herein.

Figure 13 shows an example of a predicted state of energy of a fuel power generator, which may be determined based on a prediction-threshold difference, according to the disclosure herein.

Figure 14A shows an example of a system for controlling an energy storage device using an energy storage control module, according to the disclosure herein.

Figure 14B shows an example of a system for controlling an energy storage device using an energy storage control module, according to the disclosure herein.

DETAILED DESCRIPTION OF THE DISCLOSURE

In the following description of the various embodiments, reference is made to the accompanying drawings, which form a part hereof, and in which is shown by way of illustration various embodiments in which the disclosure may be practiced. It is to be understood that other embodiments may be utilized and structural and functional modifications may be made without departing from the scope of the present disclosure. In the disclosure herein, the term "and/or" should be interpreted as either one, some, or all of the pertinent alternatives. For example, the phrase "A and/or B" should be interpreted as either A, or B, or both A and B. The phrase "A, C, and/or B" should be interpreted as either A, B, or C, or any combination of A, B, and C.

Aspects of the disclosure herein may relate to systems and methods for determining an operational mode for a device in a power system (e.g., a storage device or a load device) using an optimization process that optimizes an objective function. Optimizing an objective function may relate to maximizing or minimizing the objective function either deterministically, or statistically (e.g., the objective function is optimized with some probability). The operational mode of the device may define a state of the device for a time-interval, and the amount of energy or power used by the device in each state. For example, in cases in which the device is a storage device, the operational mode may define if the storage device charges or discharges (e.g., the state of the storage device may be "charging" or "discharging"), and the amount of energy or power the storage device charges or discharges. For example, in cases in which the device is a load device, the operational mode may define if the load device is operative ("on") or non-operative ("off") (e.g., the state of the load device may be "on" or "off"), and the amount of energy or power the load device consumes. The objective function may relate to a parameter for optimization. The parameter for optimization may be referred to herein as an "optimization objective". Examples of an optimization objective may be cost (e.g., in USD, Euros, or the like) or energy. The operational mode may be determined for each timestep in a time-period. Thereafter, the power system may control the device to operate based on the determined operational mode of the device. The optimization process may use one or more operational mode variables to represent the operational mode of the device and determine the operational mode by computing values for the one or more operational mode variables that optimize the objective function.

In some cases, optimizing an objective function may require substantial computational resources (e.g., processing power, memory, and the like). In some cases, a local processor or a local controller of the power system might not have the computational resources required to carry out the optimization process. According to the disclosure herein, determining an operational mode for a device, and controlling the device based on the determined operational mode, may utilize a distributed computing scheme, and may include, for example, a two-tier process. For example, in a first tier of the two-tier process, a computer device, which may have the required computational resources (e.g., a server), may determine for a device, using an optimization process, the operational mode that optimizes the objective function. In the second tier of the two-tier process, a local controller of the power system may control the operation of the device (e.g., charge, discharge, amount of energy to charge or discharge), as defined by the determined operational mode and based on the operational characteristics of the device.

According to some aspects of the disclosure herein, a grid may be, interchangeably, considered as a source (e.g., when power is imported from the grid) or a load (e.g., when power is exported to the grid). However, a power company using the grid may also impose constraints on the import or export of power, may provide incentives for importing or exporting power at certain times, and/or for "being on call" to import power from the gird, or export power to the grid. The optimization process described herein may account for these constraints and incentives.

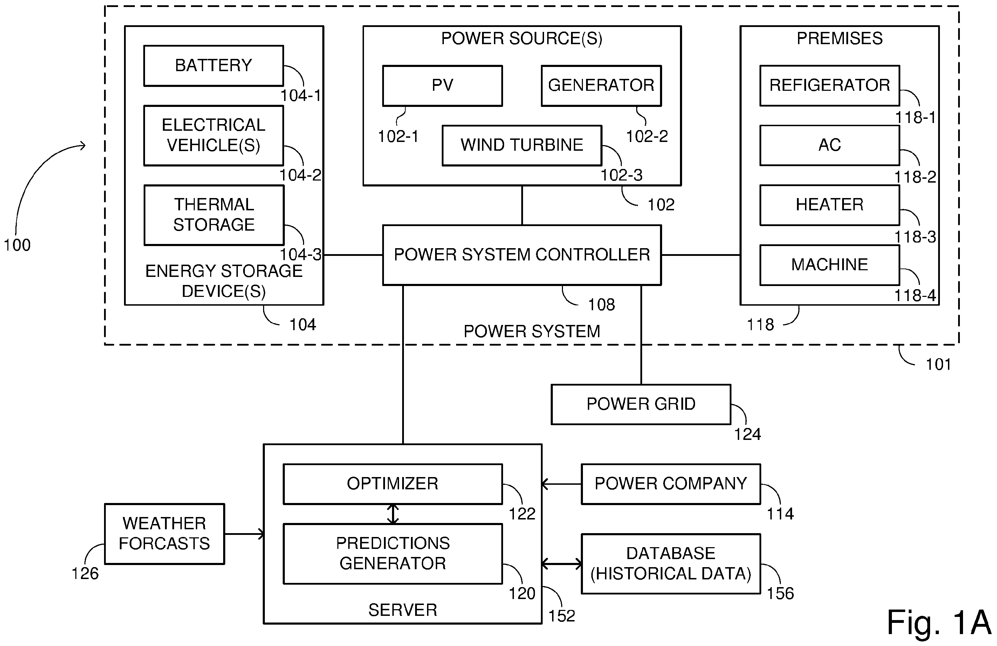

Reference is made to Figures 1A-1C, which shows a system, generally referenced 100, and examples relating to system 100. System 100 may include a power system 101 and a server 152. Power system 101 may include power source(s) 102, an energy storage device(s) 104, a premises 118 (e.g., a house, an office building, a factory, a warehouse, which may also be referred to as a load), and a power system controller 108. Power source(s) 102, and energy storage device(s) 104 (e.g., battery, an electrical vehicle battery, supercapacitors, flywheel, a capacitors array, thermal storage, etc.), and premises 118 may be coupled to power system controller 108. Power system controller 108 may further be coupled to a power grid 124 and to server 152. For example, power source(s) 102 may include, for example, a photovoltaic power source 102-1 ("PV" in FIG. 1A), a generator 102-2 (e.g., a fuel-based generator), or a wind turbine 102-3. Energy storage device(s) 104 may include one or more of a battery 104-1, an electrical vehicle (EV) or Electrical vehicles (EVs) 104-2, and a thermal storage device 104-3. Premises 118 may include one or more load devices, such as a refrigerator 118-1, an air conditioner 118-2, a heater(s) 118-3 (e.g., a water heater), and a machine 118-4 (e.g., a mixer, a cutter, a fan, etc.), which may be controlled by controller 110. For example, controller 110 may control the state of the load device (e.g., "on" or "off") and/or the amount of power used by the load device. It is noted that photovoltaic power source 102-1, generator 102-2, or wind turbine 102-3 are recited herein as examples only. Also, refrigerator 118-1, air conditioner 118-2, heater 118-3, and machine 118-4 are discussed herein as examples only. Other load devices, such as lights, computers, chargers, etc. may be considered as well.

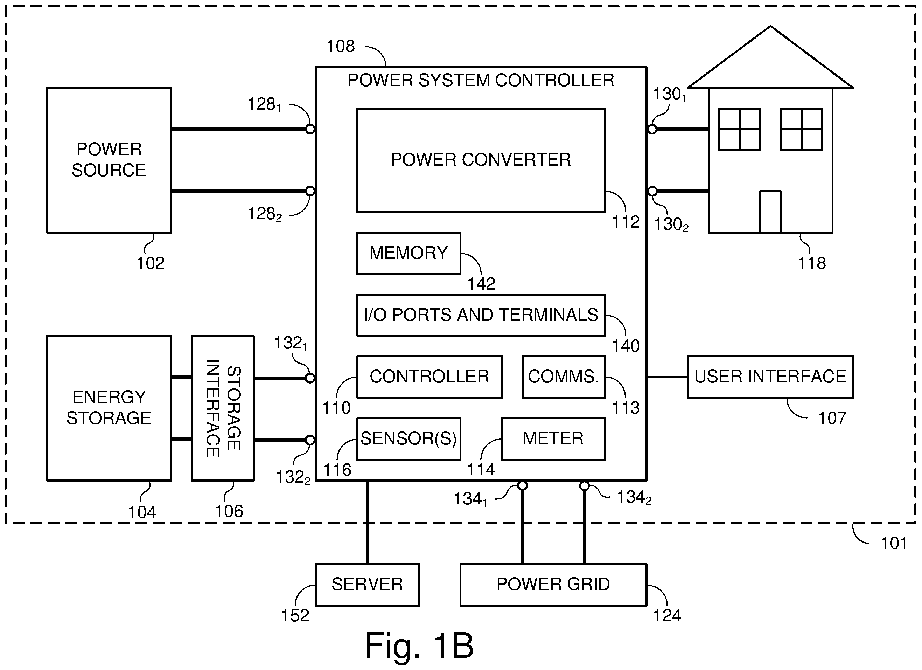

Figure 1B may show an example of power system 101. In the example shown in Figure 1B, the power system controller 108 may include a controller 110, a power converter 112, a communications interface 113 (abbreviated as "comms." in Figure 1B), a meter 114, and sensor(s) 116. Meter 114 may be coupled to power converter 112 and/or power grid 124. Power system controller 108 may be a distributed device, for example, the various modules of power system controller 108 (e.g., controller 110, power converter 112, communications interface 113, meter 114, or sensor(s) 116 may not be within the same casing).

Source side terminals $128_1$ and $128_2$ of power system controller 108 may be coupled to power source(s) 102. Storage interface 106 may be coupled to energy storage device 104 and with storage terminals $132_1$ and $132_2$ of power system controller 108. Load side terminals $130_1$ and $130_2$ of power system controller 108 may be coupled to premises 118. Grid terminals $134_1$ and $134_2$ of power system controller 108 may be coupled to power grid 124. User interface 107 may be coupled to power system controller 108.

Power source(s) 102 may include a renewable power source such as a photovoltaic (PV) power source (e.g., a PV cell, a PV module), or a plurality of photovoltaic power sources generating DC power. A plurality of photovoltaic power sources may be coupled in series to form a string. A plurality of strings may be connected in parallel to form an array of photovoltaic power sources. The photovoltaic power source, or each of the photovoltaic power sources of a plurality of photovoltaic power sources may be coupled to a corresponding DC-to-DC (DC/DC) converter. The DC/DC converter may be configured to harvest power from the corresponding PV power source, for example, according to a maximum power point tracking algorithm. A plurality of DC/DC power converters may be coupled in series to form a series string. Also or alternatively, the photovoltaic power source, or each of the photovoltaic power sources of the plurality of photovoltaic power sources, may be coupled to a corresponding DC-to-AC (DC/AC) inverter (e.g., a micro-inverter). The DC/AC

5

inverter may be configured to extract power from the corresponding PV power source, for example, according to a maximum power point tracking algorithm. The DC/AC inverter may be coupled in series and/or in parallel. Power source(s) 102 may also or alternatively be an AC power source such as, for example, a wind turbine or a plurality of wind turbines generating AC power.

Power converter 112 may include a power inverter. Power converter 112 may include, for example, a half-bridge, full-bridge (H-Bridge), flying capacitor circuit, cascaded-H-bridge, Neutral Point Clamped (NPC), A-NPC, or a T-type NPC inverting circuit employing two or more conversion levels. Controller 110 may control and monitor power converter 112. For example, controller 110 may control and/or monitor power converter 112 by employing a pulse width modulation (PWM) signal. Power converter 112 may operate at a switching frequency between 1KHz - 10MHz. For example, power converter 112 may operate at a switching frequency between 16 KHz - 1 MHz, (e.g., at frequencies which losses may be reduced).

Controller 110 may be partially or fully implemented as one or more computing devices or may include one or more processors, such as, for example, an Application Specific Integrated Circuit (ASIC) controller, Field Programmable Gate Array (FPGA) controller, a microcontroller, or a multipurpose computer. Controller 110 may be a distributed controller, comprising multiple microcontrollers, microcomputers, or cloud servers. The multiple microcontrollers, microcomputers, or cloud servers may be located at the same location (e.g., at the user premises). The multiple microcontrollers, microcomputers, or cloud servers may be located at different locations. For example, some microcontrollers or microcomputers may be located at the user premises while other microcontrollers or microcomputers, and the cloud servers may be located at another location or locations. The multiple microcontrollers, microcomputers, or cloud servers may communicate therebetween using one or more communication protocols, for example, Ethernet, RS-485, Wi-Fi, DSL, various cellular protocols, and data transfer protocols (e.g., TCP-IP, IPX/SPX, DECnet, Ipsec/IP, or UDP/IP). Controller 110 may be configured to control (e.g., provide control signals) storage interface 106 to alter (e.g., charge or discharge) the amount of energy stored in energy storage device 104 based on a storage operational mode. Controller 110 may be configured to control a load device (e.g., AC 118-2, or any other load device in premises 118) based on a device operational mode.

Communications interface 113 may be a receiver, a transmitter, or a transceiver, and may be configured to communicate signals with one or more other transmitters, receivers and/or transceivers, over a medium. Communications interface 113 may use one or more communications protocols (e.g., Ethernet, RS-485, Wi-Fi, DSL, Bluetooth, Zigbee, or various cellular protocols, etc.), and may further use one or more data transfer protocols (e.g., TCP-IP, IPX/SPX, DECnet, IPsec/IP, or UDP/IP, etc.). The communication protocol may define one or more characteristics of the signals and/or of communications using signals, such as a transmission frequency or frequencies, a modulation scheme (e.g., Amplitude shift keying - ASK, Frequency shift keying - FSK, Quadrature Phase Shift Keying - QPSK, Quadrature Amplitude Modulation - QAM, ON OFF keying - OOK, etc.), multiple access scheme (e.g., Time Division Multiple Access - TDMA, Frequency Division Multiple Access - FDMA, Code Division Multiple Access - CDMA, Carrier Sense Multiple Access - CSMA, Aloha, etc.), encoding or decoding schemes (e.g., Non Return to Zero - NRZ, Manchester coding, Block coding, etc.), or any other characteristic. The medium may be a wired or a wireless medium. For example, a wired medium may be a dedicated communications cable (e.g., twisted pair, coaxial cable) or power lines (e.g., the power lines of the power grid connecting power system controller 108 to the power company, or the power lines connecting power source(s) 102 and energy storage device 104 to power system controller 108). For example, communications interface 113 may be configured to transmit signals to user interface 107, or to receive signals from user interface 107 (e.g., if user interface 107 is a tablet computer or a cellphone). Communications interface 113 may be configured to transmit signals to computers and/or servers over a network connection (e.g., connected to the internet), or to receive signals from computers and/or servers over a network connection (e.g., connected to the internet). For example, communications interface 113 may communicate (e.g., transmit or receive signals) with a power services company that power system 101 is connected (e.g., power grid 124).

Sensor(s) 116 may include, for example, one or more voltage sensors, one or more current sensors, one or more temperature sensors, one or more humidity sensors, and/or one or more specific gravity sensors. The one or more voltage sensors may be configured to measure a voltage at corresponding one or more terminals $128_1$, $128_2$, $130_1$, $130_2$, $132_1$, $132_2$, $134_1$, or $134_2$ of power system controller 108. For example, the one or more voltage sensors may measure a corresponding voltage of power source(s) 102, storage interface 106, power grid 124, and/or premises 118. The one or more voltage sensors may include a resistive or capacitive divider, a resistive or capacitive bridge, comparators (e.g., employing operational amplifiers), or the like. The one or more current sensors may be configured to measure a current through corresponding one or more terminals $128_1$, $128_2$, $130_1$, $130_2$, $132_1$, $132_2$, $134_1$, or $134_2$ of power system controller 108 (e.g., as shown in Figure 1B). For example, the one or more current sensors may measure a corresponding current flowing through power source(s) 102, storage interface 106, power grid 124, or premises 118. The one or more current sensors may include, for example, a Current Transformer ("CT") sensor, Hall effect sensor, zero flux sensor, current sense resistor or the like. The one or more temperature sensors may be configured to measure the temperature of at least one of energy storage device 104, power system controller 108, various components thereof, and/or an ambient temperature.

Power system controller 108 may include a memory 142 that may store computer readable instructions as well as data (e.g., measurements from sensor(s) 116 or parameters). Power system controller 108 may include input/output (I/O) ports 140 and be configured to connect modules (e.g., sensor(s) 116, communication interface 113, or other modules of power system 100) to controller 110.

According to some aspects of the disclosure herein, storage interface 106 may include a switch, configured to connect or disconnect energy storage device 104 from power system controller 108. For example, controller 110 may control such a switch. Storage interface 106 may include a bidirectional converter (e.g., a DC-to-DC converter), which may be configured to convert power from energy storage device 104 to power having characteristics (e.g., voltage, current, frequency, harmonic distortion, etc.) drawn by power converter 112. Storage interface 106 may be configured to convert power from power converter 112, or power source(s) 102, to power having characteristics used to store energy in energy storage device 104.

Storage interface 106 may be configured to receive control signals from controller 110 to alter (e.g., charge or discharge) the amount of energy in energy storage device 104. In some instances, storage interface 106 may be configured to convert power from energy storage device 104 to power having characteristics (e.g., voltage, current, frequency, or harmonic distortion, etc.) used by power converter 112, based on various conditions or parameters of power system 101, using various charging and discharging schemes. For example, controller 110 may be configured to control storage interface 106 to charge or discharge energy storage device 104 based on a storage level of the energy storage device 104. For example, the storage level may be the state of energy (SOE) of energy storage device 104, or the state of charge (SOC) of energy storage device 104. Controller 110 may be configured to control storage interface 106 to charge or discharge energy storage device 104 based on power produced by power source(s) 102. Controller 110 may be configured to control storage interface 106 to charge or discharge energy storage device 104 based on the power drawn by premises 118 (e.g., by one or more loads at premises 118). In Figure 1B, storage interface 106 is depicted as separate from power system controller 108 and from energy storage device 104. Additionally or alternatively, storage interface 106 may be integrated with power system controller 108 or with energy storage device 104.

Power source(s) 102 may be configured to generate power (e.g., DC power from PV panels, or generate AC power from wind turbines or a fuel-based generator). Power system controller 108, for example, using power converter 112, may be configured to convert the power generated by power source(s) 102, power from energy storage device 104, to power having characteristics (e.g., voltage, current, frequency, harmonic distortion, etc.) compatible for consumption by premises 118. For example, power converter 112 may be a power inverter configured to generate AC power (e.g., 230 Volts at 50 Hz, 120 Volts at 60 Hz) for premises 118. Power system controller 108 may provide power to premises 118. If premises 118 draws power from power grid 124, power system 101 may be said to "import" power from power grid 124. If power system controller 108 provides power to power grid 124, power system controller 108 may be said to "export" power to power grid 124. Power system 101 may have a limit on the power that power system controller 108 may be able to provide to power grid 124. Such a limit may be referred to herein as an "export limit." For example, an export limit may be imposed by the power services company which may own or operate power grid 124. The export limit may be constant or time-dependent. For example, the export limit may be set via user interface 107, or communications interface 113 may receive a signal relating to the export limit, for example, from the power services company. Meter 114 may be a sensor (e.g., a current sensor) configured to measure and monitor the power drawn from or provided to power grid 124 (e.g., meter 114 may be a bidirectional meter). Power system controller 108 may stop providing power to power grid 124 if the export limit is reached. Power converter 112 may be a bidirectional converter, and may be configured to convert power from power grid 124 to power used for charging energy storage device 104 (e.g., by storage interface 106). Power system 101 may have a limit on the power that power converter 112 is able to draw from power grid 124, referred to herein as "import limit."

Server 152 may be a remote server (e.g., a cloud-based server). In some cases, functions performed by the server 152 may be partially or fully implemented using one or more computing devices or may use one or more processors, such as, for example, an Application Specific Integrated Circuit (ASIC) processor, Field Programmable Gate Array (FPGA) processor, or a multipurpose server. Although server 152 is shown outside of power system 101, an equivalent server may be located at power system 101 without departing from the scope of the disclosure. Server 152 may include a predictions generator 120 and an optimizer 122. Server 152 may receive information from various sources for use by predictions generator 120 and/or optimizer 122. For example, server 152 may receive weather forecasts 126, and predictions generator 120 may use these weather forecasts to generate a prediction of the power that would be generated by a photovoltaic power source. Server 152 may receive historical data from a database 156. For example, server 152 may receive historical data relating to the power consumed by premises 118 (which may also be referred to as load 118, or load devices 118, referring to e.g., one or more of 118-1 through 118-4 of Figure 1A), and predictions generator 120 may use this historical power consumption information to generate a consumption prediction of the power predicted to be consumed by premises 118. Server 152 may receive information from a power company 114. For example, server 152 may receive from power company 114 the cost (e.g., fees or rates) of power imported or exported from power grid 124. Optimizer 122 may use cost information during the optimization process (as may be further elaborated below).

User interface 107 may be configured to receive information from a user, and to present information to a user (e.g., visually or by audio). For example, user interface 107 may be a computer with a screen, a speaker, a keyboard, or mouse, and may execute software, which may be configured to receive information from a user, present information to a user, and/or communicate with power system controller 108. User interface 107 may be a touchscreen attached to power system controller 108. User interface may be a screen and buttons connected to power system controller 108. User interface may be a tablet computer or a cellphone executing an application, and which may communicate with power system controller 108 (e.g., via communications interface 113).

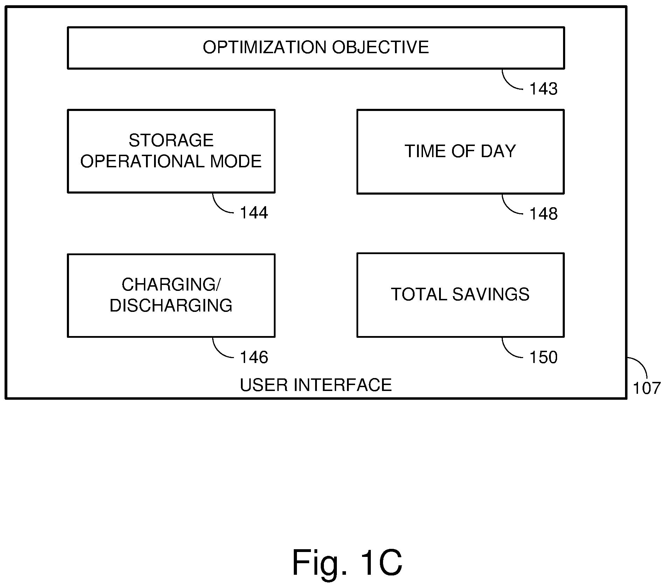

Figure 1C shows an example of user interface 107. User interface 107 may present information to a user, such as an optimization objective selection 143 (e.g., money or energy - as may further elaborated below), a storage operational mode 144, charge/discharge mode 146 of energy storage device 104, a time of day 148, and a total savings 150. The total savings 150 may display how much energy and/or money a client has saved during a given time-period (e.g., a month), for example, based on using aspects of the disclosure described herein. In this manner, there may be the advantage of reducing the cost incurred by a client of the power services company (e.g., reducing the monthly electricity bill).

Using a two-tier process as mentioned above may be suitable to use in systems that may include a plurality of power systems such as power system 101 (Figures 1A-1C). For example, controller 110 may have limited computational resources (e.g., processor speed, memory), and may communicate with server 152, where the computational resources of server 152 may be higher than the computational resources of controller 110. Utilizing a distributed computing environment may be advantageous in distributing computational resources and reducing the use of computational resources by controller 110.

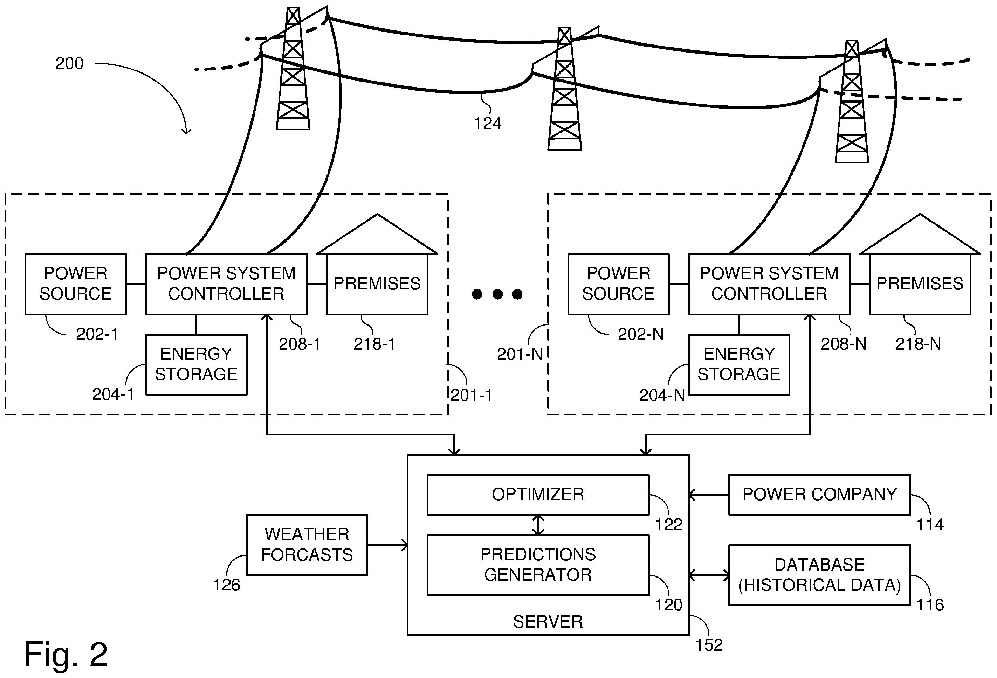

Reference is now made to Figure 2, which shows a system, generally referenced 200, which may include a plurality of power systems 201-1 - 201-N (where power system 201-i refers to any one or more of power systems 201-1 - 201-N). Each of power systems 201-1 - 201-N may be similar to power system 101 described herein above in conjunction with Figures 1A-1C. For the sake of clarity of Figure 2, a power system 201-i of power systems 201-1 - 201-N is shown only with a power source 202-i, a power system controller 208-i, an energy storage device 204-i, and a premises 218-i. Each of power systems 201-1 - 201-N may further be coupled to power grid 124 and to server 152, which may be used during the first tier of the two-tier process (e.g., determine a storage operational mode for power system 201-i). In systems which include a plurality of systems such systems 201-1 - 201-N, server 152 may determine, as part of the first tier of the two-tier process, a storage operational mode for each of power systems 201-1 - 201-N (e.g., simultaneously) using an optimization process (as may be further elaborated below), and transmit the corresponding operational modes to power systems 201-1 - 201-N. Power system controller 208-i (or similarly, power system controller 108 - Figures 1A and 1B) may determine, as part of the second tier of the two-tier process, and based on a determined storage operational mode, if to charge or discharge energy storage 204-i, and the amount of energy to charge or discharge. For example, such an objective function may correspond to cost (e.g., USD or Euros) or to energy.

According to the disclosure herein, power system controller 108 (e.g., using controller 110) may control storage interface 106 to alter (e.g., charge or discharge) the amount of energy in energy storage 104 based on a storage operational mode, and based on various parameters of power system 101 (as may further be elaborated below). According to the disclosure herein, server 152 may determine, using an optimization process, a storage operational mode for energy storage 104 for each timestep in a time-period. A time-period may be in the order of hours or days (e.g., 12 hours, 24 hours, 48 hours, a week, etc). A timestep may be a time interval within the time-period. For example, a timestep may be in the order of minutes or hours (e.g., 1 minute, 5 minutes, 15 minutes 30 minutes, 1 hour, etc), for example, within a time-period. Following is an example relating to storage operational modes that may define if to charge or discharge energy storage 106, and the amount of energy to be charged or discharged for each timestep in a time-period.

In the example that follows, system energy storage device(s) 104 include battery 104-1, power source(s) 102 include PV 102-1, and the operational modes include seven storage operational modes (e.g., 7 policies). These storage operational modes may be "minimize import," "maximize export," "charge excess PV," "charge PV," "charge PV and Grid," "maximize self consumption," and "disable." The "minimize import" operational mode aims to minimize the energy drawn from the grid during the timestep. The "maximize export" operational mode aims to maximize the energy provided to the grid during the timestep. The "charge excess PV" operational mode aims to use, during the timestep, PV energy from PV power source 102-1 that might not be used (e.g., either by load 118, or exported to grid 124, or both), to charge battery 104-1. The "charge PV" operational mode aims to use, during the timestep, the energy from PV power source 102-1 to charge battery 104-1. The "charge PV and grid" operational mode aims to charge, during the timestep, battery 104-1 with energy from both PV 102-1 and grid 124. In this operational mode, battery 104-1 may be charged as quickly as possible. The "maximize self consumption operational mode" aims to charge battery 104-1, during the timestep, only with excess energy (energy not used by load 118), and discharge battery 104-1 to provide the energy need for load 118. In the "disable" operational mode, the battery will neither be charged nor discharged during the timestep.

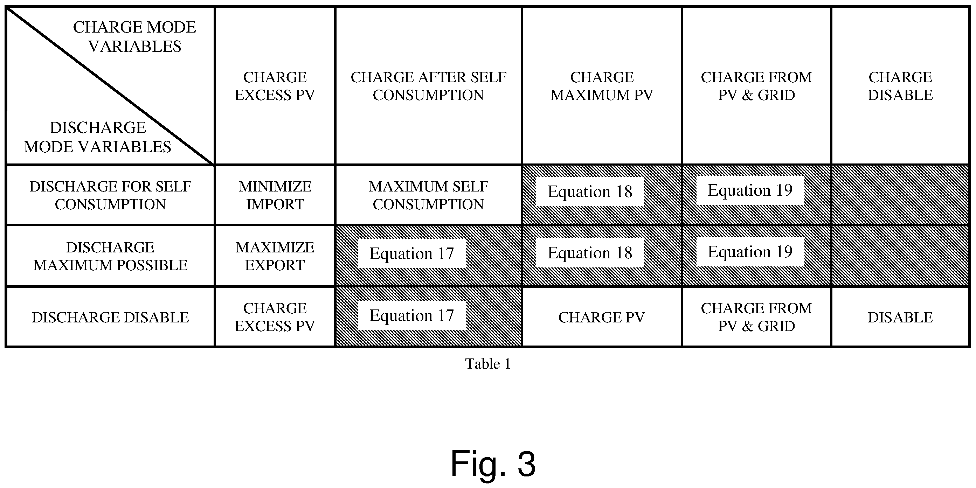

According to one or more examples of the present disclosure and as described in the paragraph above, the storage operational modes may be "minimize import," "maximize export," "charge excess PV," "charge PV," "charge PV and Grid," "maximize self consumption," and "disable." In Table 1 shown in Figure 3, each cell represents a storage operational mode. For example, a storage operational mode may be defined by a combination of a charge mode and a discharge mode. The charge mode may define the amount of energy by which battery 104-1 is charged. The discharge mode may define the amount of energy by which battery 104-1 is discharged. In the example shown in Table 1, the charge modes may include "CHARGE EXCESS PV," "CHARGE AFTER SELF CONSUMPTION," "CHARGE MAXIMUM PV," "CHARGE FROM PV & GRID," and "CHARGE DISABLE." The discharge modes may include "DISCHARGE FOR SELF CONSUMPTION," "DISCHARGE MAXIMUM POSSIBLE," and "DISCHARGE DISABLE." According to the disclosure herein, in the optimization process, a charge mode may be represented by a corresponding charge mode variable and a discharge mode may be represented by a corresponding discharge mode variable. The charge mode variables and the discharge mode variables may be discrete variables, which may take the values of either 0 or 1. A storage operational mode may be defined by a valid combination of a charge mode variable and a discharge mode variable. In Table 1 shown in Figure 3, each cell corresponds to a storage operational mode, defined by the combinations of charge mode variables (the columns in Table 1) and discharge mode variables (the rows in Table 1). In Table 1, the hatched cells represent non-valid combinations of charge and discharge mode variables. For example, the "maximum self consumption" storage operational mode is defined by the "CHARGE AFTER SELF CONSUMPTION" charge mode variable, and the "DISCHARGE FOR SELF CONSUMPTION" discharge mode variable, both taking a value of 1. A combination of the "CHARGE MAXIMUM PV" charge mode variable, and the "DISCHARGE FOR SELF CONSUMPTION" discharge mode variable, is an invalid combination. According to the disclosure herein, server 152 may use an optimization process (e.g., linear programming, genetic algorithm, branch and bound, or hill climbing to name a few) to determine, for the next timestep in the time-period, the storage operational mode that optimizes (e.g., maximizes or minimizes) an objective function by determining values for the charge mode variables and the discharge mode variables.

According to the disclosure herein, the optimization process may determine values for the charge mode variables and discharge mode variables that may maximize an objective function given other variables, parameters, and/or constraints. Table 2 (below) presents various example variables that may be used during the optimization process.

Table 2

| Variables | Description |
|---|---|
| $soe_t$ | The State Of Energy - SOE (e.g., in Watts-hour Wh) of battery 104-1 at an end timestep t |
| $inverter\_output_t$ | The amount of output energy from power converter 112 at timestep t |
| $import_t$ | The amount of energy to be imported from grid 124 at timestep t |
| $export_t$ | The amount of energy to be exported from grid 124 at timestep t |
| $discharge_t$ | The amount of energy to be discharged from battery 104-1 at timestep t |
| $charge_t$ | The amount of energy to be charged to battery 104-1 at timestep t |
| $clipped\_PV_r$ | Unused PV energy at timestep t |
| $discharge\_mode\_d$ | The discharge modes, $d$, at timestep 0. This a discrete (e.g., binary) variable where $d \in D$, and where $D=\{DISCHARGE\ FOR\ SELF\ CONSUMPTION,\ DISCHARGE\ MAXIMUM\ POSSIBLE,\ DISCHARGE\ DISABLE\}$ (e.g., there are three discharge mode variables, each may take a value of 0 or 1) |
| $charge\_mode\_c$ | The charge modes, $c$, at timestep 0. This a discrete (e.g., binary) variable where $c \in C$, and where $C=\{CHARGE\ EXCESS\ PV,\ CHARGE\ AFTER\ SELF\ CONSUMPTION,\ CHARGE\ MAXIMUM\ PV\ CHARGE\ FROM\ PY\ \&\ GRID,\ CHARGE\ DISABLE\}$ (e.g., there are five charge mode variables, each may take a value of 0 or 1) |

Table 3 (below) represents various example parameters that may be used during the optimization process.

Table 3

| Parameters | Description |
|---|---|
| $T$ | The total number of timesteps (within a prediction time-period) |
| $soe\_start\_t$ | The initial SOE of battery 104-1 at the beginning of timestep 0 |
| $simulated\_discharge\_d$ | The amount of energy (e.g., in Watts hour - Wh) discharge from battery 104-1 if activating discharge mode, $d$, at timestep 0 |
| $simulated\_charge\_c$ | The amount of energy that would be charged to battery 104-1 at timestep 0 if activating charge mode, c, at timestep 0 |

(continued)

| Parameters | Description |
|---|---|
| PVt | The amount of energy predicted to be produced by PV power source 102-1 during timestep t. May be determined for each timestep from the long term (T) PV prediction. |
| inverter_max | The maximum amourtt of energy power converter 112 may process during a timestep |
| max_import | The maximum amount of energy allowed to be imported a timestep |
| max_export | The maximum amount of energy allowed to be exported during a timestep |
| max_discharge | The maximum amount of energy battery 104-1 may discharge during a timestep |
| max_charge | The maximum amount of energy battery 104-1 may charge during a timestep |
| import_price_t | The price (e.g., in USD) of importing a unit of energy (e.g., 1 Wh) timestep t |
| export_price_t | The price (e.g., in USD) exporting a unit of energy during timestep t |
| discharge_cost | The cost (e.g., in USD) of discharging the battery with 1 unit of energy |
| consumption_t | The amount of energy predicted to be consumed by load 118 during timestep t (may be determined for each timestep from the long term (T) consumption prediction) |
| charge_cost | The cost of charging battery 104-1 with a unit of energy |
| battery_capacity | The energy capacity of battery 104-1 |
| min_soe | The minimum amount of energy allowed to remain in battery 104-1 may be zero or higher (min_soe $\geq 0$) |

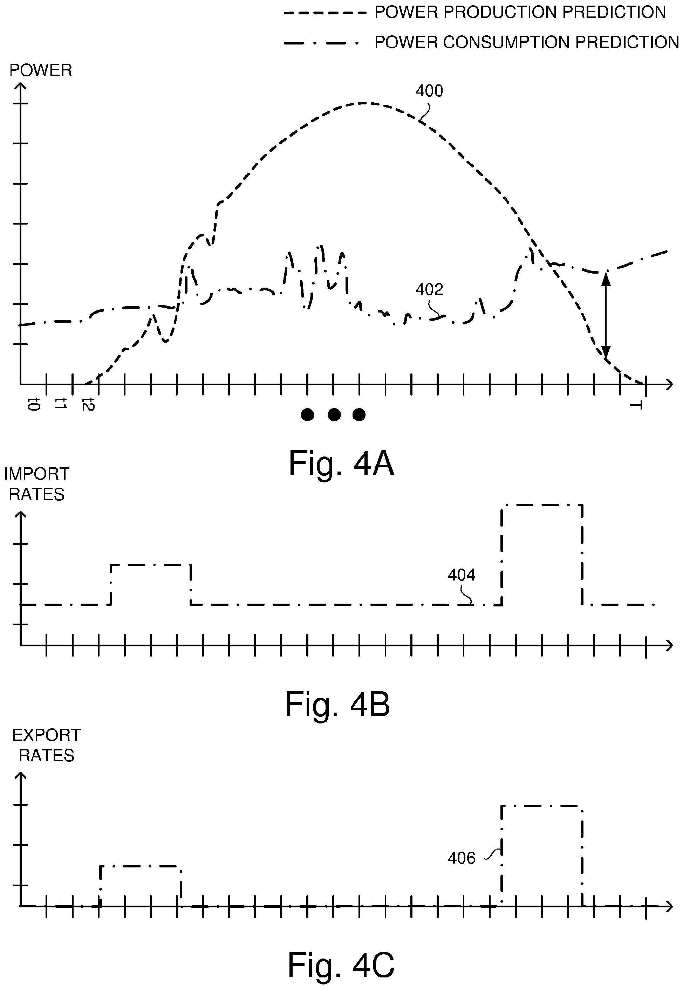

Reference is now made to Figures 4A-4C which show examples of some of the parameters listed in Table 3. Figure 4A shows an example of a power production prediction 400 of power predicted to be produced by PV power source 102-1 over the time-period, T. The parameter *PVt* listed in Table 3 above may be derived from predicted PV power production 300, for each timestep, t (e.g., t0, t1, t2 shown in Figure 3A). For example, server 152, using prediction generator 120 and weather forecasts information (e.g., weather forecasts 126), may determine predicted PV power production 400. The weather forecasts information (e.g., weather forecasts 126) may include information regarding the predicted irradiance at the geographical location of power system 101. For example, server 152, using prediction generator 120 and past power production data, may determine predicted PV power production 400. For example, prediction generator 120 may generate production prediction 400 based on a determined number of previous days (e.g., the last 10 days) of actual power production by PV power source 102-1. Prediction generator 120 may generate production prediction by PV power source 102-1 based on actual power production data at a pertinent date over past years (e.g., on this date over the past 10 years).

Figure 4A further shows the consumption prediction 402 of load 118. The parameter *consumption t* listed in Table 3 may be derived from consumption prediction 402 for each timestep, t. Server 152, using prediction generator 120 and past data relating to the consumption of load 118, may determine consumption prediction 402. Server 152, may also determine, using predictions generator 120, consumption prediction 402 using past data relating to the consumption of load 118. For example, prediction generator 120 may generate consumption prediction 402 by load 118 based on a determined number of previous days (e.g., the last 10 days) of actual power consumption of load 118. Prediction generator 120 may generate consumption prediction by load 118 based on power consumption at a pertinent date over past years (e.g., this date over the past 10 years). Prediction generator 120 may use statistical prediction model or artificial intelligence techniques to generate production prediction 400 and consumption prediction 402.

Figure 4B shows import rates 404 over the time-period, T. The parameter *import_price_t* may be derived from import rates 404 for each timestep, t. Server 152 may receive import rates 404 from power company 114. Figure 4C shows export rates 406 over the time-period, T. The parameter *export_price_t* may be derived from export rates 404 for each timestep, t. Server 152 may receive export rates 406 from power company 114.

Some parameters corresponding to power system 101 and listed in Table 3 may be stored in server 152. Some parameters (e.g., *soe_start t*) may be transmitted to server 152, by power system 101 (e.g., using communications interface 113). Some parameters (e.g., *simulated_discharge_d* and *simulated_charge_c*) may be determined by server 152 during the optimization process (e.g., using equations (3) - (21), as may further be explained below).

According to the disclosure herein, server 152 may use an optimization process to determine values for the power system variables mentioned above, which may optimize an objective function (e.g., a cost function), given constraints (e.g., further described below in Equations 1-19). For example, the objective function may correspond to a cost for using an energy storage device by a user during the time-period. For example, the objective function may be:

$$Cost\ for\ t_0 = \sum_{t=0}^{T}(import\_price\_t * \mathbf{import}_t - export\_price\_t * \mathbf{export}_t +$$
$$charge\_cost * \mathbf{charge}_t + discharge\_cost * \mathbf{discharge}_t)$$

$$(1)$$

The objective function described in Equation (1) corresponds to a cost associated with importing and exporting power from grid 124 and the cost of charging and discharging battery 104-1. For example, each charge-discharge cycle may reduce the capacity of battery 104-1. Battery 104-1 may be replaced when the capacity of battery 104-1 reduces below a threshold. The *charge_cost* and *discharge_cost* parameters may be related to a cost of replacing battery 104-1 and may be in units of currency per energy (e.g., USD/Wh), where the energy may relate to the capacity loss due to charging or discharging the battery.

In some cases, the various variables and/or parameters may be affected by environmental conditions (e.g., weather conditions). For example, the power produced by PV 102-1 may change with weather. The power consumed by load 118 may also change with weather. In some cases, to incorporate the effect of weather, the objective function may incorporate such probabilities.

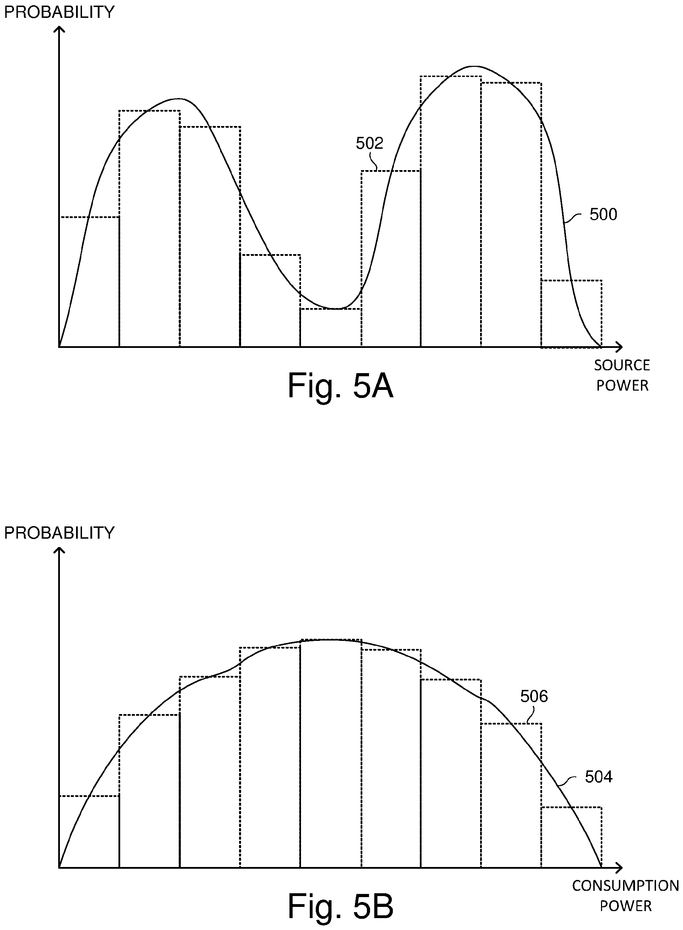

Reference is made to Figures 5A and 5B which shows examples of probability distribution functions. Figure 5A shows an example of a probability distribution function 500 of power produced by a power source (e.g., PV 102-1). Figure 5B shows an example of a probability distribution function 504 of power consumed by a load 118. The probability distribution functions 500 and 504 may be discrete probability distribution functions comprising discrete probabilities such as probabilities 502 and 506.

According to the disclosure herein, to account for the uncertainties associated with some parameters, the objective function may include a probability term. Such a probability term may relate, for example, to the probabilities of power production (e.g., probability distribution function 500 - Figure 5A), to the probabilities of power consumption (e.g., probability distribution function 504 - Figure 5B), or to a joint probability distribution function of power production and power consumption. A joint probability of power production and power consumption may be referred to as a probability of 'a power state'. For example, the power production distribution function may include three discrete probabilities, P(high PV), P(medium PV), and P(low PV). The power consumption distribution function may also include three discrete probabilities, P(high consumption), P(medium consumption), and P(low consumption. A joint probability may include nine discrete probabilities as may be shown in Table 4 below. In Table 4 'Medium' may be abbreviated to 'Med' and 'High' may be abbreviated to 'Hi.'

Table 4

| | | Low PV | Medium PV | High V |
|---|---|---|---|---|
| | | Ppv(Low) | Ppv(Med) | Ppv(Hi) |
| Low Consumption | Pc(Low) | P(Pc(Low), Ppv(Low)) | P(Pc(Low), Ppv(Med)) | P(Pc(Low), Ppv(Hi)) |
| Medium Consumption | Pc(Med) | P(Pc(Med), Ppv(Low)) | P(Pc(Med), Ppv(Med) | P(Pc(Med), Ppv(Hi)) |
| High Consumption | Pc(Hi) | P(Pc(Hi), Ppv(Low)) | P(Pc(Hi), Ppv(Med)) | P(Pc(Hi), Ppv(Hi)) |

An objective function, which includes a probability term, may be as follows:

$$Cost\ for\ t_0 = \sum_{t=0}^{T}\sum_{s=1}^{S}(import\_price_t * \mathbf{import}_t - export_{price_t} * \mathbf{export}_t +$$
$$charge\_cost * \mathbf{charge}_t + discharge\_cost * \mathbf{discharge}_t) * P(s)$$

$$(2)$$

*P(S)* may be, for example, power production probabilities, power consumption probabilities, or joint probabilities. In the examples of the objective functions shown in Equations (1) and (2), the optimization process may aim to minimize the objective function.

Following are examples of constraints imposed on the various variables (e.g., as described in relation to Table 3), using various parameters (e.g., as described in table 2). These constraints may be used in optimizing the objective function.

Boundary Constraints

For $\forall t \in \mathbb{Z}$, 0≤t<T

$$0 \leq \boldsymbol{import_t} \leq max\_import \tag{3}$$

$$0 \leq \boldsymbol{export_t} \leq max\_export \tag{4}$$

$$0 \leq \boldsymbol{charge_t} \leq max\_charge \tag{5}$$

$$0 \leq \boldsymbol{discharge_t} \leq max\_discharge \tag{6}$$

$$min\_soe \leq \boldsymbol{soe_t} \leq battery\_capacity \tag{7}$$

$$-max\_inverter\_output \leq \boldsymbol{inverter\_output_t} \leq max\_inverter\_output \tag{8}$$

$$\text{For } \forall c \in C \ \boldsymbol{charge\_mode\_c} \in \{0, 1\} \tag{9}$$

$$\text{For } \forall d \in D \ \boldsymbol{discharge\_mode\_d} \in \{0, 1\} \tag{10}$$

State of Energy (SOE) Constraints

$$\boldsymbol{soe_0} - \boldsymbol{charge_0} - \boldsymbol{discharge_0} = \underline{soe\_start\_t} \tag{11}$$

$$\text{For } \forall t \in \mathbb{Z}, 0{\leq}t{<}T \quad \boldsymbol{soe_t} - \boldsymbol{soe_{t-1}} - \boldsymbol{charge_t} + \boldsymbol{discharge_t} = 0 \tag{12}$$

Energy Balance Constraints

For $\forall t \in \mathbb{Z}$, 0≤t<T

$$\boldsymbol{inverter\_output_t} + \boldsymbol{charge_t} - \boldsymbol{discharge_t} + \boldsymbol{clipped\_PVt} = PVt \tag{13}$$

$$\boldsymbol{import_t} - \boldsymbol{export_t} - \boldsymbol{discharge_t} + \boldsymbol{inverter\_output_t} = consumption \tag{14}$$

Single Charge and Discharge Mode Constraint

$$\sum_{c \in C} \boldsymbol{charge\_mode\_c} = 1 \tag{15}$$

$$\sum_{d \in D} \boldsymbol{discharge\_mode\_d} = 1 \tag{16}$$

C={CHARGE EXCESS PV, CHARGE AFTER SELF CONSUMPTION, CHARGE MAXIMUM PV, CHARGE FROM PV & GRID, CHARGE DISABLE}

D = {DISCHARGE FOR SELF CONSUMPTION, DISCHARGE MAXIMUM POSSIBLE, DISCHARGE DISABLE}

Charge Modes Constraints

$$charge\_mode_{\_CHARGE\_AFTER\_SC} \leq discharge\_mode_{\_DISCHARGE\_FOR\_SC} \quad (17)$$

$$charge\_mode_{\_CHARGE\_MAX\_PV} \leq discharge\_mode_{\_DISCHARGE\_DISABLE} \quad (18)$$

$$charge\_mode_{\_CHARGE\_PV\_\&\_GRID} \leq discharge\_mode_{\_DISCHARGE\_FOR\_SC} \quad (19)$$

$$\text{For } \forall c \in C: \text{ If } charge\_mode\_c = 1 \text{ then } charge_0 = simulate\_charge\_c \quad (20)$$

$$\text{For } \forall d \in D: \text{ If } discharge\_mode\_d = 1 \text{ then } discharge_0 = simulate\_discharge\_d \quad (21)$$

The optimization process determines values for the variables listed in Table 2, given the parameters listed in Table 3, and the constraints in equations (3) - (21), which may optimize the objective function in equation (1) or in equation (2). The above-mentioned variables, **charge_mode_c** where $c \in C$ are the charge mode variables, and **discharge_mode_d** where $d \in D$, are the discharge mode variables, which may take a value of either 1 or 0. A valid combination of values of these variables define a storage operational mode as described in relation to Table 1 (show in Figure 3). For example, $charge\_mode_{\_CHARGE\_EXCESS\_PV} = 1$ and $discharge\_mode_{\_DISCHARGE\_FOR\_SC} = 1$ define the minimize export storage operational mode. For example, $charge\_mode_{\_CHARGE\_MAXIMUM\_PV} = 1$ and $discharge\_mode_{\_DISCHARGE\_FOR\_SC} = 1$ define an invalid storage operational mode. Equations (17)-(19) define the constraints imposing the valid combinations of charge mode variables and discharge mode variables.

Once the values of **charge_mode_c** variable and **discharge_mode_d** variable are determined, the values may be transmitted by server 152 to power system controller 108. Power system controller 108 (e.g., using communications interface 106) may receive the values of the charge and discharge mode variables. Power system controller 108 (e.g., using controller 110) may determine whether to charge or discharge battery 104-1 based on the received values of the values of the **charge_mode_c** variable and the **discharge_mode_d** variable, and using the equations in Table 5 and Table 6 below. Also, during the optimization process, server 152 may use the equations in Table 5 and Table 6 to determine the *simulate_charge_c* parameter and the *simulate_discharge_d* parameter. Alternatively, server 152 may transmit to power system controller 108 the determined storage operational mode for the next timestep, and power system controller 108 may determine the corresponding charge mode and discharge mode associated with the received storage mode variable.

Table 5

| Charge Mode c | Energy to Charge for Timestep t |
|---|---|
| CHARGE DISABLED | $charge_t = 0$ |
| CHARGE EXCESS PV | Available capacity = battery capacity - $soe_t$<br>Excess PV = max(0, $PVt$ - $inverter\_max$)<br>$charge_t$ = min(max_charge, available capacity, excess PV) |
| CHARGE MAXIMUM PV | Available capacity = battery capacity - $soe_t$<br>$charge_t$ = min(*max_charge,* available capacity, *PVt*) |
| CHARGE PV AND GRID | Available capacity = battery capacity - $soe_t$<br>$charge_t$ = min(*max_charge,* available capacity, *inverter_max* + *PVt*) |
| CHARGE AFTER SELF CONSUMPTION | Available capacity = battery capacity - $soe_t$<br>self_consumed_pv = min(consumption_*t, inverter_max, PVt*) |

(continued)

| Charge Mode c | Energy to Charge for Timestep t |
|---|---|
| | remaining_pv = $PVt$ - self_consumed_pv<br>**charge$_t$** = min($max\_charge,$ available capacity, remaining_pv) |

Table 6

| Discharge Mode d | Energy to Discharge for Timestep t |
|---|---|
| DISCHARGE DISABLED | **discharge$_t$** = 0 |
| DISCHARGE MAXIMUM POSSIBLE | available_inverter_energy = max(0, $inverter\ max$ - $PVt$) available_max_discharge = $min(max\ discharge, soe_t$ - $min\_soe$)<br>**discharge$_t$** = min(available_max_discharge, available_inverter_energy) |
| DISCHARGE FOR SELF CONSUMPTION | needed_bat_SC = max(0, $consumption\_t$ - $min(inverter\ max, PVt))$<br>available_inverter_energy = max(0,$inverter\_max$ - $PVt$) max_available_discharge = min(max $discharge,$ **soe$_t$**-$min\_soe$)<br>**discharge$_t$** = min(max_available_discharge, $soet,$ needed_bat_ SC, available_inverter_enrgy) |

The equations in Table 5 and in Table 6 are defined such that the values of **charge$_t$** or **discharge$_t$** may both be zero, or only one of **charge$_t$** or **discharge$_t$** may be positive. Thus, controller 110 may calculate the values **charge$_t$** or **discharge$_t$** relating to the operational mode received from server 152. In cases in which the values of both **charge$_t$** or **discharge$_t$** are both zero, controller 110 may neither charge nor discharge battery 104-1. In cases in which the value of **charge$_t$** is non-zero and the value of **discharge$_t$** is zero, controller 110 may control storage interface 106 to charge or discharge battery 104-1 by the amount of energy defined by the equation in Table 5 corresponding to the received storage operational mode. In cases in which the value of **discharge$_t$** is non-zero and the value of **charge$_t$** is zero, controller 110 may control storage interface 106 to discharge battery 104-1 by the amount of energy defined by the equation in Table 6 corresponding to the received storage operational mode.

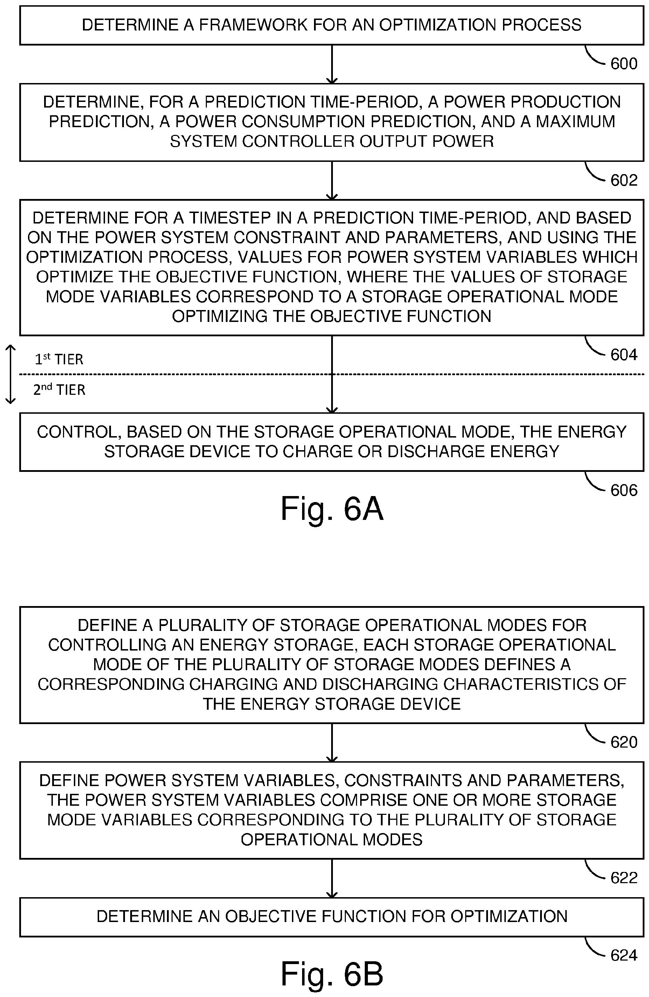

Reference is made to Figures 6A and 6B, which show examples of methods for determining a storage operational mode for an energy storage device such as for one or more of energy storage devices 204-1-204-N (Figure 2). In step 600, server 152 may determine a framework for an optimization process. The optimization process may include linear programming, genetic algorithm, branch and bound, or hill climbing to name a few examples. Determining the framework for the optimization process is further elaborated in Figure 6B below.

In step 602, server 152 may determine, for example, for a prediction time-period (e.g., 12 hours, 24 hours, 48 hours), a power production prediction (e.g., power production prediction 400 - Figure 4A), a power consumption prediction 402 (e.g., of Figure 4A), and a maximum power system controller output power for one of more of power systems 201-1 - 201-N. The maximum power system controller output power may be the maximum power level power converter 112 (e.g., an inverter) may provide to premises 118.

In step 604, server 152 may determine, for a timestep in a prediction time-period, and based on the power system constraints and parameters, and using an optimization process, values for power system variables (e.g., the variables listed in Table 2). The determined values of the power system variables optimize the objective function, where the power system variables may include charge mode variables and discharge mode variables. The determined values of the charge mode variables and the discharge mode variables define the storage operational mode optimizing the objective function. Server 152 may provide the determined storage operational mode to the corresponding one of power systems 201-1 - 201-N. As may further be elaborated below, the power system variables may comprise load devices operational mode variables. Server 152, may determine, for the timestep in the prediction time-period, based on the power system constraints and parameters, and using an optimization process, values for load devices operational mode. For example, load devices may be and EV or EVs, and/or heat pumps (e.g., water heater, air conditioner, refrigerators).

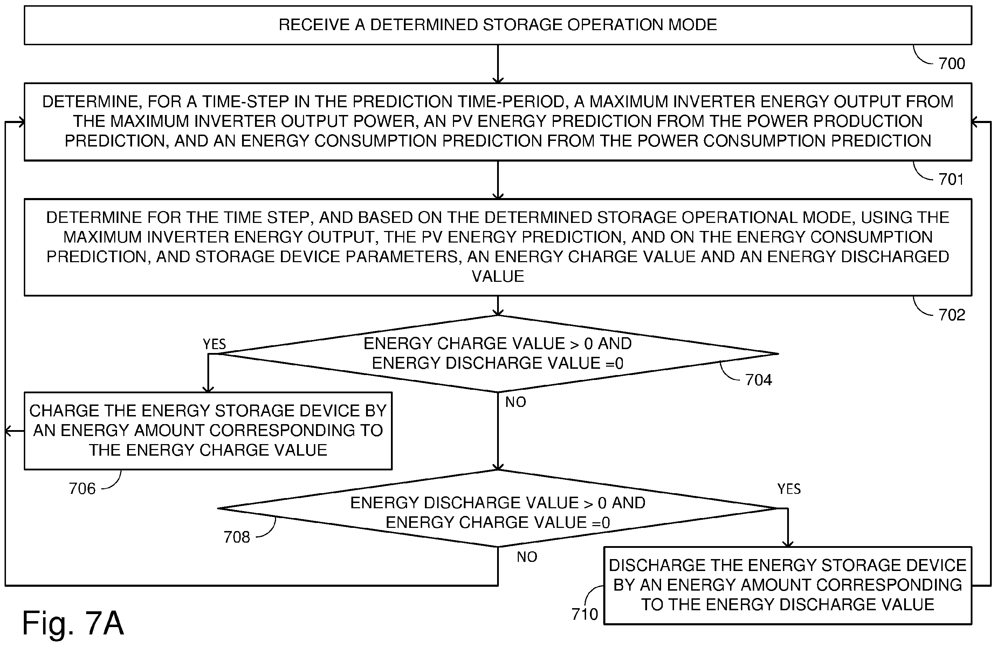

In step 606, power system controller 208-i (e.g., using the corresponding controller 110 - Figure 1B) of the one or more power systems 201-1 - 201N, may control, based on the determined storage operational mode, the corresponding energy storage device 204-i to charge or discharge energy. Power system controller 208-i may determine the amount of energy to charge the corresponding energy storage device 204-i, or the amount of energy to discharge from the corresponding energy storage device 204-i. For example, to determine the amount of energy to charge energy storage device 204-i, or the amount of energy to discharge from energy storage device 204-i, the corresponding power system controller 208-i may use the equations in Tables 5 and 6 herein above, as may be shown in Figure 7A-7C below.

Reference is now made to Figure 6B, which shows an example of a method for determining a framework for an optimization process. In step 620, server 152 may define a plurality of storage operational modes for controlling one or more of energy storage device 204-i, in which each storage operational mode of the plurality of storage operational modes defines a corresponding charging and discharging characteristic (e.g., amount of energy to charge or discharge) of energy storage device 204-i. For example, these storage operational modes may include "minimize import," "maximize export," "charge excess PV," "charge PV," "charge PV and Grid," "maximize self consumption," and "disable" as described in Table 1 (Figure 3).

In step 622, server 152 may define power system variables, parameters, and constraints. The power system variables include one or more storage mode variables corresponding to the plurality of storage operational modes. In the example where the device is battery 104-1, the one or more storage mode variables may include charge mode variables and discharge mode variables. The charge mode variable and the discharge mode variable may be discrete variables, which may take, for example, the values of either 0 or 1. As shown in Table 1, a storage operational mode may be defined by a valid combination of a charge mode variable and a discharge mode variable. An example of the power system variables may be shown in Table 2 above. An example of the parameters may be shown in Table 3 above. An example of the constraints may be shown in Equations (3)-(21) above. The constraints (e.g., Equations (17)-(19)) may impose the valid combinations of charge mode variables and discharge mode variables.

In step 624, server 152 may determine an objective function for optimization (e.g., increasing savings for a client). Such an objective function may correspond to cost (e.g., USD, Euros, etc) or to energy. An example of such an objective function may be shown in Equation (1) or Equation (2).

As described above (e.g., in step 606 - Figure 6A) power system controller 208-i (e.g., using the corresponding power system controller 110 - Figure 1B) of the one or more power systems 201-1 - 201N, may control, based on the determined storage operational mode, the corresponding energy storage device 204-i to charge or discharge energy.

The following Figures 7A-7C show examples for determining if an energy storage device (e.g., battery 104-1) is charged or discharged and by what amount of energy Reference is made to Figure 7A, which shows an example of a method of using the determined storage operational mode. Figure 7A shows an example of how power system controller 108 (e.g., using controller 110) may determine if to charge or discharge battery 104-1 and by what amount of energy. In step 700, power system controller 108 may receive from server 152 a corresponding determined storage operational mode.

In step 701, power system controller 108 may determine (e.g., using controller 110), for a timestep (e.g., 5 minutes) in the prediction time-period (e.g., 24 hours), a maximum inverter energy output from the maximum inverter output power, a photovoltaic (PV) prediction from the power production prediction, and an energy consumption prediction from the power consumption prediction.

In step 702, power system controller 108 may determine (e.g., using controller 110), for the timestep, and based on a determined storage operational mode, using the maximum inverter energy output, the PV energy prediction, and on the energy consumption prediction, and storage device parameters (e.g., SOE, SOE_MAX, MAX CHARGE and DISCHARGE POWER), an energy charge value and an energy discharge value for the determined storage operational mode. Power system controller 108 (e.g., using controller 110) may determine the energy charge value based on the equations in Table 5 above, using the charge mode variable corresponding to the determined storage operational mode (e.g., CHARGE EXCESS PV for the MINIMIZE IMPORT storage mode variable). Power system controller 108 may determine the energy discharge value based on the equations in Table 6 above using the discharge mode variable corresponding to the determined storage operational mode (e.g., DISCHARGE FOR SELF CONSUMPTION for the MINIMIZE IMPORT storage mode variable).

In step 704, power system controller 108 may determine (e.g., using controller 110) whether the energy charge value is greater than zero, and if the energy discharge value is equal to zero. If the energy charge value is greater than zero and if the energy discharge value is equal to zero, the method may proceed to step 706. If the energy charge value is equal to or less than zero, or if the energy discharge value is different from zero, the method may proceed to step 708.

In step 706, controller 110 may control storage interface 106 to charge energy storage device 104 by an amount of energy corresponding to the energy charge value. The method may return to step 700.

In step 708, power system controller 108 may determine (e.g., using controller 110) if the energy discharge value is greater than zero and if the energy charged value is equal to zero. If the energy discharge value is greater than zero and if the energy charged value is equal to zero, the method may proceed to step 710. If the energy discharge value is equal to or less than zero, or if the energy charged value is different from zero, the method may return to step 700.

In step 710, controller 110 may control storage interface 106 to discharge energy storage device 104 by an energy amount corresponding to the energy discharge value. The method may return to step 700.

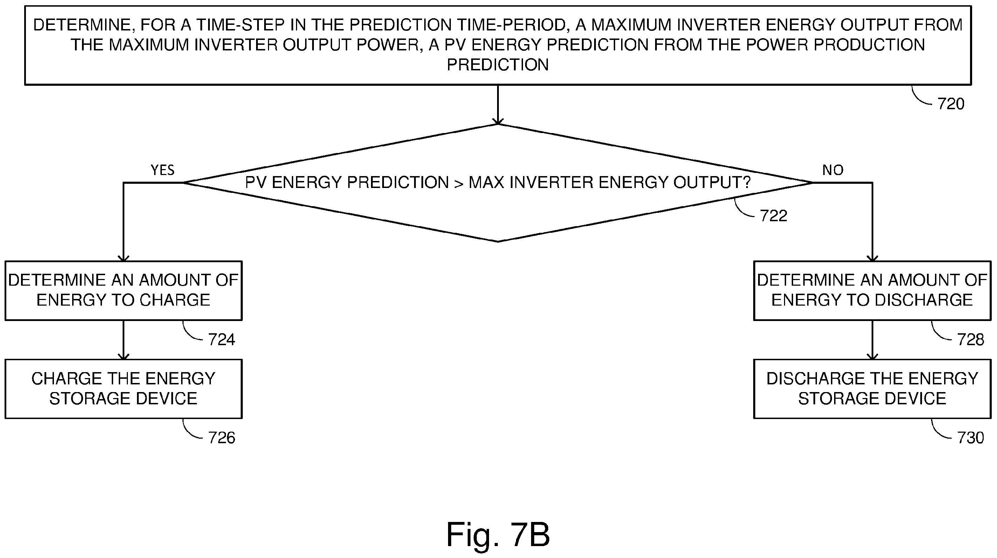

For some storage operational modes, it may be possible to determine whether to charge or discharge battery 104-1 based on system parameters. Figure 7B shows an example of a method of charging or discharging battery 104-1 for the "maximize export" storage operational mode or for the "minimize import" storage operational mode, based on system parameters. In step 720, controller 110 may determine, for a timestep (e.g., 5 minutes) in the prediction time-period (e.g., 24 hours), a maximum inverter energy output from the maximum inverter output power, and a PV energy prediction from the power production prediction.

In step 722 power system controller 108 (e.g., using controller 110) may determine whether PV energy prediction is greater than the maximum inverter energy output. If PV energy prediction is greater than the maximum inverter energy output, the method may proceed to step 724. If PV energy prediction is not greater than the maximum inverter energy output, the method may proceed to steps 728.

At step 724, power system controller 108 (e.g., using controller 110) may determine an amount of energy to charge battery 104-1. For example, controller 110 may determine the amount of energy to charge battery 104-1 based on the charge mode variable corresponding to the determined storage operational mode, and using the equations in Table 5 above.

In step 726, controller 110 may control storage interface 106 to charge battery 104-1.

At step 728, controller 110 may determine an amount of energy to discharge from battery 104-1. For example, controller 110 may determine the amount of energy to discharge battery 104-1 based on the discharge mode variable corresponding to the determined storage operational mode, and using the equations in Table 6 above.

At step 730, controller 110 may control storage interface 106 to discharge battery 104-1.

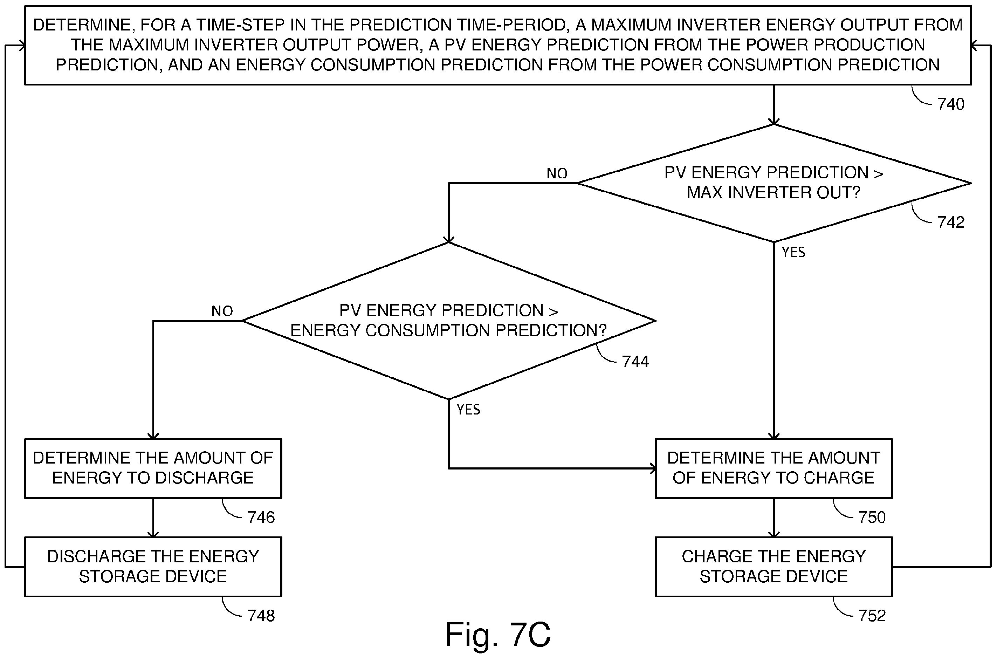

Figure 7C shows an example of a method of charging or discharging a battery (e.g., battery 104-1) for the "maximum self consumption" storage operational mode, based on system parameters. In step 740 controller 110 may determine, for a timestep (e.g., 5 minutes) in the prediction time-period (e.g., 24 hours), a maximum inverter energy output from the maximum inverter output power, a PV energy prediction from the power production prediction, and an energy consumption prediction from the power consumption prediction.

In step 742, controller 110 may determine whether the PV energy prediction is greater than the maximum inverter output. If the PV energy prediction is greater than the maximum inverter output, the method may proceed to step 750. If the PV energy prediction is not greater than the maximum inverter output, the method may proceed to step 744.

In step 744, controller 110 may determine whether PV energy prediction is greater than energy consumption prediction. If PV energy prediction is greater than energy consumption prediction, then the method may proceed to step 750. If PV energy prediction is not greater than energy consumption prediction, the method may proceed to step 746.

In step 746, the controller may determine the amount of energy to discharge. For example, controller 110 may determine the energy discharge value based on the equations in Table 6 above using the discharge mode variable corresponding to the determined storage operational mode.

In step 748, controller 110 may discharge the energy storage device 104 and may proceed back to step 740.

In step 750, controller 110 may determine the amount of energy to charge. For example, controller 110 may determine the energy charge value based on the equations in Table 5 above, using the charge mode variable corresponding to the determined storage operational mode.

In step 752, controller 110 may charge energy storage device 104 and may proceed back to step 740.

The description above describes an optimization process for a battery. According to the disclosure herein, the optimization process may include the use of charging of EV or EVs, and/or the use of other load devices such as heat pumps (e.g., water heaters, refrigerators, and/or air conditioning). The operational modes, parameters variables and constraints used for EV charging and/or heat pumps may be similar. In the description which follows, the operational modes, parameters, variable and constraints are described with reference to EV charging. The modifications to other load devices such as water heaters, refrigerators, and/or air conditioning are described. It is understood that although the letter combination 'ev' or '*EV*' may be used in conjunction with the name of the operational mode, variable and/or parameters, this should not be considered as limiting. The same operational modes, variable, parameters, and constraints apply to other load devices such as heat pumps. Also, the term 'charging' as used herein with respect to load devices may be regarded as providing energy to the load device either for storage (e.g., EV, water heater) or for usage (e.g., refrigerator, air conditioner).

As described above in conjunction with Figure 1A, energy storage device(s) 104 may include one or more EVs 104-2. According to the discourse herein, server 152, using the optimization process described herein, may determine a corresponding EV charging operational mode, for one or more EVs (in addition to the storage operational mode) which optimizes an objective function. As further explained below, the objective function, used by the optimization process, may include a term which accounts for the cost of charging the EV or EVs.

According to the disclosure herein, the optimization process determines the EV charging operational mode, for the next timestep in the prediction time-period. Examples of EV Charging operational modes are shown in Table 7.

| EV Charging Operational Mode | Description |
| --- | --- |
| CHARGE_EV_DISABLED | No EV charging |
| CHARGE_EV_FROM_PV | Charge the EV battery with energy from the PV that is not consumed by the load. |

(continued)

| EV Charging Operational Mode | Description |
|---|---|
| *CHARGE_EV_FROM_PV_AND_B ATTERY* | Charge the battery of the EV with the PV that is not consumed + the maximum possible energy from the storage device(s) 104. |
| *CHARGE EV EXACTLY* | Charge the EV battery, in the next timestep, with an exact amount of energy. Used to enable charging from the grid but limiting the cost associated with charging from the . |
| Table 7 | |

In the EV charging example brought herein, the EV charging operational mode, except the *CHARGE EV EXACTLY* operational mode, may define only the source or sources from which the EV or EVs is charged. Power system controller 108 may attempt to charge the EV or EVs with the maximum possible power. In case the *CHARGE EV EXACTLY* is the operational mode determined to be the active operational mode, power system controller 108 attempts to charge the EV or EVs by the amount of energy determined, using any of the available sources (e.g., PV, battery, grid, or any combination thereof).

When charging an EV or EVs, the charging start time, and the charging duration may be different for each EV. Furthermore, each EV may charge during one or more charging intervals during the prediction time-period. According to the disclosure herein, to incorporate charging of one or more EVs, and the possible semi-continuity in time of EV charging, into the optimization process, one or more EV charging scenarios, **S,** are defined for the prediction time-period. Each EV charging scenario, **s** of the EV charging scenarios **S,** may be associated with a corresponding probability Ps. An EV charging scenario may include one or more EV charging tasks, **Ls**, where each EV charging task is associated with a corresponding EV, over a continuous charging interval (may also be referred to as the task interval). The list of all EV charging tasks starting in the next timestep, $t'0,$ may be denoted $L_s^0$. A specific task may be denoted **i.**

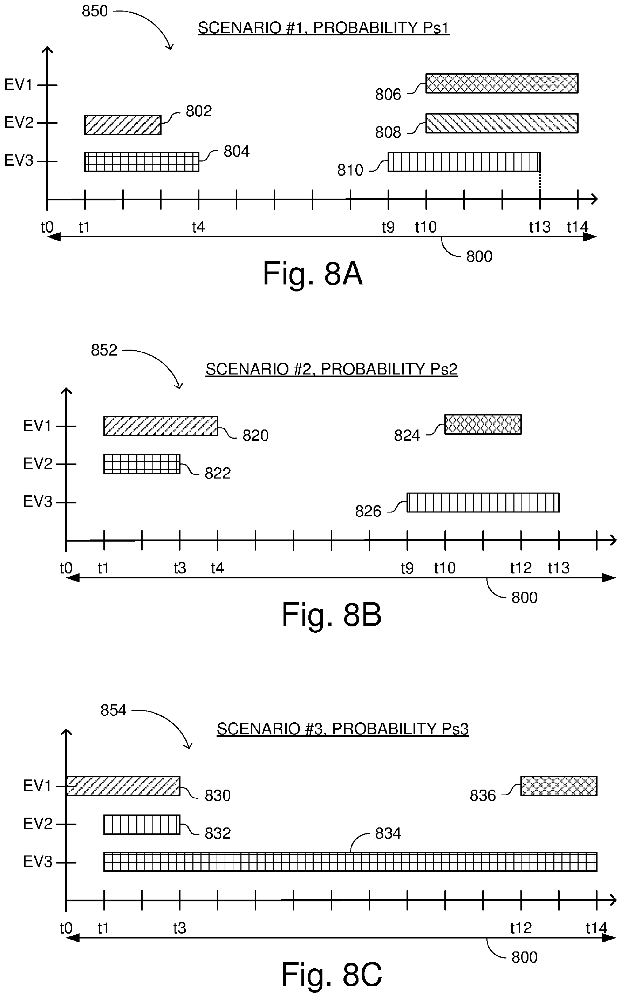

Reference is made to Figures 8A-8C. Figure 8A shows graph 850 of EV charging scenario #1, Figure 8B shows graph 852 of EV charging scenario #2, and Figure 8C shows graph 854 of EV charging scenario #3. EV charging scenarios #1, #2, and #3 are defined over a prediction time-period 800. EV charging scenario #1 includes tasks 802, 804, 806, 808, and 810. EV charging scenario #2 includes tasks 820, 822, 824, and 826, and EV charging scenario #3 includes tasks 830, 832, 834, and 836. Each of the tasks is defined over a corresponding task interval, and for a corresponding EV. For example, task 802 is defined between t1 and t4 for EV2. Each EV charging scenario is associated with a corresponding probability. EV charging scenario #1 is associated with a probability Ps1, EV charging scenario #2 is associated with a probability Ps2, and EV charging scenario #3 is associated with a probability Ps3. These probabilities are used in the objective function, as further explained below, and similar to as described above in conjunction with Figures 5A and 5B, Table 4 and Equation (2). According to the disclosure herein, server 152 may determine a joint probability distribution for the power production, power consumption and the scenarios.

According to the disclosure herein, the energy charged to the EV may be zero, or between a lower limit and an upper limit (e.g., due to charging power limitations of the EV charger). This may result in the energy charged to the EV be considered as a semi-continuous energy variable. However, introducing semi-continuities to an optimization process may increase the complexity of the optimization process. Accounting for the semi-continuities (e.g., time semi-continuities and/or charging energy semi-continuities) of the charging task is further explained below in conjunction with the description of the parameters, variables, and constraints relating to EV charging. Semi-continuity in energy and time may apply to other types of loads as well. For example, the energy provided to a water heater may be zero, or between a lower limit and an upper limit (e.g., due to charging power limitations of the water heater).

In the optimization process according to the disclosure herein, the prediction time interval is divided into discrete timesteps $t \in [0,T]$. As mentioned above, in some cases, an EV might not be connected to a charging station for the entire duration of the prediction time-period. Therefore, there might be no need to determine values for the variables related to EV charging for the entire prediction time-period. To account for the time semi-continuity of the EV charging task, each charging task, *i,* is associated with task timesteps $t' \in [0,Tis)$, where *Tis* is number of timesteps for task *i,* defined in EV charging scenario **s.** The task timesteps, *t',* are aligned with the timesteps in the prediction time-period by an offset, *task_start$_{si}$,* of every task.

As mentioned above, the energy charged to the EV be considered as a semi-continuous energy variable. To minimize the use of semi-continuous variables, according to the disclosure herein, the number of timesteps (e.g., 1, 5, 10, or more timesteps), within the task interval, in which a variable such as the EV charge energy variable is considered as a semi-continuous variable, is limited by a parameter as further explained below.

According to the disclosure herein, each EV charging task is defined by corresponding parameters and variables. Table 7 lists the EV charging parameters used for each task in the optimization process described herein.

| Task Parameters | Description |
|---|---|
| EV_charging_interval | In time units. The time duration of the Task. Relates to the time duration during which the EV would be connected. This accounts for the semi-continuity in time of the charging task. |
| task_start$_{si}$ | The timestep in the prediction time-period at which the task starts. |
| target_soe | In energy units (e.g., WH) for EV. In temperature units for heat pumps. For example, the minimum SOE that the battery of the EV should reach before by the end of charging interval.<br>For example, the minimum temperatures that the water in the heater should reach before by the end of charging interval. |
| max_soe | In energy units (e.g., WH). The SOE upper-limit of the battery of the EV. In temperature units for heat pumps (e.g., the maximum temperature of the water). |
| max_charge_power | In power units (e.g., Watts). For example, the maximum charging power with which the battery of the EV may be charged. This may be a characteristic of the EV, the EV battery, or the EV charger. Applies to heat pumps as well (e.g., the maximum power of the water heater). |
| charge_gain | In currency units (e.g., USD or Euros). It is used to determine the economic gain of charging energy above target SOE. |
| min_charge_power | In power units. The minimum charging power with which the battery of the EV may be charged. This may be a characteristic of the EV, the EV battery, or the EV charger. Applies to heat pumps as well (e.g., the minimum power of the water heater). May be set to zero. |
| start_soe | In energy units for EV. The initial SOE of the battery of the EV. May be set to an arbitrary number in case start_soe is unknown. In temperature units for heat pumps (e.g., may be arbitrarily set to 15 in case the initial temperature is unknown). |
| priority_weight | A weight that indicates the priority of charging this vehicle among others. The higher the value, the bigger the portion of charged energy would be that a vehicle will receive. May indicate the priority of using a heat pump. |
| charging_tasks_SC_limit | The number of timesteps in which the charging task is considered as semi-continuous in power. This provides a trade-off between the complexity of the optimization process and the accuracy of the optimization process. |
| min_task_energy | The minimum energy to be charged during the task. This parameter relates to a minimum power with which the EV, the EV battery, or the EV charger may be charged. _min_task_energy=min charge_power*power_to_energy._<br>May be converted to temperatures for heat pumps as further explained below. |
| max_task_energy | The maximum energy to be charged during the task. This parameter relates to a maximum power with which the EV, the EV battery, or the EV charger may be charged. _min_task_energy=max*charge_power*power_to_energy._<br>May be converted to temperatures for heat pumps. |
| Table 8 | |

Table 8 lists the EV charging variables used for each task in the optimization process described herein

| Variable | Description |
|---|---|
| **ev_operational_mode$_p$** | A binary variable that indicates whether the charging operational mode p is active or not |
| **Variables for all timesteps** | |
| **ev_soe$_{sit'}$** | The SOE of the battery of the EV related to charging task _i_, in EV charging scenario _s_, at the end of the local timestep _t'_. May be in temperature units for heat pumps |

(continued)

| Variables for all timesteps | |
|---|---|
| $ev\_charge_{sit'}$ | Variables that indicate the energy that is expected to be charged to the EV for scenario s, for task $i$, for timestep $t'$. This variable may be semi-continuous for first *charging_tasks_SC_limit* the task $i$. |
| **Variables for the first *charging_tasks_SC_limit* timesteps** | |
| $ev\_charge\_sci_{sit'}$ | SCI stands for "semi-continuous indicator". This variable is needed in to make the $ev\_charge_{sit'}$ variable semi-continuous (e.g., $ev\_charge \in [l, u] \cup \{0\}$, where l and u are lower and upper power limit values. |
| $ev\_charge\_potential_{sit'}$ | These variables hold the value of the charge potential which are basically the values of $ev\_charge_{sit'}$ if they were continuous in the range $[0,u]$ instead of semi-continuous. |
| Table 8 | |

Following are examples of constraints relating to EV charging. As further explained below, the same constraints may be used for heat pumps.

SOE Constraints:

$\forall s \in S$: $Vi \in L$, $Vt' \in Z$, $0 \le t' < Tsi$:

$$0 \le ev\_soe_{sit'} \le max\_soe_{si} \tag{22}$$

b's 6 $S$, $Vi \in Ls$:

$$ev\_soes_{i0} - ev\_charge_{si0} = start\_soe_{si} \tag{23}$$

$$ev\_soe_{siTi-1} \ge target\_soe_{si} \tag{24}$$

for $\forall t' \in \mathbb{Z}$, $0 \le t' < Tsi$:

$$ev\_soe_{sit'} - ev\_soe_{sit'-1} - ev\_charge_{sit'} = 0 \tag{25}$$

The constraint described in Equation (24) ensures that the SOE of the EV battery at the end of the task interval will be at least the target SOE. The constraint described in Equation (25) relates to conservation of energy.

Power Charging Constraints:

$\forall i \in L$, $Vt' \in 6 Z$, $0 \le t' < Tsi$:

$$0 \le ev\_charge_{sit'} \le max\_task\_energy_{si} \tag{26}$$

$\forall i \in L_s^0$, for $\forall t' \in \mathbb{Z}$, $0 \le t' < charging\_tasks\_SC\_limit$:

$$ev\_charge_{sit'} \in [min\_task\_energy, max\_task\_energy_{si}] \cup \{0\} \tag{27}$$

The constraint described in Equation (26) defines the $ev\_charge_{sit'}$ variable as semi-continuous in energy. The constraint described in Equation (27) defines the $ev\_charge_{sit'}$ variable to be either zero, or between a maximum energy to be charged to the EV in a specific task and a minimum energy to be charged to the EV at a specific task during the next

timestep.

$$ev\_charge\_sci_{sit'} \in \{0,1\} \tag{28}$$

The constraint in Equation (28) defines **$ev\_charge\_scis_{sit'}$** as a binary variable which is used to impose semi-continuity of the **$ev\_charge_{sit'}$** variable such that **$ev\_charge_{sit'}$**s is zero, or between *min_task_energy* and *max_task_energy$_{si}$*. The use of this variable is further elaborated below in conjunction with the constraints in Equations (30) and (31):

$$0 \leq ev\_charge\_potential_{sit'} \leq max\_task\_energy_{si} \tag{29}$$

In some cases, it may not be practical to define a semi-continuous variable as defined in Equation (27). In such cases, **$ev\_charge_{sit'}$** may be defined as a semi-continuous variable as shown in the constraints in equations (30) and (31) below: $\forall s \in S$, $\forall i \in L_s^0$, for $\forall t' \in \mathbb{Z}$, $0 \leq t' < charging\_tasks\_SC\_limit$:

$$min\_task\_energy_{si} * ev\_charge\_sci_{sit'} - ev\_charge_{sit'} \leq 0 \tag{30}$$

$$ev\_charge_{sit'} - max\_task\_energy_{si} * ev\_charge\_sci_{sit'} \leq 0 \tag{31}$$

The constraints in equations (30) and (31) may be summarized in the following Table 9:

| | $ev\_charge\_sci_{sit'} = 0$ | $ev\_charge\_sci_{sit'} = 1$ |
|---|---|---|
| (30) | $0 \leq ev\_charge_{sit'}$ | $min\_task\_energy_{si} \leq ev\_charge_{sit'}$ |
| (31) | $ev\_charge_{sit'} \leq 0$ | $ev\_charge_{sit'} \leq max\_tast\_energy_{si}$ |
| | Table 9 | |

Additional power charging constraints may be:

$\forall s \in S$, $\forall i \in L_s^0$, for $\forall t' \in \mathbb{Z}$, $0 \leq t' < charging\_tasks\_SC\_limit$:

$$ev\_charge_{sit'} \leq ev\_charge\_potential_{sit'} \tag{32}$$

if **$ev\_charge\_scis_{sit'} = 1$**:

$$ev\_charge\_potential_{sit'} \leq ev\_charge_{sit'} \tag{33}$$

if **$ev\_charge\_scis_{sit'} = 0$**:

$$ev\_charge\_potential_{sit'} \leq min\_task\_energy_{si} \tag{34}$$

| | $ev\_charge\_sci_{sit'} = 0$ | $ev\_charge\_sci_{sit'} = 1$ |
|---|---|---|
| (30) | $0 \leq ev\_charge_{sit'}$ | $min\ charge\ energy_{si} \leq ev\_charge_{sit'}$ |
| (31) | $ev\_charge_{sit'} \leq 0$ | $ev\_charge_{sit'} \leq max\ charge\ energy_{si}$ |
| (32) | $ev\_charge_{sit'} \leq ev\_charge\_potential_{sit'}$ | $ev\_charge_{sit'} \leq ev\_charge\_potential_{sit'}$ |
| (33) | | $ev\_charge\_potential_{sit'} \leq ev\_charge_{sit'}$ |
| (34) | $ev\_charge\_potential_{sit'} \leq min\_task\_energy_{si}$ | |

(continued)

|      | $ev\_charge\_sci_{sit'} = 0$ | $ev\_charge\_sci_{sit'} = 1$ |
|------|------------------------------|------------------------------|
| (38) | $ev\_charge\_potential_{sit'} = Simulated$ | $ev\_charge\_potential_{sit'} = Simulated$ |
| Table 10 | | |

The constraints in equations (28) - (34), and (38) set $ev\_charge_{sit'}$ to be {0, [*min_task_energy, max_task_energy*]}. The constraint in equation (38) below, set $ev\_charge\_potential_{sit'}$ to be a simulated value. Since the simulation accounts for all the constraints, the constraint in equation (29) makes sure that $ev\_charge\_potential_{sit'}$ is not larger than *max_task_energy* (e.g., between 0 and *max_task_energy*). If $ev\_charge\_potential_{sit'}$ cannot reach the *min_task_energy* (e.g., the constraint in equation (34), the optimization process may set value of $ev\_charge_{sit'}$ to 0. This is determined by the constraints equations (30), (31), (32), (34) and (38). If $ev\_charge\_potential_{sit'}$ is between *min_task_energy* and *max_task_energy,* the optimization process may set the value of $ev\_charge_{sit'}$ to the $ev\_charge\_potential_{sit'}$. That is taken care by the constraints in equations (30), (31), (32), (33), and (38).

EV operational mode:

Vp E P:

$$ev\_operational\ mode_p \in \{0,1\} \qquad (35)$$

$$\sum_{p \in P} ev\_operational\ mode_p = 1 \qquad (36)$$

The Constraints in equations (35) and (36) together impose that only a single EV operational mode is determined for the next timestep.
*CHARGE EV* EXACTLY constraints:

Vs E *S,* $L_s^0$ :
If $ev\_operational\_mode_{CHARGE\_EV\_EXACTLY} = 1$:

$$ev\_charge_{si0} = ev\_charge_{0i0} \qquad (37)$$

The *CHARGE EV EXACTLY* operational mode is used to enable charging the EV or EVs from the grid, as well as from the PV and/or the battery. However, when charging from the grid, the energy charged to the EV incurs a cost. Therefore, the *CHARGE EV EXACTLY* operational mode limits the amount of energy to be charged to the EV or EVs to the value of the $ev\_charge$ variable. The constraint in equation (37) makes sure that the value of the $ev\_charge$ variable for the next timestep is the same for all scenarios, regardless of future timesteps in the prediction time-period.

Constraints for Other EV operational modes:

$$simulated\_operational\_modes = P \backslash \{CHARGE\_EXACTLY\}$$

Vs 6 *S,* $\forall p$ 6 *simulated operational modes:*

If $ev\_operational\_mode_p = 1$:

$$\sum_{L_s^0} charge\_potintial_{si0} = simulated\_charge_{sp} \qquad (38)$$

In cases in which the *CHARGE_FROM_PV_AND_BATTERY* EV operational mode is active, additional constraints are added to force the battery to discharge. Otherwise, the *DISABLED* storage operational mode might be selected, which should not happen when one of the battery-related EV operational mode is selected.

$$ev\_operational\_mode_{CHARGE\_FROM\_PV\_AND\_BATTERY} \leq$$

$$discharge\_mode_{DISCHARGE\_MAX\_POSSIBLE} +$$

$$discharge\_mode_{DISCHARGE\_FOR\_SELF\_CONSUMPTION} \tag{39}$$

The Constraint in equation (39) imposes a condition that if the *CHARGE_FROM_PV_AND_BATTERY* EV operational mode is active (e.g., equal to 1), either the *DISCHARGE_MAX_POSSIBLE* storage operational mode or the *DISCHARGE FOR SC* storage operational mode will also be active, thus avoiding the activation of the *DISABLED* storage operational mode.

In the optimization process described above, the values $ev\_charge_{sit'}$ variables may be used for charging the EV only in the CHARGE_EV_EXACTLY operational mode. In other cases, the values of the $ev\_charge_{sit'}$ variables may be used during the optimization process to determine an EV operational mode. Power system controller 208-i may charge the EV by the maximum power possible. Also, with regards to the constraint in equation (38) when simulating the charged energy, all the constraints herein are considered, as well as the charging or discharging of battery 204-1 as described in Tables 5 and 6.

The objective function according to the disclosure herein may provide incentives for charging energy to the EV or the heat pumps above the target.

$$Cost\ for\ t_0 = \sum_{s \in S}\left\{ \text{Equation}(1) - \sum_{i \in L}\sum_{t'=1}^{Tsi} charge\_gain_{si} * \boldsymbol{ev\_charge_{sit}} \right\} *$$

$$P(s) \tag{40}$$

As described above, the *charge_gain$_{si}$* parameter in Equation (40) is used to determine the economic gain of charging energy above a target SOE. As shown in Equation (40), *charge_gain* is multiplied by the values of the $ev\_charge_{sit}$ variables. Thus, the value of the objective function reduces based on the whole amount of energy charged, and not only based on the energy charged above the target SOE. However, the constraint in equation (24) described above, guarantees that the EV charges at least to the target SOE. Therefore, the value of the objective function will always be reduced by a value relating to difference between the start SOE and the target SOE (target_soe - star_soe). Therefore, if only charge to the target SOE, the cost determined by the objective function in Equation 40 is only affected by the value of Equation (1). However, since the EV may be charged above the target SOE, the added term to the objective function in Equation (40) affects the cost for the next timestep only if we charge above the SOE. In Equation (40), *P(S)* may be a joint probability distribution of the power production, power consumption and the EV charging scenarios.

As mentioned above, for heat pumps (e.g., water heaters, refrigerators, and/or air conditioning), the SOE may be in unit of temperature rather than energy. To enable the use of the operational modes, parameter, variables, constraints in Equations (22) - (39), and/or the objective function in Equation (40), the following modifications are needed for the constraints in equations (23) and (25).

b's 6 *S,* Vi 6 *Ls:*

$$ev\_soes_{i0} - ev\_charge_{si0}*cons\_eff + soe\_diss = start\_soe_{si} \tag{23'}$$

for $\forall t' \in \mathbb{Z}$ $0 \leq t' < Tsi:$

$$ev\_soe_{sit'} - ev\_soe_{sit'-1} - ev\_charge_{sit'} *cons\_eff + soe\_diss = 0 \tag{25'}$$

As shown above with respect to the constraints in equations (23') and (25'), *'cons_eff'* is a parameter which may convert the $ev\_charge_{sit'}$ variable from energy units to temperature units. This parameter may be set to be equal to one (1) when using the constraints in equations (22)-(39) to determine an EV charging operational mode. The parameter *'soe_diss'* relates to dissipation of energy, and specifically of heat energy for the case of heat pumps, and it may be set to a constant value. This parameter may be set to be equal to zero (0) when using the constraints in equations (22)-(39) to determine an EV charging operational mode.

Following is a description of how the consumption coefficient is determined. The consumption coefficient is defined as:

$$consumption\_efficiency = \frac{\Delta temp}{energy\_needed} \qquad (41)$$

$$\Delta temp = target\_soe - start\_soe \qquad (42)$$

With reference to the above, *energy needed* is the energy needed to be provided to the heat pump to increase the temperature by $\Delta temp$. It may be shown that *consumption_efficiency* may be determined as follows:

$$consumption\_efficiency = \frac{HP\_Constant}{mass * specific\ heat} \qquad (43)$$

With reference to the above, mass may relate to the *mass* of fluid (e.g., water in a water tank) and *specific heat* relates to specific heat of the fluid (e.g., specific heat of water in case of a water heater). The HP_Constant may be a constant relating to parameters of the heat pump such as Coefficient of Performance (COP) and energy units used.

In power systems a power company may charge a client if the power drawn (e.g., imported) from the power grid exceeds a peak demand threshold. For example, a power company may charge a client $X/kW (e.g., $0.5/kW, $1/kW, $10/kW) if the power demand of the client exceeds a peak threshold (e.g., averaged over a predetermined time-period such as 15 minutes). During the peak demand period, power system controller 108 may control energy storage device(s) 104 to discharge energy, or use power from an alternative power source (e.g., generator 102-2) to provide power to the premise 118, and reduce the power demand from grid 124. In some instances, the optimization process according to the disclosure herein may incorporate variables and constraints related to peak demand charge. The optimization process may further be used to attempt and reduce peak demand charge employing the altering of energy in energy storage 104. For example, the peak demand charge may be incorporated into the objective function (e.g., described in Equation (2)) as follows:

$$Cost\ for\ t_0 = \sum_{t=0}^{T} \sum_{s=1}^{S} [(import\_price_t * \boldsymbol{import_t}) - (export_{price_t} *$$

$$\boldsymbol{export_t}) + (charge\_cost * \boldsymbol{charge_t}) + (discharge\_cost * \boldsymbol{discharge_t}) +$$

$$(\boldsymbol{max\_average\_import} * peak\_demand\_charge)] * P(s), \qquad (44)$$

With reference to Equation (45), *max_average_import* may be a variable in the optimization process described herein above, and may be subjected to the following constraints:

$$\frac{\sum_{i=t}^{t+d} import_t}{d} \leq \mathbf{max}\ \boldsymbol{\_average\_import}$$

$$(45)$$

$$\boldsymbol{max\_average\_import} = max\_nonpayable\_power + \boldsymbol{peak\_average\_}\Delta$$

$$(46)$$

$$\boldsymbol{max\_average\_import} \geq reached\_peak\_power,$$

$$(47)$$

With reference to Equations (45)-(47), *max_nonpayable_power* may be a parameter (e.g., received from power company 112) above which a user may be charged for peak demand, *peak_average_$\Delta$* is the average peak power above the *max_nonpayable_power. reached_peak_power* may be a parameter that may take a larger of two values. The first value may be a predicted maximum average import determined by executing the optimization process described above over an extended time-period (e.g., once a day, one a week, once a month). The second value may be a previously determined **max_average_import.**

An objective function including the above discussed storage operational mode, EVs and heat pumps operational modes and peak shaving may be:

$$Cost\ for\ t_0 = \sum_{s \in S}\{\text{Equation}(1) + (\boldsymbol{max\_average\_import} *$$

$$peak\_demand\_charge) - \sum_{i \in L}\sum_{t'=1}^{Tsi} charge\_gain_{si} * \boldsymbol{ev\_charge_{sit}}\} * P(s)$$

$$(48)$$

The objective function described in Equation (46) relates to the example in which a user may be charged for the maximum demand if the import from grid 124 exceeded the *max_nonpayable_power.* In cases in which a user is charge only for the difference between the maximum demand and *max_nonpayable_power,* the variable **peak_average_$\Delta$** may be used in the objective function instead of **peak_average_power**. *P(S)* in Equation (46) may be a joint probability distribution of the power production, power consumption and the EV charging scenarios

The description above regarding peak shaving describes incorporating peak demand in the cost optimization of energy storage devices 104 and/or load devices 118 over the prediction time-period (e.g., 12 hours, 24 hours, 48 hours). According to the disclosure herein, the cost incurred by a power consumer due to peak demand charge by a power company be reduced by considering actual power production and power consumption data.

With regards to reducing peak demand charge, it is noted that the values of the variable *importt* over the time-period T, determined in the optimization process described herein above, may be employed as the predicted grid power draw (e.g., predicted power draw 306).

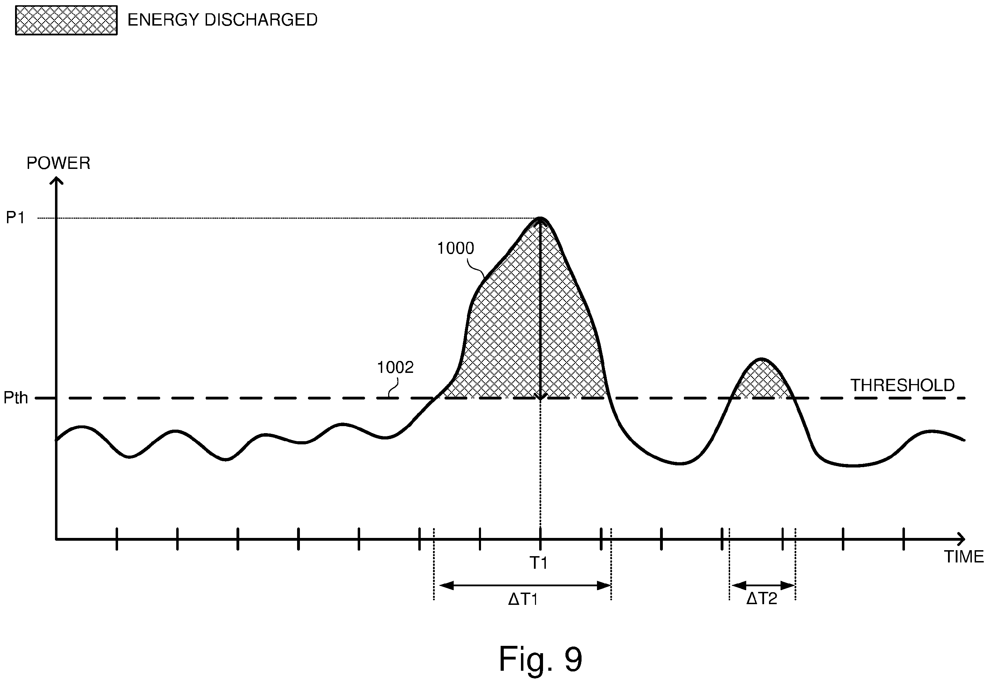

Reference is now made to Figure 9, which shows an example of peak demand event. Figure 1 may show a graph 1000 of grid power draw levels, relating to power drawn (e.g., received) by a load or loads from a power grid. For example, and with reference to Figure 1A, graph 1000 may show the grid power draw levels of a premises 118 from power grid 124. Some power companies may charge a client if the power drawn from the power grid exceeds a peak demand threshold. For example, a power company may charge a client $X/kW (e.g., $0.5/kW, $1/kW, $10/kW) if the power demand of the client exceeds the peak threshold (e.g., where the power demand may be averaged over a predetermined time-period such as 15 minutes). For example, in Figure 9, during time-period $\Delta$T1 power demand 1000 has exceed the peak demand threshold, Pth, 1002. The maximum power demand during $\Delta$T1 was P1 at time T1. So, as an example, the power company may charge the client a fee based on the formula $X*(P-Pth). During time-period $\Delta$T2, power demand 100 has exceeded the peak demand threshold, Pth. However, P2 is lower than P1 and so the power company may charge the client based on the higher of the two.

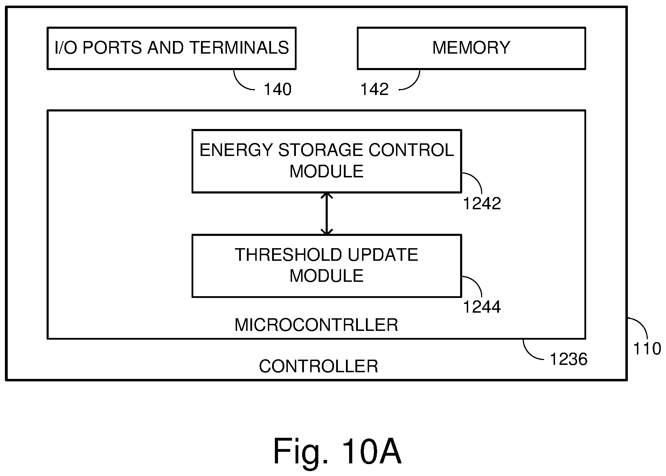

The disclosure herein may relate to reducing a peak demand (which may also be referred to as "peak shaving") of power drawn by a load 118 or grid 124 (e.g., using an energy storage 104). Power drawn from grid 124, or grid power draw may also be referred to herein as "power import". According to the disclosure herein, power system controller 108 may use a control module (further elaborated below in conjunction with Figures 10A-10F) to control an energy storage device, and grid power draw measurements to determine a power draw rating (which may also be referred to as "power draw status" or "import power rating"). Power system controller 108 may further determine if the grid power rating exceeds a determined discharge threshold. The controller may determine whether to discharge energy storage device 104 based on the power draw rating exceeding the discharge threshold. In some cases, the determined discharge threshold may be too low for energy storage device 104 to provide the energy during the peak demand period (e.g., the energy storage does not store sufficient energy to reduce the demand from the power grid, or the maximum discharge power of the energy storage device is too low to support the peak demand). In some cases, the determined discharge threshold may be too high, and the client may have to pay more than if power from their energy storage device was more smartly utilized. According to aspects of the disclosure herein, controller 110 may modify (e.g., increase or decrease) the discharge threshold as further elaborated herein. For example, the controller may evaluate the discharge threshold, and modify (e.g., increase or decrease) the discharge threshold based on the result of the evaluation of the discharge threshold.

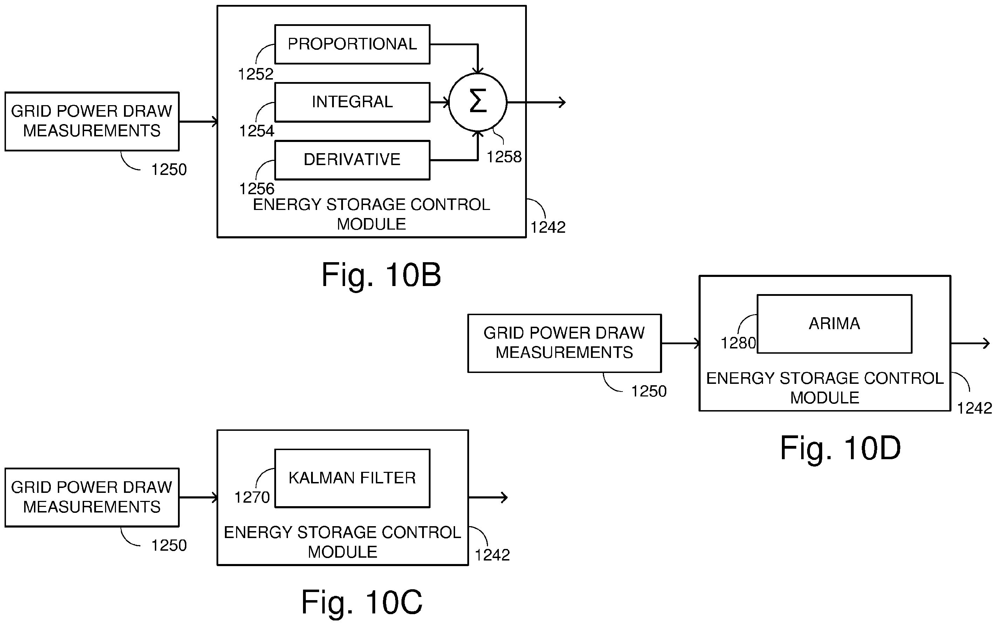

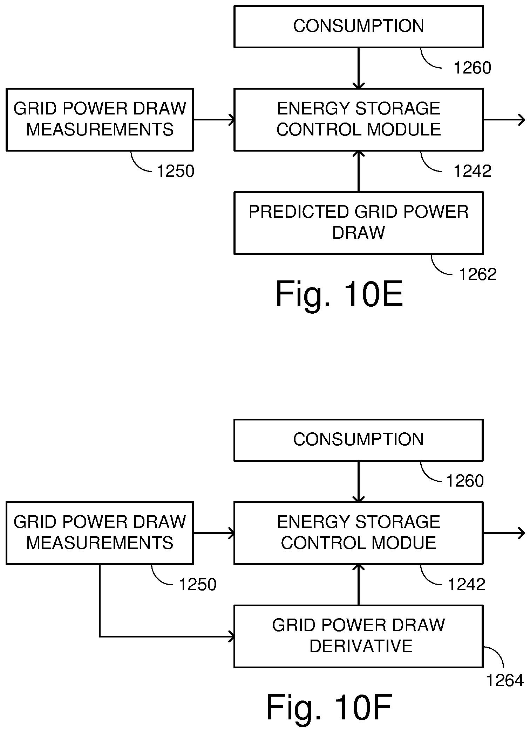

Reference is made to Figures 10A-10F, which show aspects of power system 100 and examples relating to power system 100, according to the disclosure herein. With reference to Figure 10, controller 110 may comprise one or more microcontrollers 1236 (e.g., as described above), connected to memory 142 and to Input/Output (I/O) ports 140.

As shown in Figure 10A, controller 110 may comprise microcontroller 1236. Microcontroller 1236 may execute instructions (e.g., stored in memory 142), which may result in the microcontroller performing one or more steps or functions as described herein that are attributed to one or both of controller 110 and microcontroller 1236. Microcontroller 1236 in controller 110 may comprise various modules. For example, microcontroller 1236 may be configured to use an energy storage control module 1242 to control storage interface 106 to discharge energy storage 104 based on a power draw rating (e.g., which may be based on grid power draw measurements) or one or more thresholds. Controller 110 may be configured to determine (e.g., using energy storage control module 1242) the power draw rating. Energy storage control module 1242 may use a control model, which may comprise trend detection (e.g., derivative, or prediction) for detecting a trend (e.g., an increase over time or a decrease over time) in the power drawn from power grid 124. Using a control model with trend detection may have the advantage of reducing the probability that the power drawn from the grid shall exceed the discharge threshold. Controller 110 may be configured to evaluate the discharge threshold and, responsive to the evaluation, modify (e.g., increase or decrease) the discharge threshold (e.g., in threshold update module 1244), as may further be described below. Reducing the discharge threshold may have the advantage of reducing cost incurred by a client of the power services company (e.g., reducing the monthly electricity bill).

Reference is now made to Figures 10B-10F, which show various examples of energy storage control module 1242, which may be used in microcontroller 1236, and which may comprise trend detection. Figure 10B shows that energy storage control module 1242 may be a Proportional, Integral and Derivative (PID) control model, which may comprise a proportional module 1252, an integral module 1254, a derivative module 1256 and a summer 1258. Energy storage control module 1242 may receive grid power draw measurements at 1250. Proportional module 1252 may scale the measured grid power draw levels by a proportionality constant (e.g., the constant may relate to a determined weight assigned to the current measured grid power draw level). The integral module 1254 may sum past values of the measured grid power draw level with a current value of the measured grid power draw level, and may multiply by an integral constant (e.g., the constant may relate a determined weight assigned to past grid power draw levels). The derivative module 1256 may differentiate the measured grid power draw levels (e.g., by subtracting a current measured grid power draw level from a previous measured grid power draw levels), and may multiply by a derivative constant (e.g., the constant may relate a determined or predetermined weight assigned to changes in the grid power draw levels). In a PID control model, trend detection may be provided by the derivative module.

Figure 10C shows that energy storage control module 1242 may be a Kalman filter 1270. Figure 10D shows that energy storage control module 242 may use an Autoregression Integrated Moving Average (ARIMA) model 1280. An ARIMA model may provide a prediction of a future value of the power draw rating based on a time series of past power draw ratings or based on past grid power draw power levels. In the ARIMA control model, trend detection may be provided by the prediction of a future value of the power draw rating.

Figure 10E shows that energy storage control module 1242 may use the consumption levels of power used by premises 118 from consumption module 1260 and a prediction of the grid power draw levels from the predicted grid power draw module 1262. Using consumption levels may improve the stability of results from energy storage control module 1242. It is noted that the values of the variable $import_t$ over the prediction time-period T, determined in the optimization process described herein above, may be employed as the predicted grid power draw 1262. Figure 10F shows that an energy storage control module 1242 may use a derivative of the grid power draw measurements from the grid power draw derivative module 1264 as a trend detection of the grid power draw.

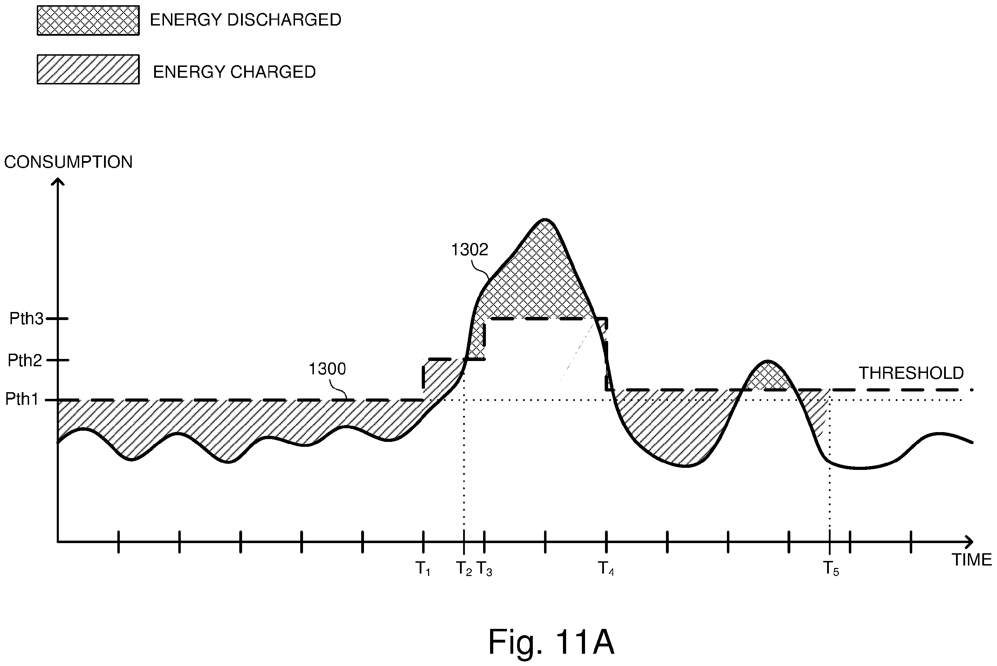

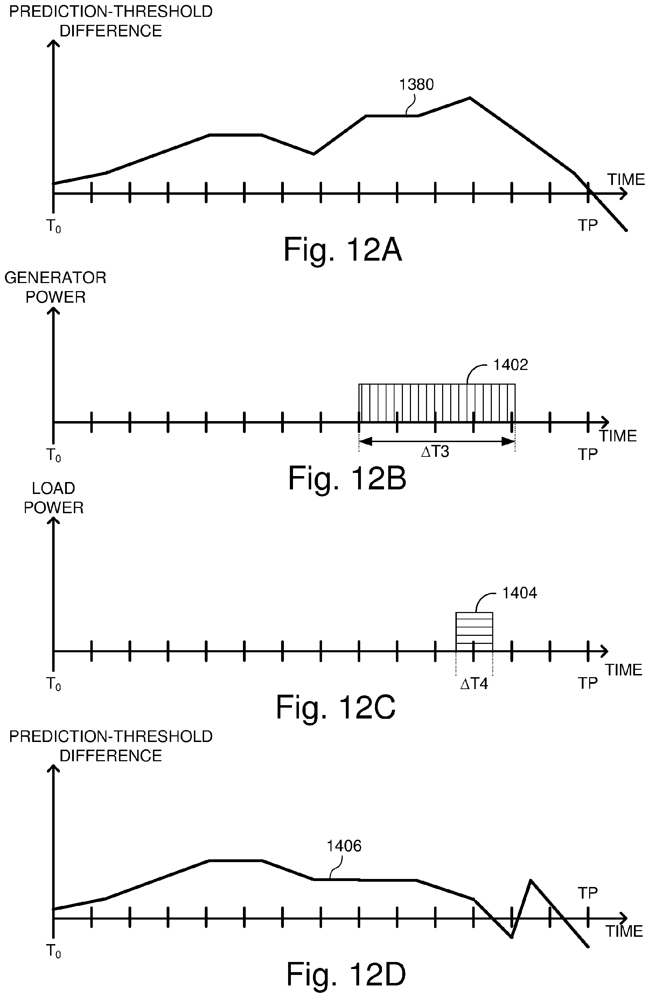

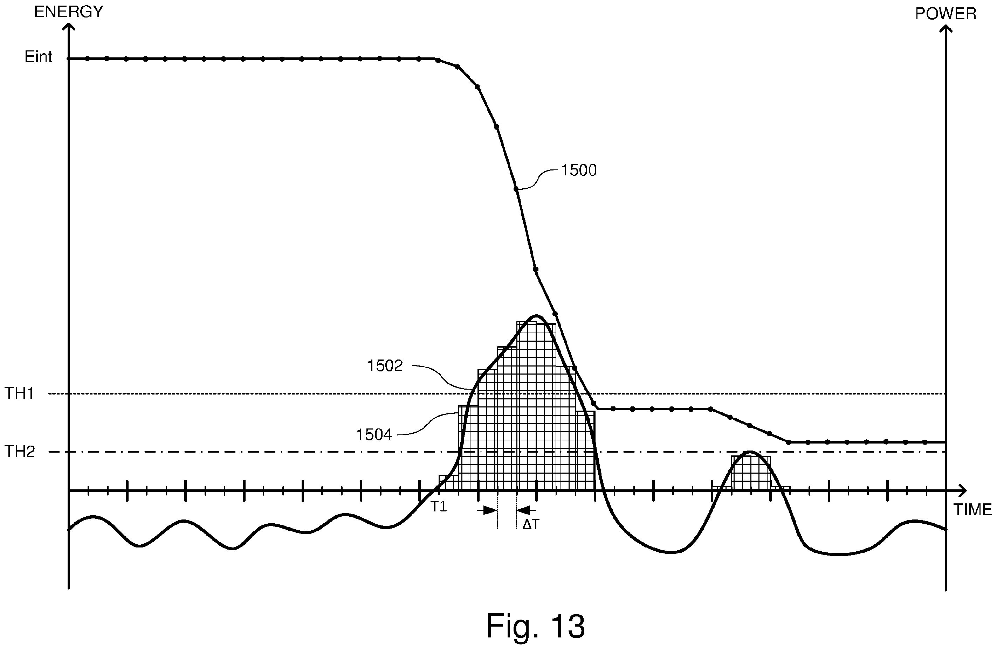

According to aspects of the disclosure herein, the discharge threshold of an energy storage may be evaluated, and modified responsive to the evaluation (e.g., increased or decreased). For the sake of the explanations herein, Figures 11A-11H relate to an example employing an energy storage device, such as energy storage 104. However, the same principles described herein may be applied when alternative power sources, as well as when turning-off loads, are used for peak shaving. Combining an energy storage device with alternative power sources and turning-off loads may be further described in conjunction with Figures 12A-12D. An example of using an alternative power source may be described in conjunction with Figure 13.

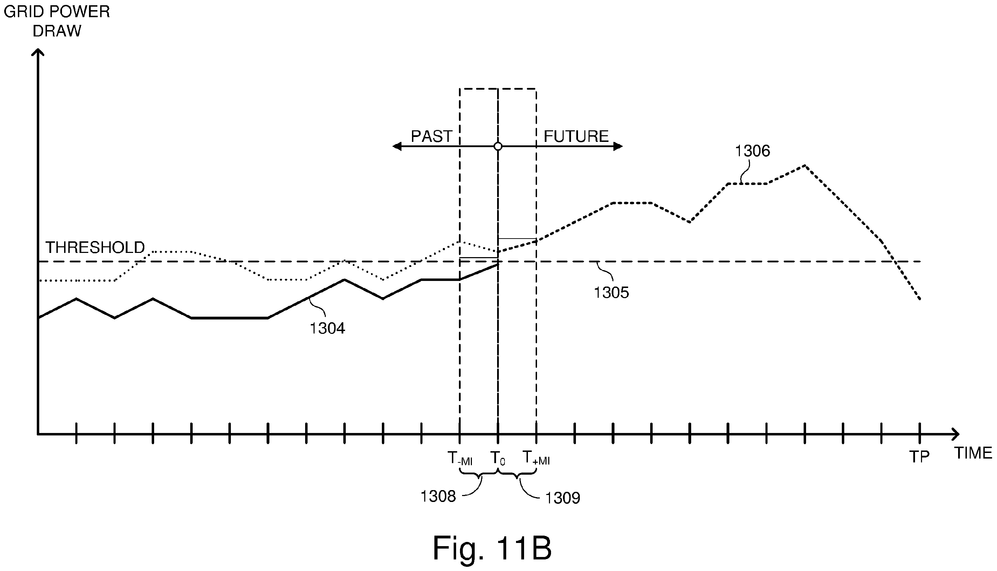

Reference is now made to Figure 11A, which shows a graph 1302 of grid power draw levels relating to power drawn (e.g., received) by a load or loads (e.g., premises 118) from a power grid (e.g., power grid 124). Figure 11A further shows a discharge threshold 1300. As seen in Figure 11A, until time T1, discharge threshold 1300 had a value of Pth1. At time T1 the value of discharge threshold 1300 increased to a value of Pth2. At time T3 the value of discharge threshold 1300 increased again to a value of Pth3. At time T4 the value of discharge threshold 1300 decreased to a value slightly above Pth1 (e.g., between Pth1 and Pth2). Until time T2, the grid power draw levels are below discharge threshold 1300, and energy storage 104 may be charged (e.g., as further elaborated in Figures 11B). At time T2, the grid power draw levels exceed discharge threshold 1300, and energy storage 104 may be discharged to reduce the peak demand charge. Energy storage device 104 may continue to charge energy or discharge energy based on the grid power draw levels 1302 relative to discharge threshold 1300. However, at time T5 energy storage 104 may be fully charged, and therefore, the charging of energy storage 104 may cease.

Reference is now made to Figure 11B, which shows a snapshot in timed during the operation of power system 100 at time $T_0$. Graph 1304 represents grid power draw measurements, from power grid 124, until time $T_0$. Graph 1306 represents a predicted grid power draw of the power levels predicted to be drawn from power grid 124 during the period TP (e.g., 12 hours, 24 hours, 48 hours, a week, a month). For example, as mentioned above, predicted grid power draw 1306 may be determined from the variable $import_t$ over the prediction time-period T, determined in the optimization process described herein above. For example, controller 110 may determine predicted grid power draw 1306 using past grid draw data (e.g., yesterday's grid power draw levels) of premises 118. Controller 110 may determine predicted grid power draw 1306 using an average of power draw levels from two or more previous days. Controller 110 may determine predicted grid power draw 1306 using AI techniques. Time interval 1308 represents a measurement interval (e.g., 5 minutes, 10 minutes, 15 minutes, 30 minutes), where the power draw measurements during measurement interval 1308 are used to determine the power draw rating. Time interval 1309 represents a prediction interval (e.g., 5 minutes, 10 minutes, 15 minutes, 30 minutes), where the predicted power draw levels during prediction interval 1309 are used to determine a predicted power draw rating as further explained below. Measurement interval 1308 and prediction interval 1309 may relate to the interval over which the power company determines the peak demand charge.

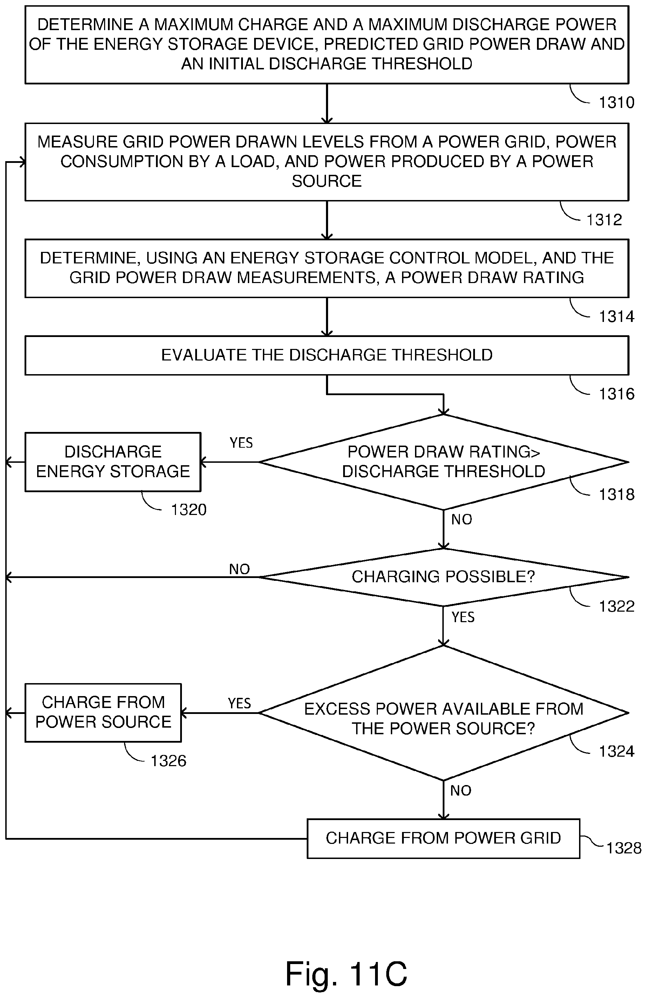

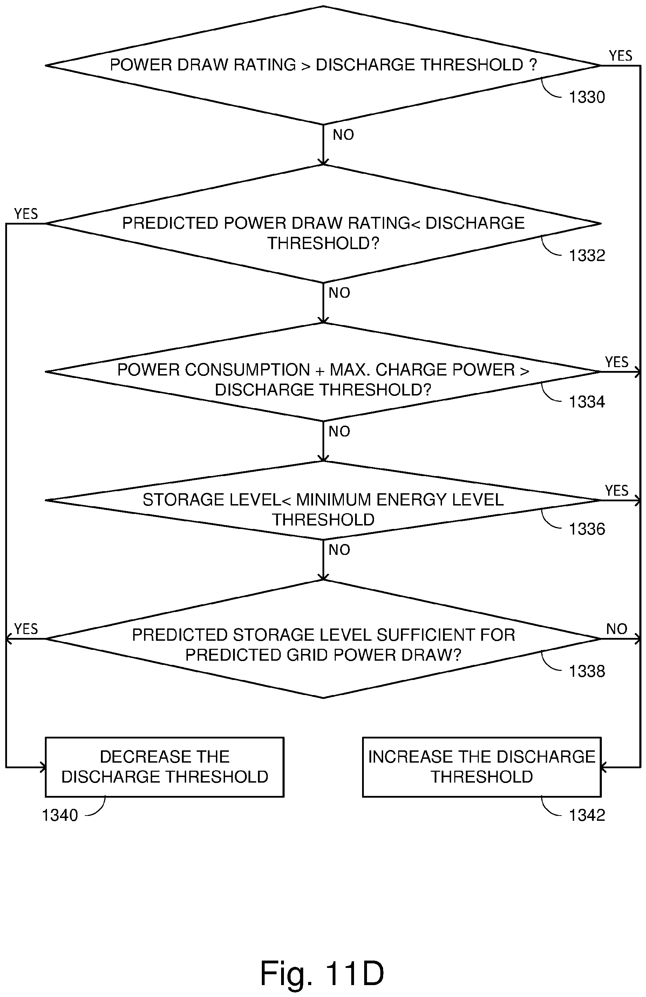

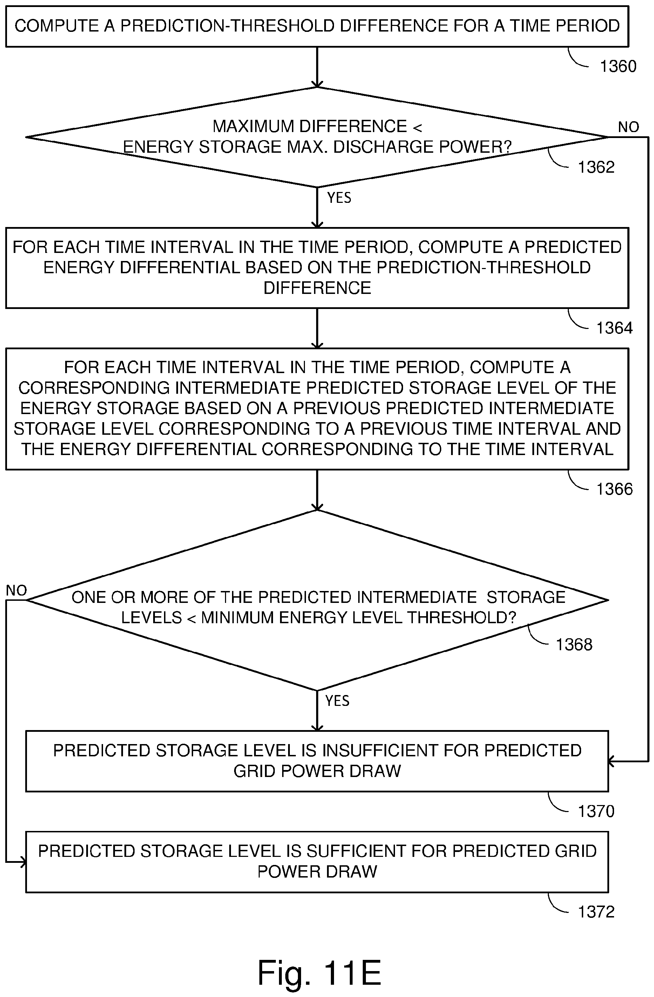

Reference is now made to Figures 11C-11H, which show methods for peak demand control of an energy storage according to the disclosure here. Figures 11C shows a method for charging or discharging energy storage device 104 according to aspects of the disclosure herein. Figure 11D shows a method for evaluating a discharge threshold and determining if a modification to the discharge threshold is required. Figures 11E-11H show a method for modifying the discharge threshold.

With reference to Figures 11C, in step 1310, power system controller 110 may determine a maximum charge power of energy storage device 104, a maximum discharge power of energy storage device 104, predicted power demand of premises 118, and an initial discharge threshold. These are parameters that controller 110 may use for peak demand control of energy storage 104. The initial discharge threshold may be arbitrarily determined, may be based on a previously determined discharge threshold (e.g., determined yesterday, or last month), or may be received from a power company (e.g., via communications interface 113).

In step 1312, meter 114 may measure grid power draw levels from power grid 124, and sensor(s) 116 may measure a power consumption by premises 118. If power system 100 comprises power source(s) 102, sensor(s) 116 may measure a power produced by power source(s) 202.

In step 1314, controller 110 may determine, using energy storage control module 1242 and using the grid power draw measurements 1304 (Figure 11B) over measurement interval 1308, a power draw rating.

In step 1316, controller 110 may evaluate the discharge threshold and determine if a modification is required for the discharge threshold. Evaluating the discharge threshold and determine if a modification is required is further elaborated herein in conjunction with Figures 11D-11H.

In step 1318, controller 110 may compare the power draw rating with the discharge threshold. If the power draw rating is larger than the discharge threshold, the method proceeds to step 1320. If the power draw rating is smaller than the discharge threshold, the method proceeds to step 1322.

In step 1320, controller 110 may control storage interface 106 to discharge energy storage device 104. From step 1320, the method may return to step 1312.

In step 1322, controller 110 may determine if charging energy storage device 104 is possible. For example, if energy storage device 104 is full, controller 110 may determine that charging energy storage device 104 is not possible. For example, controller 110 may determine if charging energy storage device 104 may increase the grid power draw levels above the discharge threshold (e.g., by summing the grid power draw measurement and the maximum charge power of the energy storage device 104), controller 110 may determine that charging is not possible. If charging is possible, the method may proceed to step 1324. If charging is not possible, the method may proceed to step 1312.

In step 1324, controller 110 may determine if excess power is available from power source 102. For example, controller 110 may determine, using measurements (e.g., from sensor(s) 116) of the power consumption of premises 118 and the power produced by power source 102, if excess power is available from power source 102 (e.g., by subtracting the power produced by power source 102 from the power consumption of premises 118). If the power produced by power source 102 is larger than the power consumption by premises 118, controller 110 may determine that excess power is available from power source 102. If excess power is available from power source 102, the method may proceed to step 1326. If excess power is not available from power source 102, the method may proceed to step 1328. In some instances, there may be no power source apart from the power grid, and so the system may always default to charging form the power grid.

In step 1326, controller 110 may control storage interface 106 to charge energy storage device 104 from power source 102. The method may proceed to step 1312.

In step 1328, controller 110 may control storage interface 106 to charge energy storage device 104 from power grid 124. The method may proceed to step 1312.

It is noted that steps 1322-1328 of the method described herein in conjunction with Figure 11C, are optional. Figure 11C describes, in step 1318, that controller 110 may compare the power draw rating with the discharge threshold. Responsive to the result of this comparison, controller 110 may discharge energy storage device 104 or charge the energy storage device 104. According to the description herein, controller 110 may determine if the power draw rating is within, above or below a range of values which may comprise the discharge threshold. Responsive to the power draw rating being within this range of values, controller 110 may maintain the current state (e.g., charging, discharging, or "do nothing") of the energy storage device. Responsive to the power draw rating being above or below the range of values, controller 110 may determine to, respectively, discharge or charge energy storage 104.

Reference is made to Figure 11D, which shows a method for evaluating the discharge threshold and determining if a modification of the discharge threshold is required (e.g., step 1316 in Figure 11C). In step 1330, controller 110 may compare the power draw rating with the discharge threshold. If the power draw rating is larger than the discharge threshold than energy storage device 104 may be discharging, and therefore, reducing the discharge threshold may not be feasible. If the power draw rating is larger than the discharge threshold, the method proceeds to step 1342. If the power draw rating is smaller than the discharge threshold, the method proceeds to step 1332.

In step 1332 controller 110 may compare a predicted power draw rating with the discharge threshold. A mentioned above, and with reference to Figures 10B-10F and 11B, controller 110, using energy storage control module 1242, may determine the predicted power draw rating using predicted grid power draw 1306, over prediction interval 1309. Determining if the predicted grid power draw is larger than the discharge threshold may provide an indication if controller 110 is predicted to control storage interface 106 to discharge energy storage device 204 (e.g., during prediction interval 1309) and therefore, if reducing the discharge threshold may not be feasible. If controller 110 is predicted not to control storage interface 106 to discharge energy storage 104, then reducing the discharge threshold may be feasible. If the predicted power draw rating is larger than the discharge threshold, the method may proceed to step 1334. If the predicted power draw rating is smaller than the discharge threshold, the method may proceed to step 1340.

In step 1334, controller 110 may compare a sum of the power consumption level by premises 118, and the maximum charging power of energy storage device 104, with the discharge threshold. This may indicate if the discharge threshold is high enough to support the grid power draw levels, and the charging of energy storage device 104. If the sum of the power consumption level by premises 118 and the maximum charging power of energy storage device 104 exceeds the discharge threshold, the method may proceed to step 1342. If the sum of the power consumption level by premises 118 and the maximum charging power of energy storage 104 does not exceed the discharge threshold, the method may proceed to step 1336.

In step 1336, controller 110 may compare the storage level of energy storage device 104 with a minimum energy level threshold. A storage level of energy storage device 104, which is lower than a minimum energy level threshold, may indicate that energy storage device 104 does not have sufficient stored energy to support the peak demand, and therefore, the discharge threshold should be modified. If the storage level of energy storage device 104 is lower than a minimum storage level, the method may proceed to step 1342. If the storage level of energy storage device 104 is not lower than a minimum storage level, the method may proceed to step 1338.

In step 1338, controller 110 may determine if a predicted storage level of energy storage device 104 is sufficient for the predicted grid power draw (e.g., predicted grid power draw 1306 - Figure 11B). Determining if a predicted storage level of energy storage device 104 is sufficient for the predicted grid power draw may further be elaborated in conjunction with Figures 11D-11H. If the predicted storage level of energy storage device 104 is sufficient for the predicted grid power draw, the method may proceed to step 1340. If the predicted storage level of energy storage 104 is not sufficient for the predicted grid power draw, the method may proceed to step 142.

In step 1340, controller 110 may reduce the discharge threshold. For example, controller 110 may reduce the discharge threshold by constant values. Controller 110 may reduce the discharge threshold based on a maximum value of the prediction-threshold difference (e.g., inversely proportional to the maximum value of the power balance).

In step 1342, controller 110 may increase the discharge threshold. For example, controller 110 may increase the discharge threshold by constant values. Controller 110 may increase the discharge threshold based on a maximum value of a maximum value of the prediction-threshold difference (e.g., proportional to the maximum value of the power balance).

The method described in conjunction with Figure 11D describes a set of conditions, that the occurrence of any one of more of these conditions may lead to modifying the discharge threshold. It is noted that the order in which these conditions are checked is of no significance and that which is shown in Figure 11D is an example only brought herein for the sake of explanation. The conditions described in steps 1332, 1334 and 1336 are optional.

Figure 11D describes, in step 1330, that controller 110 may compare the power draw rating with the discharge threshold. Responsive to the result of this comparison, controller 110 may increase the discharge threshold, or may proceed and check for additional conditions for reducing the discharge threshold. According to the description herein, when evaluating the discharge threshold, controller 110 may determine if the power draw rating is within, above, or below a range of values, which may comprise the discharge threshold. Responsive to the power draw rating being within this range of values, controller 110 may determine not to modify the discharge threshold. Responsive to the power draw rating being above the range of values, controller 110 may determine to increase the discharge threshold. Responsive to the power draw rating being below the range of values, controller 110 may determine to proceed and check for additional conditions for reducing the discharge threshold.

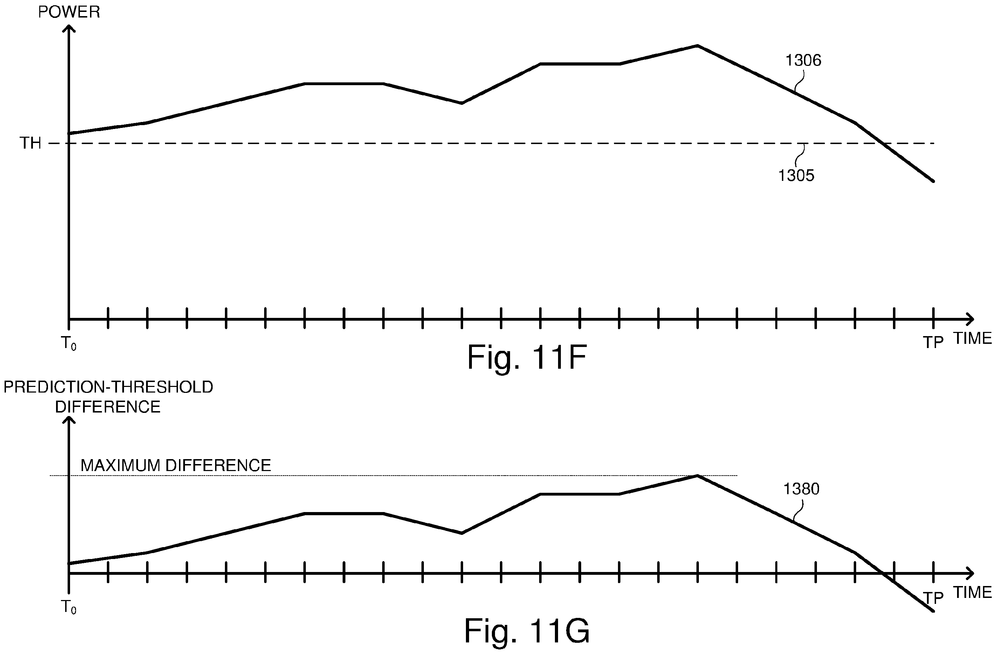

As mentioned above in conjunction with step 1338 in Figure 11D, the discharge threshold may be modified responsive to determining for a predicted storage level of energy storage device 104 is sufficient of a predicted grid power draw. Reference is made to Figures 11E-11H, which may show a method for determining if a predicted storage level of energy storage device 104 is sufficient for a predicted grid power draw (e.g., predicted grid power draw 1306 - Figure 11B), and related graphs. In step 1360, controller 110 may compute, using predicted grid power draw 1306 (e.g., between time To and TP - Figure 11B, 11F and 11G) and the current discharge threshold (e.g., discharge threshold 1305 - Figure 11B) a prediction-threshold difference. For example, controller 110 may subtract discharge threshold 305 from predicted grid power draw 1306 to determine prediction-threshold difference 1380 (Figure 11G). In Figure 11G, a positive value of prediction-threshold difference 1380 may indicate that energy storage device 104 may be discharged. A negative value of prediction-threshold difference 1380 may indicate that energy storage device 104 may be charged.

In step 1362, controller 110 may compare a maximum of the prediction-threshold difference 1380 with a maximum discharge power of energy storage device 104. This may indicate if the maximum discharge power of energy storage device 104 may support the predicted peak demand of premises 118. If the maximum of the prediction-threshold difference 1380 is lower than a maximum discharge power of energy storage device 104, the method may proceed to step 1364. If the maximum of prediction-threshold difference 1380 is not lower than a maximum discharge power of energy storage device 104, the method may proceed to step 1370.

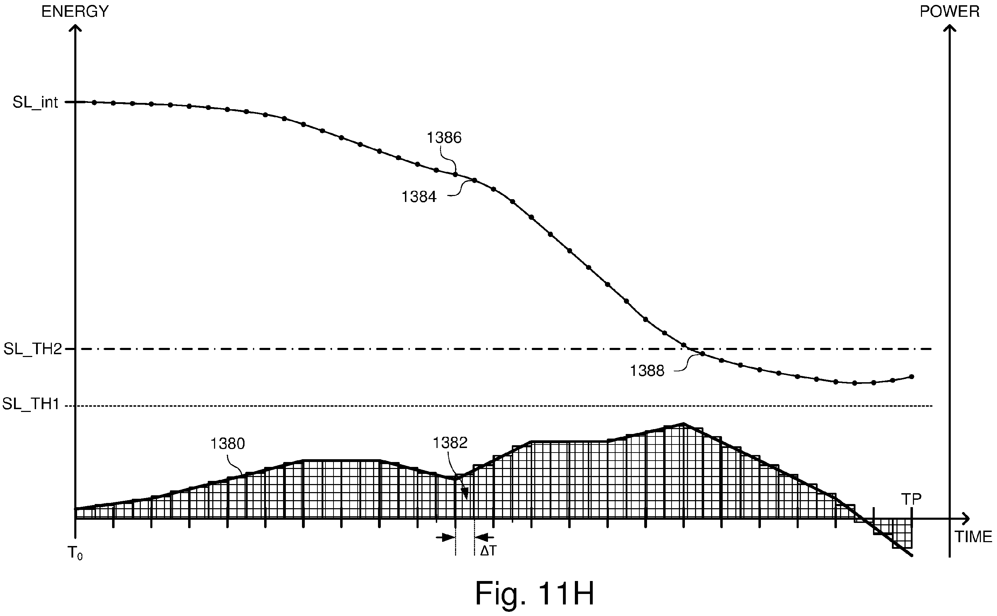

In step 1364, controller 110 may compute, for each time interval, $\Delta T$ (Figure 11H) in the period between $T_0$ and TP and based on prediction-threshold difference 1380, a corresponding predicted energy differential, such as predicted energy differential 1382 (Figure 11H). For example, controller 110 may determine an energy differential for each 15 minutes in the time-period. Controller 110 may determine the predicted energy differential for each time interval by multiplying the time interval $\Delta T$, by a value, $P_i$, of the prediction-threshold difference 1380 in the time interval (e.g., the value of prediction-threshold difference 1380 at the beginning of the time interval, the value of prediction-threshold difference 1380 at the end of the time interval, the value of prediction-threshold difference 1380 at the middle of the time interval, or an average of the prediction-threshold difference 1380 over the time interval $\Delta T$:

$$ED_i = P_i * \Delta T \qquad (49)$$

Equation (46) may define rectangles of a Reiman sum where $\Delta T$ is the partition interval.

In step 1366, controller 110 may compute for each time interval in the time-period, a corresponding intermediate predicted storage level of energy storage device 104. Controller 110 may compute an intermediate predicted storage level based on a previous intermediate predicted storage level computed at a previous time interval, and the corresponding predicted energy differential of the time interval $\Delta T$. For example, controller 110 may subtract the corresponding predicted energy differential of the time interval $\Delta T$ from the previous intermediate predicted storage level, as follows:

$$SoS_i = SoS_{i-1} - ED_i \qquad (50)$$

Controller 110 may use storage level, 'SL_int' in Figure 11H as an initial storage level at the beginning of the time-period. 'SL_int' may be a measured or predicted storage level at the beginning of the time-period. Equation (47) may define a predicted storage level of energy storage 104 for the time-period. With reference to Figure 11H, intermediate predicted storage levels 1384, 1386 and 1388 are examples of intermediate predicted storage levels. For example, controller 110 may compute intermediate predicted storage level 1384 by subtracting the value of predicted energy differential 1382 from intermediate predicted storage level 1386. As can be seen in Figure 11H, if the predicted energy differential is positive, the intermediate predicted storage levels may decrease (e.g., since energy storage device 104 may be discharged). If the predicted energy differential is negative, the intermediate predicted storage levels may increase (e.g., since energy storage device 104 may be charged). Optionally, controller 110 may determine, using the intermediate predicted storage levels, a predicted state of energy function of energy storage device 104 (e.g., by fitting a function to the intermediate predicted storage levels).

In step 1368, controller 110 may determine if one or more of the intermediate predicted storage levels (or one or more values of the predicted state of energy function) is below a minimum energy level threshold. For example, with reference to Figure 11H, storage levels 'SL_TH1' and 'SL_TH2' are two examples of possible minimum storage level thresholds. If the minimum storage level threshold is SL_TH1, all the intermediate storage levels are above this threshold. If the minimum storage level threshold is SL_TH2, intermediate storage level 1388 (and all preceding intermediate storage levels shown in Figure 11H) are below SL_TH2. If one or more of the intermediate predicted storage levels are below a minimum energy level threshold, the method may proceed to step 1370. If no intermediate predicted storage levels are below the minimum energy threshold, the method may proceed to step 1372. It is noted that the minimum energy threshold may be zero.

In step 1370 controller 110 may determine that the predicted storage level is insufficient for the predicted grid power draw over the time-period TP.

In step 1372, controller 110 determines that the predicted storage level is sufficient for the predicted grid power draw over the time-period TP.

In some cases, a power system, such as power system 100, may employ, in addition to energy storage device 104, alternative power sources, such as generator 102-2, and controlled loads, such as heater 118-3, for peak shaving. In such cases, the use of generator 102-2 and of heater 118-3 may be combined with the use of energy storage device 104, using prediction-threshold difference 1380 described above. Reference is now made to Figures 12A-12D. Figure 12A shows prediction-threshold difference 1380, also shown in Figure 11G. Figure 12B shows a graph 1402 of a power vs. time relating to power that may be produced by generator 102-2 during a time-period, $\Delta$T3, (e.g., during which the demand may exceed the threshold). Graph 1402 may be referred to as 'power source generation prediction'. Figure 12C shows a graph 1404 of a power vs. time relating to power that may be consumed by a load such as heater 118-3 during a time-period $\Delta$T4. For example, time-period $\Delta$T4 may relate to a time-period during which heater 118-3 may be turned off. Graph 1404 may be referred to as 'load consumption prediction'. To incorporate generator 102-2 and heater 118-3 with energy storage 104 for peak shaving, and with reference to Figure 12D, the power produced by generator 102-2 and the power consumed by heater 118-3 may be subtracted from prediction-threshold difference 1380 to a generate a combined prediction-threshold difference 1406. Combined prediction-threshold difference 1406 may be employed by controller 110 to determine if the predicted energy storage level of energy storage 104 is sufficient for the predicted grid power draw, similar to as described above in conjunction with Figures 11E-11H. For example, in step 1360 the controller may compute prediction-threshold difference that incorporates power produced by alternative sources and/or loads which may be turned off (e.g., controlled loads).

The method described in conjunction with Figures 11D-11H, for determining if a discharge threshold is to be modified may be, similarly, employed if an alternative power source is employed. For example, in some cases generator 102-2 (Figure 1A), which may be a fuel (e.g., diesel, gasoline, hydrogen) powered generator, may be used for peak shaving. If fuel power generator 102-2 is used, the total energy which the generator may produce, using the fuel stored in the tank of generator 102-2, may be used as the initial storage level described in step 1366 of Figure 11E. Reference is now made to Figure 13 which shows an example of intermediate predicted storage levels 1500, such as intermediate predicted storage levels of fuel power generator 102-2, which may be determined based on a prediction-threshold difference 1502. In the example shown in Figure 13, the fuel power generator 102-2 cannot be charged. Therefore, controller 110 may determine predicted energy differentials (e.g., predicted energy differential 1504), only for the period in which the prediction-threshold difference is positive, and generator 102-2 may supply power. For example, until time T1 the intermediate predicted storage levels have a constant value of Eint, which may relate to the total energy which the generator may produce using the fuel stored in the tank. After time T1, generator 102-2 may supply energy, and the intermediate predicted storage levels of generator 102-2 may reduce. Similar to as described above in conjunction with Figure 11E-11H, if one of the intermediate predicted storage levels (or a value of a function fitted to the intermediate predicted storage levels) is below a minimum energy threshold, controller 110 may determine that the fuel stored in the tank of generator 102-2 might not be sufficient for the predicted grid power draw.

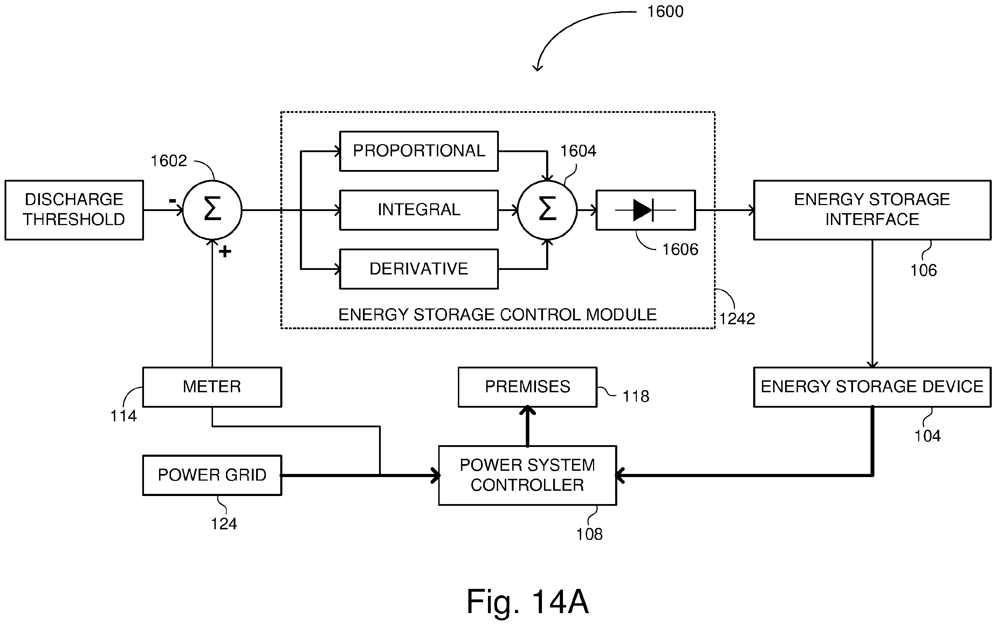

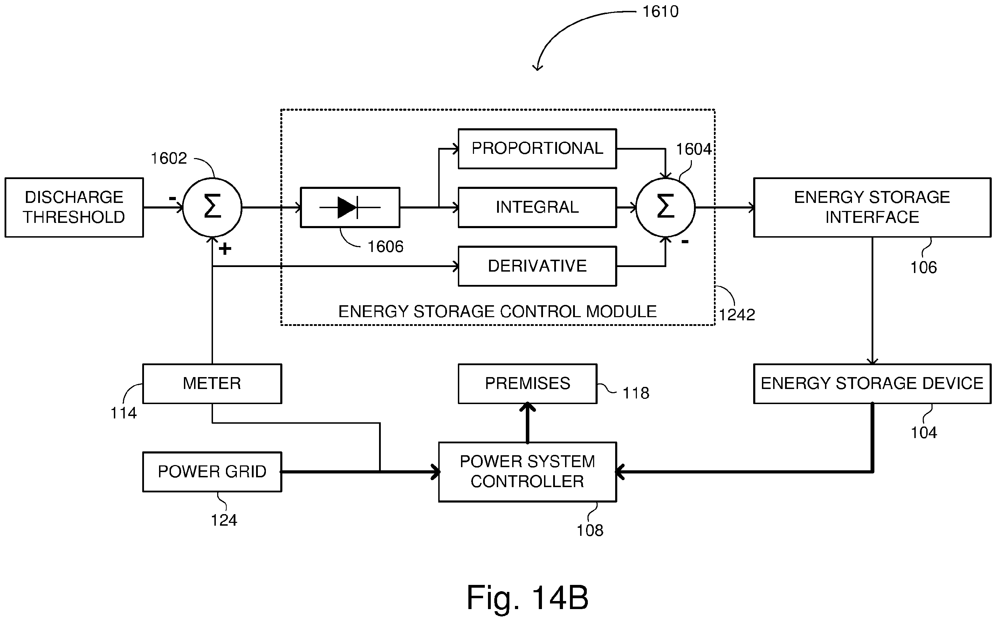

Reference is made to Figures 14A and 14B. Figure 14A shows an example of a system 1600 for controlling an energy storage device 104 using an energy storage control module 1242. Figure 14B shows an example of a system 1610 for controlling an energy storage device 104 using an energy storage control module 1242. The energy storage control modules may use a PID control model. In systems 1600 and 1610, power system controller 108 (e.g., using power converter 112 - Figure 1B) may reduce the current, and therefore the power drawn from power grid 124. Therefore, in a case where the power demand by premise 118 is constant, if energy storage device 104 discharges, the power drawn from power grid 124 may decrease. In systems 1600 and 1610, discharging energy storage device 104 may affect the power drawn from grid 124. Systems 1600 and 1610 may limit drawing power from grid 124 in case the power demand by premises 118 increases.

Meter 114 may measure the power drawn from power grid 124 and may generate grid power draw measurements. Summer 1602 may subtract the discharge threshold from the power draw measurements to generate a power draw error. Referring to Figure 14A, energy storage control module 1242 may receive the power draw error and generate (e.g., such as using a PID control model by summing using summer 1604) a proportional value, an integral value, and a derivative value of the power draw error. Summer 1604 may produce a power draw rating. In the example shown in Figure 14A, the power draw rating may be limited by limiter 1606 to positive values only. In some instances, limiting the power draw rating to positive values only may be desirable if energy storage device 104 should always discharge to reduce the peak demand of premise 118 from grid 124, while charging energy storage device 104 may be affected by other considerations. The output from energy storage control module 1242 may be provided to storage interface 106, which may control energy storage device 104 to discharge based on this output.

Referring to Figure 14B, in some instances the discharge threshold may be modified. Such a modification of the discharge threshold may affect the derivative term of the power draw error (which may also be referred to as "setpoint kick"). To avoid a setpoint kick, only the proportional and integral modules in the PID control model may receive the power draw error from summer 1602. In some instances, the derivative module may the power draw measurements directly from meter 114. Summer 1604 may sum the proportional value of the power draw error, the integral value of the power draw error, and a negative of the derivative of the power draw measurements. In the configuration shown in Figure 14B, limiter 1606 may be applied directly to the power draw error such that only positive values of the power draw error are processed.

One or more aspects of the disclosure may be embodied in computer-usable data and computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like. Particular data structures may be used to more effectively implement one or more aspects of the disclosure, and such data structures are contemplated within the scope of computer executable instructions and computer-usable data described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Hereinafter, various characteristics will be highlighted in a set of numbered clauses or paragraphs. These characteristics are not to be interpreted as being limiting, but are provided merely as a highlighting of some characteristics as described herein, without suggesting a particular order of importance or relevancy of such characteristics.

Clause 1: A method comprising:

determining, by a server, and for a timestep in a prediction time-period, a storage operational mode from a plurality of storage operational modes,

wherein the determining uses an optimization process employing power system constraints and parameters, and produces values for one or more storage mode variables which optimize an objective function for one or more energy storage devices,
wherein the values of the one or more storage mode variables define the storage operational mode; and

providing, by the server and to a power system controller, the defined storage operational mode, for altering an amount of energy in an energy storage device of the one or more energy storage devices, based on the storage operational mode.

Clause 2: The method of clause 1, wherein the storage operational mode comprises a charge mode and a discharge mode,

wherein each charge mode defines an energy charge value of the energy to be charged to the energy storage device, and
wherein each discharge mode defines an energy discharge value of the energy to be discharged from the energy storage device,
wherein one of the energy charge level or the energy discharge level is substantially zero.

Clause 3: The method of any one of clauses 1-2, wherein the plurality of storage operational modes comprise:

a first storage operational mode for charging or discharging the energy storage device is based on Maximum Self Consumption;
a second storage operational mode for charging or discharging the energy storage device is based on minimizing import from a grid;
a third storage operational mode for charging or discharging the energy storage device is based on maximizing export to the grid;
a fourth storage operational mode for charging or discharging the energy storage device is based on charging excess energy from a power source;
a fifth storage operational mode for charging or discharging the energy storage device is based on charging from the power source;
a sixth storage operational mode for charging or discharging the energy storage device is based on charging from the power source or from the grid; and
a seventh storage operational mode for charging or discharging the energy storage device comprises disabling the charging and discharging of the energy storage device.

Clause 4: The method of clause 3, wherein each storage mode of the plurality of storage operational modes is defined by a corresponding charge mode of a plurality of charge modes, and a corresponding discharge mode of a plurality of discharge modes,

wherein the plurality of charge modes comprise:

charge excess PV;
charge after self consumption;
charge maximum PV;
charge from PV and grid; and
charge disable,

wherein the plurality of discharge modes comprise:

discharge for self consumption;
discharge maximum possible; and
discharge disable.

Clause 5: The method of clause 4, wherein the storage mode variables comprise a plurality of charge mode variables and a plurality of discharge mode variables,

wherein the plurality of charge mode variables correspond to the plurality of charge modes, and
wherein the plurality of discharge mode variables correspond to the plurality of discharge modes.

Clause 6: The method of any one of clauses 1-5, wherein the objective function comprises a sum of costs of charging and discharging the energy storage device, each cost in the sum of costs corresponding to a timestep in of a plurality of timesteps in the prediction time-period.

Clause 7: The method of clause 6, wherein a cost of charging and discharging the energy storage device for one or more timesteps of the plurality of timesteps comprises a sum of weighted costs wherein each weighted cost is weighted by a probability of a power state.

Clause 8: The method of any one of clauses 6-7, wherein the objective function comprises:

a cost for importing energy from a grid;
a cost for exporting energy to the grid;
a cost for charging the energy storage device; and
a cost for discharging the energy storage device.

Clause 9: The method of any one of clauses 6-8, wherein the objective function comprises:

$$Cost\ for\ t_0 = \sum_{t=0}^{T} \sum_{s=1}^{S} (import\_price_t * \boldsymbol{import}_t - export_{price_t} * \boldsymbol{export}_t$$
$$+ charge\_cost * \boldsymbol{charge}_t + discharge\_cost * \boldsymbol{discharge}_t) * P(s)$$

Clause 10: The method of any one of clauses 1-9, wherein the power system constraints and variables comprise constraints and variables relating to peak demand charge,

the objective function further comprises a cost for exceeding peak demand,
wherein the determining further comprises, using the optimization process, values for the variables related to peak demand charge.

Clause 11: The method of any one of clauses 1-9, wherein the objective function further comprises a cost for exceeding peak demand.

Clause 12: The method of any one of clauses 10 and 11, wherein objective function comprises:

$$Cost\ for\ t_0 = \sum_{t=0}^{T} \sum_{s=1}^{S} [(import\_price_t * \boldsymbol{import_t}) - (export_{price_t} * \boldsymbol{export_t}) +$$
$$(charge\_cost * \boldsymbol{charge_t}) + (discharge\_cost * \boldsymbol{discharge_t}) +$$
$$(\boldsymbol{peak\_average\_power} * peak\_demand\_charge)] * P(s).$$

Clause 13: The method of any one of clauses 1-12, wherein the power system constraint and parameters further comprise constraints and parameters related to load devices,

wherein the power system variables further comprise one or more load device operational mode variables,
wherein the objective function further a comprises a term relating to a cost gain obtained from charging the load device above a target.
wherein, the determining by the server further comprises determining, using the optimization process, employing the power system constraints and parameters, values for the one or more load devices operational mode variables,
wherein the values of the one or more load devices operational mode variables define a load devices operational mode,
wherein the providing by the server, further comprises providing, to the power system controller, the defined load device operational mode, for charging energy to the load device.

Clause 14: The method of clause 13, wherein the load devices are one or more of:

at least one electrical vehicle;
at least one water heater;
at least one refrigerator; and
at least one air conditioner.

Clause 15: The method of any one of clauses 13 and 14, wherein the load devices operational modes comprise:

a first load device operational mode comprising disabling load device charging;
a second load device operational mode comprising charging the load device from the power source;
a third load device operational mode comprising charging the load device from the power source and from the energy storage; and
a fourth load device operational mode comprising charging the load device with an exact amount of energy.

Clause 16: The method of any one of clauses 13-15, wherein the objective function is as described in Equation (46).

Clause 17: The method of any one of clauses 1-16, wherein the optimization process is one of:

Linear programming;
Genetic algorithm;
Hill climbing; and
Branch and bound.

Clause 18: The method of any one of clauses 1-18, wherein the power system constraints and parameters are defined in Equations (3)-(39) and Equations (43)-(45).

Clause 19: A server comprising:

one or more processors; and
memory storing executable instructions that, when executed by the one or more processors, configure the server to:

determine for a timestep in a prediction time-period, a storage operational mode from a plurality of storage operational modes,

wherein the determining uses an optimization process employing the power system constraints and parameters, and produces values for one or more storage mode variables which optimize an objective function, and

wherein the values of the one or more storage mode variables define the storage operational mode; and

provide to a power system controller, the storage operational mode, for altering an amount of energy in an energy storage device, based on the storage operational mode.

Clause 20: The server of clause 19, wherein the storage operational mode comprises a charge mode and a discharge mode,

wherein each charge mode defines an energy charge value of the energy to be charged to the energy storage device, and

wherein each discharge mode defines an energy discharge value of the energy to be discharged from the energy storage device,

wherein one of the energy charge level or the energy discharge level is substantially zero.

Clause 21: The server of any one of clauses 19-20, wherein the plurality of storage operational modes comprise:

a first storage operational mode for charging or discharging the energy storage device is based on Maximum Self Consumption;

a second storage operational mode for charging or discharging the energy storage device is based on minimizing import from a grid;

a third storage operational mode for charging or discharging the energy storage device is based on maximizing export to the grid;

a fourth storage operational mode for charging or discharging the energy storage device is based on charging excess energy from a power source;

a fifth storage operational mode for charging or discharging the energy storage device is based on charging from the power source;

a sixth storage operational mode for charging or discharging the energy storage device is based on charging from the power source or from the grid; and

a seventh storage operational mode for charging or discharging the energy storage device comprises disabling the charging and discharging of the energy storage device.

Clause 22: The server of clause 21, wherein each storage mode of the plurality of storage operational modes is defined by a corresponding charge mode of a plurality of charge modes, and a corresponding discharge mode of a plurality of discharge modes,

wherein the plurality of charge modes comprise:

charge excess PV;
charge after self consumption;
charge maximum PV;
charge from PV and grid; and
charge disable,

wherein the plurality of discharge modes comprise:

discharge for self consumption;
discharge maximum possible; and
discharge disable.

Clause 23: The server of clause 22, wherein the storage mode variables comprise a plurality of charge mode variables and a plurality of discharge mode variables,

wherein the plurality of charge mode variables correspond to the plurality of charge modes, and
wherein the plurality of discharge mode variables correspond to the plurality of discharge modes.

Clause 24: The server of any one of clauses 19-23, wherein the objective function comprises a sum of costs of charging and discharging the energy storage device, each cost in the sum of costs corresponding to a timestep in of a plurality of timesteps in the prediction time-period.

Clause 25: The server of clause 24, wherein a cost of charging and discharging the energy storage device for one or more timesteps of the plurality of timesteps comprises a sum of weighted costs wherein each weighted cost is weighted by a probability of a power state.

Clause 26: The server of any one of clauses 24-25, wherein the objective function comprises:

a cost for importing energy from a grid;
a cost for exporting energy to the grid;
a cost for charging the energy storage device; and
a cost for discharging the energy storage device.

Clause 27: The server of any one of clauses 24-26, wherein the objective function comprises:

$$Cost\ for\ t_0 = \sum_{t=0}^{T}\sum_{s=1}^{S}(import\_price_t * \boldsymbol{import}_t - export_{price_t} * \boldsymbol{export}_t$$

$$+ charge\_cost * \boldsymbol{charge}_t + discharge\_cost * \boldsymbol{discharge}_t) * P(s)$$

Clause 28: The server of any one of clauses 19-27, wherein the power system constraints and variables comprise constraints and variables relating to peak demand charge,

the objective function further comprises a cost for exceeding peak demand,
wherein the determining further comprises, using the optimization process, values for the variables related to peak demand charge.

Clause 29: The server of any one of clauses 19-28, wherein the objective function further comprises a cost for exceeding peak demand.

Clause 30: The server of any one of clause 28 and 29, wherein objective function comprises:

$$Cost\ for\ t_0 = \sum_{t=0}^{T}\sum_{s=1}^{S}[(import\_price_t * \boldsymbol{import}_t) - (export_{price_t} * \boldsymbol{export}_t) +$$

$$(charge\_cost * \boldsymbol{charge}_t) + (discharge\_cost * \boldsymbol{discharge}_t) +$$

$$(\boldsymbol{peak\_average\_power} * peak\_demand\_charge)] * P(s).$$

Clause 31: The server of any one of clauses 19-30, wherein the power system constraint and parameters further comprise constraints and parameters related to load devices,

wherein the power system variables further comprise one or more load device operational mode variables,
wherein the objective function further a comprises a term relating to a cost gain obtained from charging the load device above a target.
wherein, the determining by the server further comprises determining, using the optimization process, employing the power system constraints and parameters, values for the one or more load devices operational mode variables,
wherein the values of the one or more load devices operational mode variables define a load devices operational mode,
wherein the providing by the server, further comprises providing, to the power system controller, the defined load device operational mode, for charging energy to the load device.

Clause 32: The server of clause 31, wherein the load devices are one or more of:

at least one electrical vehicle;
at least one water heater;
at least one refrigerator; and
at least one air conditioner.

Clause 33: The server of any one of clause 31 and 32, wherein the load devices operational modes comprise:

a first load device operational mode comprising disabling load device charging;
a second load device operational mode comprising charging the load device from the power source;
a third load device operational mode comprising charging the load device from the power source and from the energy storage; and
a fourth load device operational mode comprising charging the load device with an exact amount of energy.

Clause 34: The server of any one of clauses 31-33, wherein the objective function is as described in Equation (49).

Clause 35: The server of any one of clauses 19-34, wherein the optimization process is one of:

Linear programming;
Genetic algorithm;
Hill climbing; and
Branch and bound.

Clause 36: The server of any one of clauses 1-35, wherein the power system constraints and parameters are defined in Equations (3)-(39) and Equations (45)-(47).

Clause 37: A method comprising:

receiving, by a power system controller, and from a server, a storage operational mode of a plurality of storage operational modes;
determining, by the power system controller, and for a timestep in a prediction time-period, a maximum inverter energy output, an energy production prediction, and an energy consumption prediction;
determining for the timestep, and based on the storage operational mode, using the maximum inverter energy output, the energy production prediction, and on the energy consumption prediction, and storage device parameters of an energy storage device, an energy charge value and an energy discharge value; and
altering, by the power system controller, energy of the energy storage device based on the energy charge value and the energy discharge value.

Clause 38: The method of clause 37, wherein the altering of the energy of the energy storage device comprises;

charging the energy storage by an energy amount corresponding to the energy charge value based on the energy charge value being larger than zero and the energy discharge value being equal to zero; and
discharging the energy storage by an energy amount corresponding to the energy discharge value based on the energy discharge value being larger than zero and the energy discharge value being equal to zero.

Clause 39: The method of any one of clauses 37-38, wherein each storage mode of the plurality of storage operational modes is defined by a corresponding charge mode of a plurality of charge modes, and a corresponding discharge mode of a plurality of discharge modes,

wherein the plurality of charge modes comprise:

charge excess PV;
charge after self consumption;
charge maximum PV;
charge from PV and grid; and
charge disable,

wherein the plurality of discharge modes comprise:

discharge for self consumption;
discharge maximum possible; and
discharge disable,

wherein the determining of the energy charge value is based a row corresponding to the corresponding charge mode in Table 5,
wherein the determining of the energy discharge value is based a row corresponding to the corresponding discharge mode in Table 6.

Clause 40: The method of any one of clauses 37-39, wherein the plurality of storage operational modes comprise:

a first storage operational mode for charging or discharging the energy storage device is based on Maximum Self Consumption;
a second storage operational mode for charging or discharging the energy storage device is based on minimizing import from a grid;
a third storage operational mode for charging or discharging the energy storage device is based on maximizing export to the grid;
a fourth storage operational mode for charging or discharging the energy storage device is based on charging excess energy from a power source;
a fifth storage operational mode for charging or discharging the energy storage device is based on charging from the power source;
a sixth storage operational mode for charging or discharging the energy storage device is based on charging from the power source or from the grid; and
a seventh storage operational mode for charging or discharging the energy storage device comprises disabling the charging and discharging of the energy storage device.

Clause 41: The method of clause 40, wherein based on the received storage operational mode corresponding to the second storage operational mode or the third storage operational modes, the altering of the energy of the energy storage device comprises:

based on the energy production prediction being larger than a maximum controller output:

determining an amount of energy to charge the energy storage device; and
charging the energy storage device by the determined amount of energy.

based on the energy production prediction being larger than a maximum controller output:

determining an amount of energy to discharge from the energy storage device; and
discharging the energy storage device by the determined amount of energy.

Clause 42: The method of any one of clauses 40-41, wherein based on the received storage operational mode corresponding to the first operational modes, the altering or the energy in the energy storage device comprises:

based on energy production prediction being larger than one of:

the maximum controller output; or
the energy consumption prediction:

determining an amount of energy to charge the energy storage device; and
charging the energy storage device by the determined amount of energy.

based on energy production prediction being smaller than the maximum controller output, and smaller than the energy consumption prediction:

determining an amount of energy to discharge from the energy storage device; and
discharging the energy storage device by the determined amount of energy.

Clause 43: The method of any one of clauses 40-42, wherein, based on the received storage operational mode corresponding to the fourth fifth or sixth storage operational modes, the altering comprises:

determining an amount of energy to charge the energy storage device; and
charging the energy storage device by the determined amount of energy.

Clause 44: The method of any one of clauses 37-43, wherein the receiving, by the power system controller further comprises receiving, from the server, a load device operational mode from a plurality of load device operational modes,

wherein the load devices are one or more of:

at least one electrical vehicle;
at least one water heater;
at least one refrigerator; and
at least one air conditioner, and

wherein the load devices operational modes comprise:

a first load device operational mode comprising disabling load device charging;
a second load device operational mode comprising charging the load device from the power source;
a third load device operational mode comprising charging the load device from the power source and from the energy storage; and
a fourth load device operational mode comprising charging the load device with an exact amount of energy.

Clause 45: The method of clause 44, wherein the power system controller charges the load device based on the defined load device operational mode.

Clause 46: A system comprising:

an energy storage device;
a power source;
and power system controller comprising:

a power converter configured to convert power to a load, from one or more of the power source and the energy storage device;
a communications interface configured to receive from a server a storage operational mode from a plurality of storage operational modes for altering an energy of the energy storage device;
a controller configured to:

determine for a timestep in a prediction time-period, a maximum converter energy output of the maximum energy a power converter can output during the timestep, an energy production prediction of energy predicted to be produced by a power source during the timestep, and an energy consumption prediction of energy predicted to be consumed by a load during the timestep;
determine for the timestep, and based on the storage operational mode, using the maximum inverter energy output, the energy production prediction, and on the energy consumption prediction, and storage device parameters of the energy storage device, an energy charge value and an energy discharge value; and
alter energy of the energy storage device based on the energy charge value and the energy discharge value; and

a server comprising:

one or more processors; and
memory storing executable instructions that, when executed by the one or more processors, configure the server to:

determine for a timestep in a prediction time-period, the storage operational mode from a plurality of storage operational modes,

wherein the determining uses an optimization process employing the power system constraints and parameters, and produces values for one or more storage mode variables which optimize an objective function, and

wherein the values of the one or more storage mode variables define the storage operational mode; and

provide to a power system controller, the storage operational mode, for altering an amount of energy in an energy storage device, based on the storage operational mode.

Clause 47: A system comprising:

an energy storage device;

a power source;

and power system controller comprising:

a power converter configured to convert power to a load, from one or more of the power source and the energy storage device;

a communications interface configured to receive from a server a storage operational mode from a plurality of storage operational modes for altering an energy of the energy storage device;

a controller configured to:

determine for a timestep in a prediction time-period, a maximum converter energy output of the maximum energy a power converter can output during the timestep, an energy production prediction of energy predicted to be produced by a power source during the timestep, and an energy consumption prediction of energy predicted to be consumed by a load during the timestep;

determine for the timestep, and based on the storage operational mode, using the maximum inverter energy output, the energy production prediction, and on the energy consumption prediction, and storage device parameters of the energy storage device, an energy charge value and an energy discharge value; and

alter energy of the energy storage device based on the energy charge value and the energy discharge value.

Clause 48: The system of clause 47, wherein the controller is configured to alter the energy of the energy storage device by:

charging the energy storage by an energy amount corresponding to the energy charge value based on the energy charge value being larger than zero and the energy discharge value being equal to zero; and

discharging the energy storage by an energy amount corresponding to the energy discharge value based on the energy discharge value being larger than zero and the energy discharge value being equal to zero.

Clause 49: The system of any one of clauses 47-48, wherein each storage mode of the plurality of storage operational modes is defined by a corresponding charge mode of a plurality of charge modes, and a corresponding discharge mode of a plurality of discharge modes,

wherein the plurality of charge modes comprise:

charge excess PV;
charge after self consumption;
charge maximum PV;
charge from PV and grid; and
charge disable,

wherein the plurality of discharge modes comprise:

discharge for self consumption;
discharge maximum possible; and

discharge disable,

wherein the controller is configured to determine the energy charge value based a row corresponding to the corresponding charge mode in Table 5,
wherein the controller is configured to determine the energy discharge value based a row corresponding to the corresponding discharge mode in Table 6.

Clause 50: The system of any one of clauses 47-49, wherein the plurality of storage operational modes comprise:

a first storage operational mode for charging or discharging the energy storage device is based on Maximum Self Consumption;
a second storage operational mode for charging or discharging the energy storage device is based on minimizing import from a grid;
a third storage operational mode for charging or discharging the energy storage device is based on maximizing export to the grid;
a fourth storage operational mode for charging or discharging the energy storage device is based on charging excess energy from a power source;
a fifth storage operational mode for charging or discharging the energy storage device is based on charging from the power source;
a sixth storage operational mode for charging or discharging the energy storage device is based on charging from the power source or from the grid; and
a seventh storage operational mode for charging or discharging the energy storage device comprises disabling the charging and discharging of the energy storage device.

Clause 51: The system of clause 50, wherein based on the communications interface receiving the storage operational mode corresponding to the second storage operational mode or the third storage operational modes, the controller is configured, based on the energy production prediction being larger than a maximum controller output, to alter the energy of the energy storage device by:

determining an amount of energy to charge the energy storage device; and
charging the energy storage device by the determined amount of energy.

Clause 52: The system of any one of clauses 50-51, wherein based on the communications interface receiving the storage operational mode corresponding to the second storage operational mode or the third storage operational modes, the controller is configured to, based on the energy production prediction being larger than a maximum controller output, alter the energy of the energy storage device by:

determining an amount of energy to discharge from the energy storage device; and
discharging the energy storage device by the determined amount of energy.

Clause 53: The system of any one of clauses 50-52, wherein based on the communications interface receiving the storage operational mode corresponding to the first operational modes, and based on energy production prediction being larger than one of:

the maximum controller output; or
the energy consumption prediction:
the controller is configured to alter the energy of the energy storage device by:

determining an amount of energy to charge the energy storage device; and
charging the energy storage device by the determined amount of energy.

Clause 54: The system of any one of clauses 50-53, wherein based on the communications interface receiving the storage operational mode corresponding to the first operational modes, and based on energy production prediction being smaller than the maximum controller output, and further based on one of:

the energy consumption prediction being larger than the maximum controller output; or
the energy production prediction being larger than the energy consumption prediction:
the controller is configured to alter the energy of the energy storage device by:

determining an amount of energy to discharge from the energy storage device; and
discharging the energy storage device by the determined amount of energy.

Clause 55: The system of any one of clauses 50-54, wherein, based on the communications interface receiving the storage operational mode corresponding to the fourth, fifth or sixth storage operational modes, the controller is configured to alter the energy storage device by:

determining an amount of energy to charge the energy storage device; and
charging the energy storage device by the determined amount of energy.

Clause 56: The system of any one of clauses 47-55, wherein the energy storage device comprises one or more of:

a battery;
an electrical vehicle; and
a thermal storage.

Clause 57: The system of any one of clauses 47-56, wherein the power source comprises one or more of:

a photovoltaic power source;
a wind turbine; and
a generator.

Clause 58: The system of any one of clauses 47-57, further comprising a storage interface configured to charge or discharge the energy storage device,
wherein the controller is configured to alter the energy of the energy storage device by controlling the storage interface to charge or discharge the energy storage device.

Clause 59: The system of any one of clauses 47-58, further comprising a user interface configured to present information to a user, wherein the information comprises one or more of:

the storage operational mode; and
total savings.

Clause 60: A method comprising:

configuring a processor for solving an optimization cost function using variables, parameters, and constraints that define the optimization cost function, which includes:

$$Cost\ for\ T_0 = \sum_{t=0}^{T} \llbracket \sum_{s=1}^{S} \left( import_{price_t} \rrbracket * \boldsymbol{import_t} - export_{price_t} * \right.$$

$$\left. \boldsymbol{export_t} + charge_{cost} * \boldsymbol{charge_t} + discharge_{cost} * \boldsymbol{discharge_t} \right) * P(s);$$

determining one of a plurality of storage operational modes that optimally solves the optimization cost function; and
altering energy of an energy storage device based on the determined storage operational mode.

Clause 61: The method of clause 60, wherein import price includes a cost of importing energy from one or more selective energy sources during a timestep t and import includes an amount of energy being imported during the timestep t.

Clause 62: The method of any one of clauses 60-61, wherein export price includes a received cost of exporting energy to a grid during a timestep t and export includes an amount of energy being exported during the timestep t.

Clause 63: The method of any one of clauses 60-62, wherein charge cost includes a cost for charging the energy storage device during a timestep t and charge includes an amount of energy being charged during the timestep t.

Clause 64: The method of any one of clauses 60-63, wherein discharge cost includes a cost for discharging the energy storage device during a timestep t and discharge includes an amount of energy being discharged during the timestep t.

Clause 65: The method of any one of clauses 60-64, wherein P(s) includes a probability of a power state that is used to weight the optimization cost function.

Clause 66: The method of any one of clauses 60-65, wherein altering the energy of the energy storage device includes either:

charging the energy storage device based on a corresponding charge mode; or
discharging the energy storage device based on a corresponding discharge mode.

Clause 67: The method of any one of clause 61-66, wherein the one or more selective energy sources includes a grid, one or more photovoltaic energy sources, and one or more alternative energy sources.

Clause 68: The method of clause 67, further comprising:
importing the energy from the grid using an energy supplier of one or more energy suppliers based on which of the one or more energy suppliers provides a lowest energy cost.

Clause 69: The method of any one of clause 67-68, wherein one of the one or more alternative energy sources is a wind turbine.

Clause 70: The method of clause 69, further comprising:
importing the energy from the wind turbine based on windy weather during the timestep t.

Clause 71: The method of clause 62, further comprising:
exporting the energy to the grid based on determining that the energy storage device has reached a maximum storage threshold and there is an excess of the energy.

Clause 72: The method of clause 63, wherein the cost for charging the energy storage device accounts for capacity degradation associated with charging the energy storage device over a period of time.

Clause 73: The method of clause 64, wherein the cost for discharging the energy storage device accounts for capacity degradation associated with discharging the energy storage device over a period of time.

Clause 74: The method of clause 65, wherein the power state includes a probabilistic distribution of:
{P(high consumption), P(medium consumption), P(low consumption)} OR {P(high photovoltaic (PV)), P(medium PV), P(low PV)} OR {joint probabilities of energy consumption AND PV}.

Clause 75: The method of clause 74, wherein {P(high consumption), P(medium consumption), P(low consumption)} includes a probabilistic distribution of an expected amount of energy to be consumed.

Clause 76: The method of any one of clauses 74-75, wherein {P(high photovoltaic (PV)), P(medium PV), P(low PV)} includes a probabilistic distribution of an expected amount of energy to be produced by one or more photovoltaic energy sources.

Clause 77: The method of any one of clauses 74-76, wherein {joint probabilities of energy consumption AND PV} includes a joint probabilistic distribution of an expected amount of energy to be consumed and an expected amount of energy to be produced by one or more photovoltaic energy sources.

Clause 78: The method of clause 66, further comprising:
discharging the energy storage device based on determining that a power outage has occurred.

Clause 79: The method of any one of clauses 66 and 78, further comprising:
discharging the energy storage device based on the energy storage device having a maximum amount of stored energy.

Clause 80: The method of any one of clauses 60-79, wherein the plurality of storage operational modes includes:

a first storage operational mode for altering the energy of the energy storage device based on maximum self consumption;

a second storage operational mode for altering the energy of the energy storage device based on minimizing import from a grid;

a third storage operational mode for altering the energy of the energy storage device based on maximizing export to the grid;

a fourth storage operational mode for altering the energy of the energy storage device based on charging excess energy from a power source;

a fifth storage operational mode for altering the energy of the energy storage device based on charging from the power source;

a sixth storage operational mode for altering the energy of the energy storage device based on charging from the power source or the grid; and

a seventh storage operational mode for altering the energy of the energy storage device based on disabling the charging and discharging of the energy storage device.

Clause 81: The method of clause 80, wherein, based on determining the second storage operational mode or the third storage operational mode, the altering further comprises:

determining a maximum controller energy output during a timestep t based on a maximum controller power output;

determining an energy production prediction during the timestep t based on a power production prediction; and charging the energy storage device, based on the energy production prediction being greater than the maximum controller energy output.

Clause 82: The method of any one of clauses 80-81, wherein, based on determining the second storage operational mode or the third storage operational mode, the altering further comprises:

determining a maximum controller energy output during a timestep t based on a maximum controller power output;

determining an energy production prediction during the timestep t based on a power production prediction; and discharging the energy storage device, based on the energy production prediction being less than the maximum controller energy output.

Clause 83: The method of any one of clauses 80-82, wherein, based on determining the first storage operational mode, the altering further comprises:

determining an energy consumption prediction during a timestep t based on a power consumption prediction; and charging the energy storage device based on an energy production prediction being greater than:

a maximum controller energy output; or
the energy consumption prediction.

Clause 84: The method of any one of clauses 80-83, wherein, based on determining the first storage operational mode, the altering further comprises:

determining an energy production prediction during a timestep t based on a power production prediction;
determining an energy consumption prediction during the timestep t based on a power consumption prediction;
discharging the energy storage device, based on the energy production prediction being less than a maximum controller energy output, and further based on:

the energy consumption prediction being greater than the maximum controller energy output; or
the energy production prediction being greater than the energy consumption prediction.

Clause 85: The method of any one of clauses 80-84, wherein, based on determining the fourth storage operational mode, fifth storage operational mode, or sixth storage operational mode, the altering further comprises charging the energy storage device.

Clause 86: The method of any one of clauses 60-85, wherein the optimization cost function relates to a monetized cost of altering the energy of the energy storage device.

Clause 87: A method comprising:

configuring a processor for solving an optimization cost function using parameters and constraints that define the optimization cost function, which includes, during a timestep t:

determining import price, wherein the import price includes a cost of import energy from one or more selective energy sources;
determining export price, wherein the export price includes a cost of exporting energy to a grid;
determining charge cost, wherein the charge cost includes a cost for charging an energy storage device;
determining discharge cost, wherein the discharge cost includes a cost for discharging the energy storage device;
determining a probability of a power state that is used to weight the import price, the export price, the charge cost, and the discharge cost;
determining a total cost by subtracting the export price from the import price, and by adding the charge cost and the discharge cost; and
weighting the total cost by the probability of the power state;

determining one of a plurality of storage operational modes that optimally solves the optimization cost function; and
altering energy of the energy storage device based on the determined storage operational mode.

Clause 88: The method of clause 87, wherein the power state includes a probabilistic distribution of:

an expected amount of energy to be consumed;
an expected amount of energy to be produced by one or more photovoltaic energy sources; or
the expected amount of energy to be consumed and the expected amount of energy to be produced by the one or more photovoltaic energy sources.

Clause 89: The method of clause 87, wherein altering the energy of the energy storage device includes either:

charging the energy storage device based on a corresponding charge mode; or
discharging the energy storage device based on a corresponding discharge.

Clause 90: A system comprising:

a power source;
an energy storage device; and
a power system controller, coupled to the power source, to the energy storage device, to a grid, and to a load, wherein the power system controller is configured to:

solve an optimization cost function using parameters and constraints that define the optimization cost function, which includes:

$$Cost\ for\ T_0 = \sum_{t=0}^{T} \llbracket \sum_{s=1}^{S} \left( import_{price_t} \rrbracket * \boldsymbol{import_t} - export_{price_t} * \right.$$

$$\left. \boldsymbol{export_t} + charge_{cost} * \boldsymbol{charge_t} + discharge_{cost} * \boldsymbol{discharge_t} \right) * P(s);$$

determine one of a plurality of storage operational modes that optimally solves the optimization cost function; and
alter energy of the energy storage device based on the determined storage operational mode.

Clause 91: The system of clause 90, wherein import price includes a cost of importing energy during a timestep t and import includes an amount of energy being imported during the timestep t.

Clause 92: The system of any one of clauses 90-91, wherein export price includes a received cost of exporting energy to the grid during a timestep t and export includes an amount of energy being exported during the timestep t.

Clause 93: The system of any one of clauses 90-92, wherein charge cost includes a cost for charging the energy storage device during a timestep t and charge includes an amount of energy being charged during the timestep t.

Clause 94: The system of any one of clauses 90-93, wherein discharge cost includes a cost for discharging the energy storage device during a timestep t and discharge includes an amount of energy being discharged during the timestep t.

Clause 95: The system of any one of clauses 90-93, wherein P(s) includes a probability of a power state that is used to weight the optimization cost function.

Clause 96: The system of any one of clauses 90-93, wherein the power system controller is further configured to alter the energy of the energy storage device to:

charge the energy storage device based on a corresponding charge mode; or
discharge the energy storage device based on a corresponding discharge mode.

Clause 97: The system of clause 96, wherein the power system controller is further configured to charge the energy storage device from the power source or the grid.

Clause 98: The system of any one of clauses 96-97, wherein the power system controller is further configured to discharge the energy storage device to the load or the grid.

Clause 99: The system of any one of clauses 90-98, including:
a remote server that is coupled to the power system controller, wherein the remote server is configured to:

solves the optimization cost function;
determines the storage operational mode; and
transmits the storage operational mode to the power system controller.

Clause 100: The system of clause 99, wherein the power system controller alters the energy of the energy storage device based on the storage operational mode that was transmitted by the remote server.

Clause 101: A system comprising:

an energy storage device;
a sensor configured to measure grid power draw to produce grid power draw measurements;
a power system controller coupled to the energy storage device and to the sensor, wherein the power system controller is configured to:

determine, based on the grid power draw measurements for a measurement interval, a power draw rating;
reduce a discharge threshold responsive to:

determining that the power draw rating is smaller than the discharge threshold; and
determining that a plurality of intermediate predicted storage levels of the energy storage device is above a minimum energy level threshold of the energy storage device, wherein the plurality of intermediate predicted storage levels correspond to a plurality of time intervals in a prediction time-period.

Clause 102: The system of clause 101, wherein the power system controller is configured to determine the plurality of intermediate predicted storage levels by:

computing a prediction-threshold difference for the prediction time-period by subtracting the discharge threshold from a predicted grid power draw;
computing, for each time interval in the prediction time-period, a corresponding predicted energy differential based on the prediction-threshold difference; and
computing, for each time interval in the prediction time-period, a corresponding intermediate predicted storage level based on a difference between a previous intermediate predicted storage level and the corresponding predicted energy differential.

Clause 103: The system of clause 102, wherein reducing the discharge threshold is further responsive to determining that a maximum of the prediction-threshold difference is smaller than a maximum discharge power of the energy storage device.

Clause 104: The system any one of clauses 102-103, wherein computing the prediction-threshold difference further comprising at least one of:

subtracting, from the predicted grid power draw, a load consumption prediction corresponding to a load to be turned off; and
subtracting, from the predicted grid power draw, a power source generation prediction corresponding to the power predicted to be generated by a power source.

Clause 105: The system of clause 104, wherein the power source is one or more of:

one of more photovoltaic modules; and
a power generator.

Clause 106: The system of any one of clauses 101-105, wherein the power system controller is configured to determine the power draw rating using an energy storage control model,
wherein the energy storage control model comprises trend detection.

Clause 107: The system of clause 106, wherein the energy storage control model comprises one or more of:

a proportional, integral and derivative (PID) controller;
a Kalman filter; or
an autoregressive integrated moving average (ARIMA) model.

Clause 108: The system of any one of clauses 101-107, wherein the power system controller is coupled to a power grid, a power source, and to one or more loads, and wherein the power system controller comprises:

a power converter configured to convert power from the power source to Alternating Current (AC) power;
a communications interface;
a user interface;
a controller; and
the sensor.

Clause 109: The system of clause 108, wherein the discharge threshold is an initial discharge threshold, and wherein the power system controller is configured to receive the initial discharge threshold via one of:

the communications interface; or
the user interface.

Clause 110: The system of any one of clauses 101-109, wherein the discharge threshold is an initial discharge threshold, and
wherein the power system controller determines the initial discharge threshold based on a previously determined discharge threshold.

Clause 111: The system of any one of clauses 101-110, wherein the power system controller is configured to increase the discharge threshold responsive to determining the power draw rating is larger than the discharge threshold.

Clause 112: The system of clause 111, wherein the power system controller is configured to increase the discharge threshold further responsive to one of:

determining that a predicted power draw rating for a prediction interval is larger than the discharge threshold;
determining that a sum of the power draw rating and a maximum charging power of the energy storage device is larger than the discharge threshold; and

determining that a storage level of the energy storage device is lower than a minimum energy threshold.

Clause 113: The system of any one of clauses 101-112, wherein the power system controller is further configured to:

determine, based on a predicted grid power draw, a predicted power draw rating for a prediction interval; and reduce the discharge threshold responsive to determining that the predicted power draw rating is smaller than the discharge threshold.

Clause 114: The system of clause 113, wherein the power system controller is configured to determine the predicted power draw rating using an energy storage control model,
wherein the energy storage control model comprises trend detection.

Clause 115: A system comprising:

an energy storage device;
a storage interface configured to charge and discharge the energy storage device;
a sensor configured to measure grid power draw to produce grid power draw measurements;
a power system controller coupled to the storage interface and to the sensor, wherein the power system controller is configured to:

determine, based on the grid power draw measurements for a measurement interval, a power draw rating;
determine based on a predicted grid power draw, a predicted power draw rating for a prediction interval; and
reduce a discharge threshold responsive to:

determining that the power draw rating is smaller than the discharge threshold; and
determining that the predicted power draw rating is smaller than the discharge threshold.

Clause 116: The system of clause 115, wherein the power system controller is configured to determine the power draw rating and the predicted power draw rating using an energy storage control model,
wherein the energy storage control model comprises trend detection.

Clause 117: The system of clause 116, wherein the energy storage control model comprises one or more of:

a proportional, integral and derivative (PID) controller;
a Kalman filter; or
an autoregressive integrated moving average (ARIMA) model.

Clause 118: The system of any one of clauses 115-117, wherein the power system controller is further configured to reduce a discharge threshold responsive to:

determining the power draw rating is smaller than the discharge threshold; and
determining a plurality of intermediate predicted storage levels of the energy storage device is above a minimum energy level threshold of the energy storage device, wherein the plurality of intermediate predicted storage levels correspond to a plurality of time intervals in a prediction time-period.

Clause 119: A system comprising:

an energy storage device;
a storage interface configured to charge and discharge the energy storage device;
a sensor configured to measure grid power draw and produce grid power draw measurements;
a power system controller coupled to the storage interface and to the sensor, wherein the power system controller is configured to:

determine, based on the grid power draw measurements and using an energy storage control model, a power draw rating, wherein the energy storage control model comprises trend detection; and
control the storage interface to discharge the energy storage device responsive to the power draw rating exceeding a discharge threshold.

Clause 120: The system of clause 119, wherein the power system controller is configured to determine the power draw rating based on an energy storage control model.

Clause 121: The system of clause 120, wherein the energy storage control model comprises one or more of:

a proportional, integral and derivative (PID) controller;
a Kalman filter; or
an autoregressive integrated moving average (ARIMA) model.

Clause 122: The system of any one of clauses 119-121, wherein the power system controller is further configured to modifying the discharge threshold.

Clause 123: The system of clause 122, wherein the power system controller is configured to modifying the discharge threshold by reducing the discharge threshold responsive to:

determining that the power draw rating is smaller than the discharge threshold; and
determining that a plurality of intermediate predicted storage levels of the energy storage device is above a minimum energy level threshold of the energy storage device, wherein the plurality of intermediate predicted storage levels correspond to a plurality of time intervals in a prediction time-period.

Clause 124: The system of clause 123, wherein the power system controller is configured to modify the discharge threshold by:

determining, based on a predicted grid power draw, a predicted power draw rating for a prediction interval, and
reducing the discharge threshold responsive to determining that the predicted power draw rating is smaller than the discharge threshold.

Clause 125: The system of any one of clauses 122-124, wherein the power system controller is configured to modify the discharge threshold by increasing the discharge threshold responsive to determining that the power draw rating is larger than the discharge threshold.

Clause 126: The system of clause 125, wherein the power system controller is further configured to modify the discharge threshold by increasing the discharge threshold further responsive to one of:

determining that a predicted power draw for a prediction interval rating is larger than the discharge threshold;
determining that a sum of the power draw rating and a maximum charging power of the energy storage device is larger than the discharge threshold; and
determining that a storage level of the energy storage device is lower than a minimum energy threshold.

Clause 127: A system comprising:

an energy storage device;
a sensor configured to measure grid power draw to produce grid power draw measurements;
a power system controller coupled to the energy storage device and to the sensor, wherein the power system controller is configured to:

determine, based on the grid power draw measurements, a power draw rating;
compare the power draw rating to a discharge threshold;
determine a plurality of intermediate predicted storage levels, wherein the plurality of intermediate predicted storage levels correspond to a plurality of time intervals in a prediction time-period;
if the power draw rating is larger than the discharge threshold:
increase the discharge threshold; or
if the power draw rating is smaller than the discharge threshold, and the plurality of intermediate predicted storage levels are above a minimum energy level threshold of a storage device:
reduce the discharge threshold.

Clause 128: A method comprising:

measuring, by a sensor, grid power draw to produce grid power draw measurements;
determining, by a power system controller, based on the grid power draw measurements for a measurement interval, a power draw rating;
determining, by the power system controller, a plurality of intermediate predicted storage levels of an energy storage device, wherein the plurality of intermediate predicted storage levels correspond to a plurality of time intervals in a prediction time-period;
reducing, by the power system controller, a discharge threshold responsive to:

determining the power draw rating is smaller than the discharge threshold; and
determining the plurality of intermediate predicted storage levels of the energy storage device is above a minimum energy level threshold of the energy storage device.

Clause 129: The method of clause 128, wherein determining a plurality of intermediate predicted storage levels comprises:

computing a prediction-threshold difference for the prediction time-period by subtracting the discharge threshold from a predicted grid power draw;
computing, for each time interval in the prediction time-period, a corresponding predicted energy differential based on a difference between the predicted grid power draw and the discharge threshold; and
computing, for each time interval in the prediction time-period, a corresponding intermediate predicted storage level based on a difference between a previous intermediate predicted storage level and the corresponding predicted energy differential.

Clause 130: The method of clause 129, wherein reducing the discharge threshold is further responsive to determining that a maximum of the prediction-threshold difference is smaller than a maximum discharge power of the energy storage device.

Clause 131: The method of any one of clauses 129-130, wherein computing the prediction-threshold difference further comprising at least one of:

subtracting, from the predicted grid power draw, a load consumption prediction corresponding to a load to be turned off; and
subtracting, from the predicted grid power draw, a power source generation prediction corresponding to the power predicted to be generated by a power source.

Clause 132: The method of clause 131, wherein the power source is one or more of:

one of more photovoltaic modules; and
a power generator.

Clause 133: The method of any one of clauses 128-132, wherein the determining the power draw rating comprises using an energy storage control model,
wherein the energy storage control model comprises trend detection.

Clause 134: The method of clause 133, wherein the energy storage control model comprises one or more of:

a proportional, integral and derivative (PID) controller;
a Kalman filter; or
an autoregressive integrated moving average (ARIMA) model.

Clause 135: The method of any one of clauses 128-134, wherein reducing the discharge threshold is responsive to:

determining based on a predicted grid power draw for a prediction interval, a predicted power draw rating for a prediction interval; and
determining that the predicted power draw rating is smaller than the discharge threshold.

Clause 136: The method of clause 135, wherein determining based on a predicted grid power draw comprises using an energy storage control model,

wherein the energy storage control model comprises trend detection.

Clause 137: A method comprising:

measuring, by a sensor, grid power draw to produce grid power draw measurements;
determining, by a power system controller, based on the grid power draw measurements for a measurement interval, a power draw rating;
determining, by the power system controller, based on the grid power draw measurements, and using an energy storage control model, wherein the energy storage control model comprises trend detection; and
controlling, by the power system controller, a storage interface to discharge an energy storage device, responsive to the power draw rating exceeding a discharge threshold.

Clause 138: The method of clause 137, wherein the energy storage control model comprises one or more of:

a proportional, integral and derivative (PID) controller;
a Kalman filter; or
an autoregressive integrated moving average (ARIMA) model.

Clause 139: The method of any one of clauses 137-138, further comprising modifying the discharge threshold.

Clause 140: The method of clause 139, wherein modifying the discharge threshold comprises reducing the discharge threshold responsive to:

determining that the power draw rating is smaller than the discharge threshold; and
determining that a plurality of intermediate predicted storage levels of the energy storage device is above a minimum energy level threshold of the energy storage device, wherein the plurality of intermediate predicted storage levels correspond to a plurality of time intervals in a prediction time-period.

Clause 141: The method of clause 140, wherein modifying the discharge threshold comprises:

determining, based on a predicted grid power draw, a predicted power draw rating for a prediction interval, and reducing the discharge threshold responsive to determining that the predicted power draw rating is smaller than the discharge threshold.

Clause 142: The method of any one of clauses 139-141, wherein modifying the discharge threshold comprises increasing the discharge threshold responsive to determining that the power draw rating is larger than the discharge threshold.

Clause 143: The method of clause 142, wherein modifying the discharge threshold by increasing the discharge threshold is further responsive to one of:

determining that a predicted power draw rating for a prediction interval is larger than the discharge threshold;
determining that a sum of the power draw rating and a maximum charging power of the energy storage device is larger than the discharge threshold; and
determining that a storage level of the energy storage device is lower than a minimum energy threshold.

Clause 144: A method comprising:

producing, by a server, based on a timestep in a prediction time-period and based on one or more power system constraints and parameters, values for one or more storage mode variables;
determining, by the server and based on the values, a storage operational mode of a plurality of storage operational modes of a power system,
wherein the storage operational mode optimizes an objective function, and
wherein the storage operational mode is associated with a corresponding amount of energy to be altered, during the timestep, by the power system, in one or more energy storage devices; and
providing, by the server, the storage operational mode to a controller of the power system.

Clause 145: A method comprising:

receiving, by a power system controller, based on a timestep in a prediction time-period, and from a server, a storage operational mode of a plurality of storage operational modes;

determining for the timestep, and based on the storage operational mode, an amount of energy corresponding to the storage operational mode; and

altering, by the power system controller, energy in an energy storage device based on the determined amount of energy.

Clause 146: A system comprising:

a power system comprising:

an energy storage device;
a power source; and
power system controller comprising:

a power converter configured to convert power to a load, from one or more of the power source and the energy storage device;
a communications interface configured to receive from a server a storage operational mode from a plurality of storage operational modes;
a controller configured to:

determine for the timestep, and based on the storage operational mode, an amount of energy corresponding to the storage operational mode; and
alter energy of the energy storage device based on the determined amount of energy; and

the server comprising:

one or more processors; and
memory storing executable instructions that, when executed by the one or more processors, configure the server to:

produce, based on the timestep and based on one or more power system constraints and parameters, values for one or more storage mode variables;
determine, based on the values, the storage operational mode, and

provide, to the power system, the storage operational mode.

**Claims**

1. A method comprising:

producing, by a server, based on a timestep in a prediction time-period and based on one or more power system constraints and parameters, values for one or more storage mode variables;
determining, by the server and based on the values, a storage operational mode of a plurality of storage operational modes of a power system,
wherein the storage operational mode optimizes an objective function, and
wherein the storage operational mode is associated with a corresponding amount of energy to be altered, during the timestep, by the power system, in one or more energy storage devices; and
providing, by the server, the storage operational mode to a controller of the power system.

2. The method of claim 1, wherein the storage operational mode comprises a charge mode and a discharge mode,

wherein each charge mode defines an energy charge value of the corresponding amount of energy to be charged to the one or more energy storage devices,
wherein each discharge mode defines an energy discharge value of the corresponding amount of energy to be discharged from the one or more energy storage devices, and
wherein one of the energy charge value or the energy discharge value is substantially zero.

3. The method of any one of claims 1-2, wherein the plurality of storage operational modes comprise:

   a first storage operational mode for charging or discharging the one or more energy storage devices based on maximum self consumption;
   a second storage operational mode for charging or discharging the one or more energy storage devices based on minimizing import from a grid;
   a third storage operational mode for charging or discharging the one or more energy storage devices based on maximizing export to the grid;
   a fourth storage operational mode for charging or discharging the one or more energy storage devices based on charging excess energy from a power source;
   a fifth storage operational mode for charging or discharging the one or more energy storage devices based on charging from the power source;
   a sixth storage operational mode for charging or discharging the one or more energy storage devices based on charging from the power source or from the grid; and
   a seventh storage operational mode for charging or discharging the one or more energy storage devices comprising disabling the charging and discharging of the one or more energy storage devices.

4. The method of claim 3, wherein each storage mode of the plurality of storage operational modes is defined by a corresponding charge mode of a plurality of charge modes, and a corresponding discharge mode of a plurality of discharge modes,

   wherein the plurality of charge modes comprise:

   charge excess PV;
   charge after self consumption;
   charge maximum PV;
   charge from PV and grid; and
   charge disable,

   wherein the plurality of discharge modes comprise:

   discharge for self consumption;
   discharge maximum possible; and
   discharge disable.

5. The method of any one of claims 1-4, wherein the objective function comprises a sum of costs of charging and discharging the one or more energy storage devices, wherein each cost in the sum of costs corresponds to a timestep in a plurality of timesteps in the prediction time-period.

6. The method of claim 5, wherein the objective function comprises:

$$Cost\ for\ t_0 = \sum_{t=0}^{T} \sum_{s=1}^{S} (import\_price_t * \boldsymbol{import_t} - export_{price_t} * \boldsymbol{export_t} +$$

$$charge\_cost * \boldsymbol{charge_t} + discharge\_cost * \boldsymbol{discharge_t}) * P(s).$$

7. The method of any one of claims 1-6, wherein the power system constraints, parameters and variables comprise constraints and variables relating to peak demand charge,

   wherein the obj ective function further comprises a cost for exceeding peak demand, and
   wherein the determining further comprises, using the optimization process, values for the variables related to peak demand charge.

8. The method of any one of claims 1-7, wherein the power system constraint and parameters further comprise constraints and parameters related to load devices,

   wherein the power system variables further comprise one or more load device operational mode variables,
   wherein the objective function further comprises a term relating to a cost gain obtained from charging the load device above a target.

wherein, the determining by the server further comprises determining, using the optimization process, and employing the power system constraints and parameters, values for the one or more load device operational mode variables,

wherein the values of the one or more load device operational mode variables define a load device operational mode, and

wherein the providing by the server, further comprises providing, to the power system controller, the defined load device operational mode, for charging energy to the load device.

wherein the load devices are one or more of:

at least one electrical vehicle;
at least one water heater;
at least one refrigerator; and
at least one air conditioner.

9. A method comprising:

receiving, by a power system controller, based on a timestep in a prediction time-period, and from a server, a storage operational mode of a plurality of storage operational modes;

determining for the timestep, and based on the storage operational mode, an amount of energy corresponding to the storage operational mode; and

altering, by the power system controller, energy in an energy storage device based on the determined amount of energy.

10. The method of claim 9, wherein the storage operational mode comprises a charge mode and a discharge mode,

wherein each charge mode defines an energy charge value of the amount of energy corresponding to the storage operational mode to be charged to the energy storage device,

wherein each discharge mode defines an energy discharge value of the amount of energy corresponding to the storage operational mode to be discharged from the energy storage device, and

wherein the altering of the energy of the energy storage device further comprises:

charging the energy storage by an energy amount corresponding to the energy charge value based on the energy charge value being larger than zero and the energy discharge value being equal to zero; and

discharging the energy storage by an energy amount corresponding to the energy discharge value based on the energy discharge value being larger than zero and the energy discharge value being equal to zero.

11. The method of any one of claims 9-10, wherein each storage mode of the plurality of storage operational modes is defined by a corresponding charge mode of a plurality of charge modes, and a corresponding discharge mode of a plurality of discharge modes,

wherein the plurality of charge modes comprise:

charge excess PV;
charge after self consumption;
charge maximum PV;
charge from PV and grid; and
charge disable,

wherein the plurality of discharge modes comprise:

discharge for self consumption;
discharge maximum possible; and
discharge disable.

12. The method of any one of claims 9-11, wherein the plurality of storage operational modes comprise:

a first storage operational mode for charging or discharging the energy storage device based on maximum self consumption;

a second storage operational mode for charging or discharging the energy storage device based on minimizing import from a grid;

a third storage operational mode for charging or discharging the energy storage device based on maximizing export to the grid;

a fourth storage operational mode for charging or discharging the energy storage device based on charging excess energy from a power source;

a fifth storage operational mode for charging or discharging the energy storage device based on charging from the power source;

a sixth storage operational mode for charging or discharging the energy storage device based on charging from the power source or from the grid; and

a seventh storage operational mode for charging or discharging the energy storage device comprising disabling the charging and discharging of the energy storage device.

13. The method of claim 12, wherein, based on the received storage operational mode corresponding to the second storage operational mode or the third storage operational modes, the altering of the energy of the energy storage device comprises:

based on the energy production prediction being larger than a maximum controller output:

determining an amount of energy to charge the energy storage device; and
charging the energy storage device by the determined amount of energy; and
based on the energy production prediction being larger than a maximum controller output:

determining an amount of energy to discharge from the energy storage device; and
discharging the energy storage device by the determined amount of energy.
wherein, based on the received storage operational mode corresponding to the first operational modes, the altering or the energy in the energy storage device comprises:

based on energy production prediction being larger than one of:

the maximum controller output; or
the energy consumption prediction:

determining an amount of energy to charge the energy storage device; and
charging the energy storage device by the determined amount of energy; and

based on energy production prediction being smaller than the maximum controller output, and smaller than the energy consumption prediction:

determining an amount of energy to discharge from the energy storage device; and
discharging the energy storage device by the determined amount of energy.

wherein, based on the received storage operational mode corresponding to the fourth fifth or sixth storage operational modes, the altering comprises:

determining an amount of energy to charge the energy storage device; and
charging the energy storage device by the determined amount of energy.

14. The method of any one of claims 9-13, wherein the receiving by the power system controller further comprises receiving, from the server, a load device operational mode from a plurality of load device operational modes,

wherein the load devices are one or more of:

at least one electrical vehicle;
at least one water heater;
at least one refrigerator; and
at least one air conditioner, and

wherein the load device operational modes comprise:

a first load device operational mode comprising disabling load device charging;
a second load device operational mode comprising charging the load device from the power source;
a third load device operational mode comprising charging the load device from the power source and from the energy storage; and
a fourth load device operational mode comprising charging the load device with an exact amount of energy.

15. A system comprising:

a power system comprising:

an energy storage device;
a power source; and
power system controller comprising:

a power converter configured to convert power to a load, from one or more of the power source and the energy storage device;
a communications interface configured to receive from a server a storage operational mode from a plurality of storage operational modes;
a controller configured to:

determine for the timestep, and based on the storage operational mode, an amount of energy corresponding to the storage operational mode; and
alter energy of the energy storage device based on the determined

amount of energy; and

the server comprising:

one or more processors; and
memory storing executable instructions that, when executed by the one or more processors, configure the server to:

produce, based on the timestep and based on one or more power system constraints and parameters, values for one or more storage mode variables;
determine, based on the values, the storage operational mode, and
provide, to the power system, the storage operational mode.

Fig. 1A

Fig. 1B

Fig. 1C

Fig. 2

| CHARGE MODE VARIABLES / DISCHARGE MODE VARIABLES | CHARGE EXCESS PV | CHARGE AFTER SELF CONSUMPTION | CHARGE MAXIMUM PV | CHARGE FROM PV & GRID | CHARGE DISABLE |
|---|---|---|---|---|---|
| DISCHARGE FOR SELF CONSUMPTION | MINIMIZE IMPORT | MAXIMUM SELF CONSUMPTION | Equation 18 | Equation 19 | |
| DISCHARGE MAXIMUM POSSIBLE | MAXIMIZE EXPORT | Equation 17 | Equation 18 | Equation 19 | |
| DISCHARGE DISABLE | CHARGE EXCESS PV | Equation 17 | CHARGE PV | CHARGE FROM PV & GRID | DISABLE |

Table 1

## Fig. 3

EP 4 542 479 A2

------ POWER PRODUCTION PREDICTION

— · — · POWER CONSUMPTION PREDICTION

POWER

400

402

t0 t1 t2

● ● ●

## Fig. 4A

IMPORT
RATES

404

## Fig. 4B

EXPORT
RATES

406

## Fig. 4C

Fig. 5A

Fig. 5B

DETERMINE A FRAMEWORK FOR AN OPTIMIZATION PROCESS

↘ 600

DETERMINE, FOR A PREDICTION TIME-PERIOD, A POWER PRODUCTION PREDICTION, A POWER CONSUMPTION PREDICTION, AND A MAXIMUM SYSTEM CONTROLLER OUTPUT POWER

↘ 602

DETERMINE FOR A TIMESTEP IN A PREDICTION TIME-PERIOD, AND BASED ON THE POWER SYSTEM CONSTRAINT AND PARAMETERS, AND USING THE OPTIMIZATION PROCESS, VALUES FOR POWER SYSTEM VARIABLES WHICH OPTIMIZE THE OBJECTIVE FUNCTION, WHERE THE VALUES OF STORAGE MODE VARIABLES CORRESPOND TO A STORAGE OPERATIONAL MODE OPTIMIZING THE OBJECTIVE FUNCTION

↘ 604

1st TIER
2nd TIER

CONTROL, BASED ON THE STORAGE OPERATIONAL MODE, THE ENERGY STORAGE DEVICE TO CHARGE OR DISCHARGE ENERGY

↘ 606

## Fig. 6A

DEFINE A PLURALITY OF STORAGE OPERATIONAL MODES FOR CONTROLLING AN ENERGY STORAGE, EACH STORAGE OPERATIONAL MODE OF THE PLURALITY OF STORAGE MODES DEFINES A CORRESPONDING CHARGING AND DISCHARGING CHARACTERISTICS OF THE ENERGY STORAGE DEVICE

↘ 620

DEFINE POWER SYSTEM VARIABLES, CONSTRAINTS AND PARAMETERS, THE POWER SYSTEM VARIABLES COMPRISE ONE OR MORE STORAGE MODE VARIABLES CORRESPONDING TO THE PLURALITY OF STORAGE OPERATIONAL MODES

↘ 622

DETERMINE AN OBJECTIVE FUNCTION FOR OPTIMIZATION

↘ 624

## Fig. 6B

EP 4 542 479 A2

```
┌─────────────────────────────────────────────────────────────────────────────────┐
│              RECEIVE A DETERMINED STORAGE OPERATION MODE                           │
└─────────────────────────────────────────────────────────────────────────────────┘
                                                                              700

┌─────────────────────────────────────────────────────────────────────────────────┐
│ DETERMINE, FOR A TIME-STEP IN THE PREDICTION TIME-PERIOD, A MAXIMUM INVERTER       │
│ ENERGY OUTPUT FROM THE MAXIMUM INVERTER OUTPUT POWER, AN PV ENERGY PREDICTION      │
│ FROM THE POWER PRODUCTION PREDICTION, AND AN ENERGY CONSUMPTION PREDICTION FROM    │
│ THE POWER CONSUMPTION PREDICTION                                                   │
└─────────────────────────────────────────────────────────────────────────────────┘
                                                                              701

┌─────────────────────────────────────────────────────────────────────────────────┐
│ DETERMINE FOR THE TIME STEP, AND BASED ON THE DETERMINED STORAGE OPERATIONAL       │
│ MODE, USING THE MAXIMUM INVERTER ENERGY OUTPUT, THE PV ENERGY PREDICTION, AND ON   │
│ THE ENERGY CONSUMPTION PREDICTION, AND STORAGE DEVICE PARAMETERS, AN ENERGY        │
│ CHARGE VALUE AND AN ENERGY DISCHARGED VALUE                                        │
└─────────────────────────────────────────────────────────────────────────────────┘
                                                                              702
```

ENERGY CHARGE VALUE > 0 AND ENERGY DISCHARGE VALUE =0 — 704

YES

CHARGE THE ENERGY STORAGE DEVICE BY AN ENERGY AMOUNT CORRESPONDING TO THE ENERGY CHARGE VALUE — 706

NO

ENERGY DISCHARGE VALUE > 0 AND ENERGY CHARGE VALUE =0 — 708

YES

NO

DISCHARGE THE ENERGY STORAGE DEVICE BY AN ENERGY AMOUNT CORRESPONDING TO THE ENERGY DISCHARGE VALUE — 710

## Fig. 7A

EP 4 542 479 A2

DETERMINE, FOR A TIME-STEP IN THE PREDICTION TIME-PERIOD, A MAXIMUM INVERTER ENERGY OUTPUT FROM THE MAXIMUM INVERTER OUTPUT POWER, A PV ENERGY PREDICTION FROM THE POWER PRODUCTION PREDICTION

720

YES    PV ENERGY PREDICTION > MAX INVERTER ENERGY OUTPUT?    NO

722

DETERMINE AN AMOUNT OF ENERGY TO CHARGE

724

CHARGE THE ENERGY STORAGE DEVICE

726

DETERMINE AN AMOUNT OF ENERGY TO DISCHARGE

728

DISCHARGE THE ENERGY STORAGE DEVICE

730

Fig. 7B

DETERMINE, FOR A TIME-STEP IN THE PREDICTION TIME-PERIOD, A MAXIMUM INVERTER ENERGY OUTPUT FROM THE MAXIMUM INVERTER OUTPUT POWER, A PV ENERGY PREDICTION FROM THE POWER PRODUCTION PREDICTION, AND AN ENERGY CONSUMPTION PREDICTION FROM THE POWER CONSUMPTION PREDICTION

740

PV ENERGY PREDICTION > MAX INVERTER OUT?

742

NO

YES

PV ENERGY PREDICTION > ENERGY CONSUMPTION PREDICTION?

744

NO

YES

DETERMINE THE AMOUNT OF ENERGY TO DISCHARGE

746

DISCHARGE THE ENERGY STORAGE DEVICE

748

DETERMINE THE AMOUNT OF ENERGY TO CHARGE

750

CHARGE THE ENERGY STORAGE DEVICE

752

Fig. 7C

SCENARIO #1, PROBABILITY Ps1

Fig. 8A

SCENARIO #2, PROBABILITY Ps2

Fig. 8B

SCENARIO #3, PROBABILITY Ps3

Fig. 8C

Fig. 9

EP 4 542 479 A2

| I/O PORTS AND TERMINALS | MEMORY |
|---|---|

140

142

ENERGY STORAGE CONTROL
MODULE

1242

THRESHOLD UPDATE
MODULE

1244

MICROCONTRLLER

1236

CONTROLLER

110

Fig. 10A

Fig. 10B

Fig. 10C

Fig. 10D

EP 4 542 479 A2

EP 4 542 479 A2

CONSUMPTION
— 1260

GRID POWER DRAW
MEASUREMENTS
— 1250

ENERGY STORAGE
CONTROL MODULE
— 1242

PREDICTED GRID POWER
DRAW
— 1262

Fig. 10E

CONSUMPTION
— 1260

GRID POWER DRAW
MEASUREMENTS
— 1250

ENERGY STORAGE
CONTROL MODUE
— 1242

GRID POWER DRAW
DERIVATIVE
— 1264

Fig. 10F

70

Fig. 11A

Fig. 11B

EP 4 542 479 A2

DETERMINE A MAXIMUM CHARGE AND A MAXIMUM DISCHARGE POWER OF THE ENERGY STORAGE DEVICE, PREDICTED GRID POWER DRAW AND AN INITIAL DISCHARGE THRESHOLD
— 1310

MEASURE GRID POWER DRAWN LEVELS FROM A POWER GRID, POWER CONSUMPTION BY A LOAD, AND POWER PRODUCED BY A POWER SOURCE
— 1312

DETERMINE, USING AN ENERGY STORAGE CONTROL MODEL, AND THE GRID POWER DRAW MEASUREMENTS, A POWER DRAW RATING
— 1314

EVALUATE THE DISCHARGE THRESHOLD
— 1316

DISCHARGE ENERGY STORAGE ← YES — POWER DRAW RATING> DISCHARGE THRESHOLD
1320
1318
NO

NO ← CHARGING POSSIBLE?
1322
YES

CHARGE FROM POWER SOURCE ← YES — EXCESS POWER AVAILABLE FROM THE POWER SOURCE?
1326
1324
NO

CHARGE FROM POWER GRID — 1328

Fig. 11C

POWER DRAW RATING > DISCHARGE THRESHOLD ? — YES

1330

NO

PREDICTED POWER DRAW RATING< DISCHARGE THRESHOLD? — YES

1332

NO

POWER CONSUMPTION + MAX. CHARGE POWER > DISCHARGE THRESHOLD? — YES

1334

NO

STORAGE LEVEL< MINIMUM ENERGY LEVEL THRESHOLD — YES

1336

NO

PREDICTED STORAGE LEVEL SUFFICIENT FOR PREDICTED GRID POWER DRAW? — YES / NO

1338

DECREASE THE DISCHARGE THRESHOLD

1340

INCREASE THE DISCHARGE THRESHOLD

1342

Fig. 11D

COMPUTE A PREDICTION-THRESHOLD DIFFERENCE FOR A TIME PERIOD

1360

MAXIMUM DIFFERENCE <
ENERGY STORAGE MAX. DISCHARGE POWER?

NO

1362

YES

FOR EACH TIME INTERVAL IN THE TIME PERIOD, COMPUTE A PREDICTED ENERGY DIFFERENTIAL BASED ON THE PREDICTION-THRESHOLD DIFFERENCE

1364

FOR EACH TIME INTERVAL IN THE TIME PERIOD, COMPUTE A CORRESPONDING INTERMEDIATE PREDICTED STORAGE LEVEL OF THE ENERGY STORAGE BASED ON A PREVIOUS PREDICTED INTERMEDIATE STORAGE LEVEL CORRESPONDING TO A PREVIOUS TIME INTERVAL AND THE ENERGY DIFFERENTIAL CORRESPONDING TO THE TIME INTERVAL

1366

NO
ONE OR MORE OF THE PREDICTED INTERMEDIATE STORAGE LEVELS < MINIMUM ENERGY LEVEL THRESHOLD?

1368

YES

PREDICTED STORAGE LEVEL IS INSUFFICIENT FOR PREDICTED GRID POWER DRAW

1370

PREDICTED STORAGE LEVEL IS SUFFICIENT FOR PREDICTED GRID POWER DRAW

1372

Fig. 11E

Fig. 11F

Fig. 11G

EP 4 542 479 A2

Fig. 11H

EP 4 542 479 A2

PREDICTION-THRESHOLD
DIFFERENCE

1380

TIME

T₀                                                                TP

## Fig. 12A

GENERATOR
POWER

1402

TIME

T₀                          ΔT3                      TP

## Fig. 12B

LOAD
POWER

1404

TIME

T₀                     ΔT4              TP

## Fig. 12C

PREDICTION-THRESHOLD
DIFFERENCE

1406

TP

TIME

T₀

## Fig. 12D

Fig. 13

Fig. 14A

EP 4 542 479 A2

ENERGY STORAGE INTERFACE — 106

ENERGY STORAGE DEVICE — 104

1610

1242

1604

Σ −

PROPORTIONAL

INTEGRAL

DERIVATIVE

ENERGY STORAGE CONTROL MODULE

1606

PREMISES — 118

POWER SYSTEM CONTROLLER — 108

1602

Σ +

DISCHARGE THRESHOLD

METER — 114

POWER GRID — 124

Fig. 14B

**REFERENCES CITED IN THE DESCRIPTION**

**Patent documents cited in the description**

- US 63591812

- US 63660641